# EUROPEAN PATENT SPECIFICATION

(11) **EP 3 407 412 B1**
(45) Date of publication and mention of the grant of the patent: **14.04.2021**
(21) Application number: 18174172.9
(22) Date of filing: 24.05.2018
(51) Int. Cl.: H01M 10/052, H01M 10/0562, C01B 25/14, H01M 10/0525, H01M 2/14, H01M 2/16, H01M 4/36, H01M 10/0566

(54) **IONICALLY CONDUCTIVE COMPOUNDS AND RELATED USES**
IONISCH LEITFÄHIGE VERBINDUNGEN UND VERWANDTE VERWENDUNGEN
COMPOSÉS IONIQUEMENT CONDUCTEUR ET UTILISATIONS ASSOCIÉES

(30) Priority: 24.05.2017 US 201762510439 P
(43) Date of publication of application: 28.11.2018
(73) Proprietor: BASF SE, 67056 Ludwigshafen am Rhein (DE); Sion Power Corporation, Tucson, AZ 85756 (US)
(72) Inventor: Schneider, Holger, 67056 Ludwigshafen am Rhein (DE); Leitner, Klaus, 67056 Ludwigshafen am Rhein (DE); ter Maat, Johan, 67056 Ludwigshafen am Rhein (DE); Hartmann, Pascal, 67056 Ludwigshafen am Rhein (DE); Kulisch, Joern, 67056 Ludwigshafen am Rhein (DE); Safont Sempere, Marina, 67056 Ludwigshafen am Rhein (DE); Du, Hui, Tucson, AZ Arizona 85712 (US); Scordilis-Kelley, Chariclea, Tucson, AZ Arizona 85756 (US); Kelley, Tracy Earl, Tucson, AZ Arizona 85756 (US)
(74) Representative: Eisenführ Speiser

(56) References cited:
- WO-A1-2016/204255
- JP-A- 2013 137 889
- US-A1- 2017 149 086
- NIEK J. J. DE KLERK ET AL: "Diffusion Mechanism of Li Argyrodite Solid Electrolytes for Li-Ion Batteries and Prediction of Optimized Halogen Doping: The Effect of Li Vacancies, Halogens, and Halogen Disorder", CHEMISTRY OF MATERIALS, vol. 28, no. 21, 21 October 2016 (2016-10-21), pages 7955-7963, XP055508275, ISSN: 0897-4756, DOI: 10.1021/acs.chemmater.6b03630
- DOMINIK FRANK ET AL: "Synthesis and Crystal Structure Determination of Ag 9 FeS 4.1 Te 1.9 , the First Example of an Iron Containing Argyrodite", CHEMISTRY OF MATERIALS, vol. 25, no. 11, 31 May 2013 (2013-05-31), pages 2339-2345, XP055508173, ISSN: 0897-4756, DOI: 10.1021/cm401057u
- SCHNEIDER HOLGER ET AL: "A novel class of halogen-free, super-conductive lithium argyrodites: Synthesis and characterization", JOURNAL OF POWER SOURCES, vol. 366, 5 September 2017 (2017-09-05), pages 151-160, XP085205331, ISSN: 0378-7753, DOI: 10.1016/J.JPOWSOUR.2017.09.012

## Description

### FIELD

lonically conductive compounds, methods for forming compositions comprising such ionically conductive compounds, articles comprising such ionically conductive compounds, and electrochemical cells comprising said articles resp. compounds are provided.

### BACKGROUND

Lithium compound-containing electrochemical cells and batteries including such cells are modern means for storing energy. They exceed certain conventional secondary batteries with respect to capacity and life-time and, in many times, use of toxic materials such as lead can be avoided. However, in contrast to conventional lead-based secondary batteries, various technical problems have not yet been solved.

Secondary batteries based on cathodes including lithiated metal oxides such as LiCoC>₂, LiMn₂O₄, and LiFePO₄ are well established. However, some batteries of this type are limited in capacity. For that reason, numerous attempts have been made to improve the electrode materials. Particularly promising are so-called lithium sulfur batteries. In such batteries, lithium will be oxidized and converted to lithium sulfides such as Li₂S₈₋ₐ, a being a number in the range from zero to 7. During recharging, lithium and sulfur will be regenerated. Such secondary cells have the advantage of a high capacity.

Sulfide materials of different compositions and nature are known to be lithium-ion conductors (e.g., Li₂Sₓ/P₂S₅ glasses, Li₂Sₓ/P₂S₅-derived glass ceramics, Li₇P₃S₁₁, thio-LISICON, oxysulfide glasses). However, such materials may suffer from issues such as low stability against liquid organic electrolyte solutions, insufficient stability against metallic lithium or high voltage cathode materials, extreme sensitivity to moisture and/or air, and/or an intrinsically low ionic conductivity.

Accordingly, improved lithium-ion ionically conductive compounds are needed.

WO 2016/204255 A1/ EP 3 312 847 A1 discloses a method for producing a solid electrolyte, comprising reacting two or more kinds of solid raw materials using a multi-axial kneading machine to give a crystalline solid electrolyte.

NIEK J. J. DE KLERK ET AL: "Diffusion Mechanism of Li Argyrodite Solid Electrolytes for Li-Ion Batteries and Prediction of Optimized Halogen Doping: The Effect of Li Vacancies, Halogens, and Halogen Disorder", CHEMISTRY OF MATERIALS, vol. 28, no. 21, 21 October 2016, pages 7955-7963, discloses the solid electrolytes Li₆PS₅Cl, Li₆PS₅Br, Li₆PS₅I and Li₅PS₄X₂ (X = Cl, Br, or I).

DOMINIK FRANK ET AL: "Synthesis and Crystal Structure Determination of Ag9FeS41Te1.9, the First Example of an Iron Containing Argyrodite", CHEMISTRY OF MATERIALS, vol. 25, no. 11, 31 May 2013, pages 2339-2345, discloses the compound Ag₉FeS_{4.1}Te_{1.9}.

JP 2013 137889 A discloses a sulfide-based solid electrolyte containing a composition of formula: LiPSiS with a structural skeleton of LiPS, where Si is substituted for a portion of P.

### SUMMARY

lonically conductive compounds and methods for forming them, articles comprising such ionically conductive compounds, and electrochemical cells comprising said articles are provided. lonically conductive compounds, methods for forming compositions comprising such ionically conductive compounds, articles comprising such ionically conductive compounds, and electrochemical cells comprising said articles resp. compounds are provided.

The subject matter of the present invention is defined in the appended claims and involves, in some cases, interrelated products alternative solutions to a particular problem, and/or a plurality of different uses of one or more systems and/or articles.

According to a first aspect, there is provided a compound of formula (IA) as defined in the claims.

Said compound of formula (IA) has an argyrodite-type crystal structure. Herein the argyrodite-type crystal structure preferably is the space group F43m.

In the compound of formula (IA) having an argyrodite-type crystal structure, at least a portion of Li and at least a portion of Fe may occupy a Rietveld Refinement lithium lattice site on the crystal structure. Preferably said Rietveld Refinement lithium lattice site is a Rietveld Refinement 48 h lattice site on the crystal structure.

In the compound of formula (IA), X may be absent. In the compound of formula (IA) X, when present, may be a halide selected from the group consisting of Cl, Br and I.

The compound of formula (IA) is typically selected from the group consisting of the compound of formula (I) is selected from the group consisting of Li₁₀FeP₂S₁₂, Li_{12.5}Fe_{0.75}P₂S₁₂, Li_{13.5}Fe_{0.75}P₂S_{12.25}, Li₁₃Fe_{0.5}P₂S₁₂, Li₁₃Fe_{0.75}P₂S_{12.25}, Li₁₃FeP₂S₁₂₅, Li_{14.5}Fe_{0.75}P₂S₁₃, Li₁₄Fe_{0.5}P₂S_{12.5}, Li₁₄Fe_{0.75}P₂S_{12.75}, Li₁₄FeP₂S₁₃, Li₁₅Fe_{0.5}P₂S₁₃, Li₂₂FeP₂S₁₈, Li₁₈FeP₂S₁₆, Li₁₄FeP₂S₁₄, Li₁₂FeP₂S₁₂, Li₁₀FeP₂S₁₂, Li₁₄Fe₂PS₁₃₅, Li₁₃FeP₂S₁₃Cl, Li₁₂FeP₂S₁₂Cl₂, Li₁₁FeP₂S₁₁Cl₃, and Li₁₃FeP₂S₁₃Br.

In the context of formula (IA) as well as of formulae (I) and (II)-(XXV), which are defined in the following detailed description,
"8-22" means "from 8 to 22",
"0.1-3" means "from 0.1 to 3",
"0-3" means "from 0 to 3",
"7-20" mans "from 7 to 20",
"0-8" means "from 0 to 8".

According to a second aspect, there is provided an article for use in an electrochemical cell, comprising a compound of formula (IA) as defined in the claims.

An article as defined above may comprise
- a layer comprising a compound of formula (IA)
   and/or
- a compound of formula (IA) deposited on a layer.

An article as defined above may comprise a plurality of particles comprising a compound of formula (IA). Herein the plurality of particles preferably have an average largest cross-sectional dimension of greater than or equal to 10 nm and less than or equal to 100 µm.

In an article comprising a layer comprising a compound of formula (IA), said layer preferably has one or both of the following features:
- an average ion conductivity of greater than or equal to 10⁻⁵ S/cm
- a thickness of greater than or equal to 0.05 µm and less than or equal to 200 µm.

Herein, at least a portion of the layer comprising a compound of formula (IA) may be crystalline, and/or the compound of formula (IA) may be crystalline (preferably in the form of an argyrodite-type crystal structure as defined above). For instance, the layer comprising a compound of formula (IA) is greater than or equal to 50 wt.% and less than or equal to 99 wt.% crystalline.

In specific cases, an article as defined above comprises a layer comprising a compound of formula (IA) and an electrode, wherein said layer comprising said compound of formula (IA) is in direct contact with said electrode. Herein, the layer comprising a compound of formula (IA) is preferably deposited on
- a lithium ion intercalation electrode
   or
- an electrode comprising a lithium metal layer.

In specific cases, an article as defined above comprises a layer comprising a compound of formula (I) wherein said layer comprising said compound of formula (I) is selected from the group consisting of
- a cathode electroactive material layer
- a protective layer
- a separator
- a solid electrolyte layer.

In specific cases, an article as defined above comprises a layer comprising a compound of formula (IA) wherein said layer comprising said compound of formula (IA) is deposited on a layer selected from the group consisting of
- a protective layer
- a separator
- an electrode, preferably a lithium-intercalation electrode
- a lithium metal layer.

Typical compounds of formula (IA) are selected from the group consisting of Li₁₀FeP₂S₁₂, Li_{l2.5}Fe_{0.75}P₂S₁₂, Li_{13.5}Fe_{0.75}P₂S_{12.25}, Li₁₃Fe_{0.5}P₂S₁₂, Li₁₃Fe_{0.75}P₂S_{12.25}, Li₁₃FeP₂S_{12.5}, Li₁₄₅Fe_{0.75}P₂S₁₃, Li₁₄Fe_{0.5}P₂S_{12.5}, Li₁₄Fe_{0.75}P₂S_{12.75}, Li₁₄FeP₂S₁₃, Li₁₅Fe_{0.5}P₂S₁₃, Li₂₂FeP₂S₁₈, Li₁₈FeP₂S₁₆, Li₁₄FeP₂S₁₄, Li₁₂FeP₂S₁₂, Li₁₀FeP₂S₁₂, Li₁₄Fe₂PS_{13.5}, Li₁₃FeP₂S₁₃Cl, Li₁₂FeP₂S₁₂Cl₂, Li₁₁FeP₂S₁₁Cl₃, and Li₁₃FeP₂S₁₃Br.

According to a third aspect, there is provided an electrochemical cell comprising an article according to the second aspect as defined above or a compound according to the first aspect as defined above, preferably an article or a compound having one or more of the above-defined specific and preferred features.

In specific cases, an electrochemical cell as defined above further comprises a liquid electrolyte. In other cases, said cell comprises a solid electrolyte layer, e.g. a solid electrolyte layer comprising a compound of formula (IA).

In specific cases, an electrochemical cell as defined above comprises an anode comprising lithium metal or silicon.

In specific cases, an electrochemical cell as defined above comprises a cathode comprising sulfur or a lithium ion intercalation species or a compound of formula (IA).

In specific cases, an electrochemical cell as defined above comprises a liquid electrolyte, an anode comprising lithium metal or silicon. In other specific cases, an electrochemical cell as defined above comprises a liquid electrolyte, an anode comprising lithium metal or silicon and a cathode comprising sulfur or a lithium ion intercalation species. In yet other specific cases, an electrochemical cell as defined above comprises a liquid electrolyte, an anode comprising lithium metal or silicon and a cathode comprising a compound of formula (IA).

An electrochemical cell as defined above may comprise a protective layer, e.g. a protective layer comprising a compound of formula (IA) as defined above.

An electrochemical cell as defined above may comprise a separator layer, e.g. a separator layer comprising a compound of formula (IA) as defined above.

According to a fourth aspect, there is provided method for forming a composition, said method comprising:
heating a mixture of precursors comprising atoms of the elements Li, S, P, and Fe, and optionally X, to a temperature ranging from 500°C to 1200°C for a duration ranging from 3 hours to 24 hours;
cooling the mixture; and
forming a composition comprising a compound of formula (IA) as defined in the claims.

The mixture of precursors comprises atoms of the elements Li, S, P, and Fe.

In yet other cases, the mixture of precursors comprises atoms of the elements Li, S, P, Fe, and X.

In a method as defined above, the mixture of precursors preferably comprises at least two of Li₂S, MSₐ, wherein M is Fe, P_{b}S_{c}, and S,
wherein:
a is 0-8;
b is 0-2;
c is 0-8, such that b+c is 1 or greater.

The mixture of precursors may comprise greater than or equal to 20 wt% and less than or equal to 60 wt% Li₂S, or greater than or equal to 27 wt% and less than or equal to 60 wt% Li₂S, versus the total weight of the mixture of precursors.

The mixture of precursors may comprise greater than or equal to 5 wt% and less than or equal to 30 wt% MS, or greater than or equal to 7 wt% and less than or equal to 26 wt% MS, versus the total weight of the mixture of precursors wherein M is Fe.

The mixture of precursors may comprise greater than or equal to 10 wt% and less than or equal to 50 wt% P₂S₅, or greater than or equal to 16 wt% and less than or equal to 40 wt% P₂S₅, versus the total weight of the mixture of precursors.

The mixture of precursors may comprise greater than or equal to 0 wt% and less than or equal to 25 wt% LiX, or greater than or equal to 0 wt% and less than or equal to 20 wt% LiX, versus the total weight of the mixture of precursors.

The mixture of precursors may comprise greater than or equal to 0 wt% and less than or equal to 15 wt%, or greater than or equal to 0 wt% and less than or equal to 10 wt%, excess sulfur versus the total weight of the mixture of precursors.

In a method as defined above, prior to heating, the mixture may be mixed by ball milling.

In a method as defined above, heating the mixture may occur at a pressure of between 0.1 MPa and 0.3 MPa.

In a method as defined above, the compound of formula (IA) may be deposited on a layer. Depositing the compound of formula (IA) on the layer may comprise aerosol deposition or vacuum deposition.

In a preferred method as defined above
- prior to heating, the mixture is mixed by ball milling; and
- heating the mixture occurs at a pressure of between 0.1 MPa and 0.3 MPa, and
- depositing the compound of formula (IA) on the layer comprises aerosol deposition or vacuum deposition.

In specific cases, the layer on which the particles are deposited is selected from the group consisting of
- an electrode, preferably a lithium-intercalation electrode
- a lithium metal layer
- a protective layer
- a separator.

Other advantages and novel features of the present invention will become apparent from the following detailed description of the invention when considered in conjunction with the accompanying figures. In cases where the present specification and a document incorporated by reference include conflicting and/or inconsistent disclosure, the present specification shall control. If two or more documents incorporated by reference include conflicting and/or inconsistent disclosure with respect to each other, then the document having the later effective date shall control.

### DETAILED DESCRIPTION

For the sake of illustration and comparison, the detailed description also discloses compounds which do not fall under formula (IA) as defined in the claims. It is understood that those compounds do not belong to the invention as defined by the claims.

The ionically conductive compounds defined above may be useful for electrochemical cells. A layer comprising the disclosed ionically conductive compounds may be incorporated into an electrochemical cell (e.g., a lithium-sulfur electrochemical cell, a lithium-ion electrochemical cell, an electrochemical cell comprising a lithium ion intercalation cathode) as, for example, a protective layer for an electrode, a solid electrolyte layer, a separator layer and/or any other appropriate component within the electrochemical cell. Articles in the form of electrode structures, and methods for making electrode structures including a layer comprising an ionically conductive compound as described herein are also provided.

The incorporation of an ionically conductive compound as described herein into an electrochemical cell may, for example, increase the stability of an electrode (e.g., a lithium electrode) in the electrochemical cell, increase ionic conductivity, and/or may facilitate fabrication (e.g., formation of thin layers), as compared to certain existing ionically conductive compounds used in electrochemical cells. Advantageously, in some cases, increasing the stability of an electrode also increases the ionic conductivity and/or increases the overall safety of the battery (electrochemical cell). In some cases, the incorporation of an ionically conductive compound as described herein into an electrochemical cell may prevent or reduce the occurrence of chemical reactions between a component of an electrolyte (e.g., polysulfides) and an electroactive material of an anode (e.g., an anode comprising lithium, such as metallic lithium) as compared to electrochemical cells with certain existing ionically conductive compounds and/or compared to electrochemical cells without the ionically conductive compounds described herein.

Layers comprising the ionically conductive compound, as described in more detail herein, may, in some cases, selectively conduct lithium cations but not anions, and may function as a barrier (e.g., protective structure) for electrolytes (especially liquid electrolytes). For example, the use of an ionically conductive compound as disclosed herein in a protective layer (e.g., in a protective layer for an electrochemical cell including a liquid electrolyte) may offer several advantages over certain existing protective layers, including reduction in the consumption of lithium (e.g., lithium metal) during charge/discharge of the electrochemical cell. The protective layer may be used to substantially inhibit direct contact of an electrode (e.g., the anode, the cathode) with an electrolyte and/or with a particular species present in the electrolyte. The use of ionically conductive compounds described herein in solid electrolyte layers (e.g., in solid state electrochemical cells) may offer several advantages over certain existing solid electrolytes including increased ion conductivity and/or increased chemical stability.

The disclosed ionically conductive compounds may be incorporated into electrochemical cells including primary batteries or secondary batteries, which can be charged and discharged numerous times. The articles, compositions, and methods described herein can be used in association with batteries including a liquid electrolyte. However, in other cases, the articles, compositions, and methods described herein can be used in association with solid state batteries.

The articles, compounds, and methods described herein can be used in association with lithium batteries (e.g., lithium-sulfur batteries). It should be appreciated, however, that while much of the description herein relates to lithium-sulfur batteries, the ionically conductive compounds and layers and articles comprising ionically conductive compounds described herein may be applied to other lithium-based batteries, including other alkali metal-based batteries.

The electrochemical cells described herein may be employed in various applications, for example, making or operating cars, computers, personal digital assistants, mobile telephones, watches, camcorders, digital cameras, thermometers, calculators, laptop BIOS, communication equipment or remote car locks.

The stability and/or conductivity of the ionically conductive compound (and/or layers comprising the ionically conductive compound) may be increased by doping the compound with an anion (e.g., a halide, a pseudohalide). Without wishing to be bound by theory, the anion may at least partially substitute an element, such as sulfur, within the compound.

The stability and/or conductivity of the ionically conductive compound (and/or layers comprising the ionically conductive compound) may also be, or alternatively be, increased by the incorporation of one or more cations into the compound. Without wishing to be bound by theory, the cation may at least partially substitute an element such as phosphorous (e.g., by a cation of a metal such as silicon, tin, germanium, zinc, iron, zirconium, aluminum) within the compound.

The inventors have found that the stability and/or conductivity of the ionically conductive compound (and/or of layers comprising the ionically conductive compound) may also be, or alternatively be, increased by partial substitution of lithium ions in the compound by one or more cations of a metal other than lithium such as Na, K, Fe, Mg, Ag, Cu, Zr, Zn, and combinations thereof. For example, the cation of a metal other than lithium may occupy at least one lattice site on a lattice structure of the compound which would otherwise be occupied by a lithium ion if the cation of a metal other than lithium were not present. Without wishing to be bound by theory, the cation of a metal other than lithium (e.g., Na, K, Fe, Mg, Ag, Cu, Zr, Zn) may at least partially substitute lithium ions due to a similarity in structure (e.g., ionic radius) to that of lithium ion. For example, the cation which at least partially substitutes lithium ions in the compound may, in some cases, have an ionic radius that is within 25% (e.g., within 20%, within 15%, within 10%, within 5%) of the ionic radius of lithium ion. For instance, lithium ions in the compound are partially substituted by iron ions.

The ionically conductive compounds described herein may be doped with an anion and/or comprise one or more cations (e.g., at least partially substituting phosphorous and/or at least partially substituting lithium ions), e.g., such that the stability and/or conductivity of the ionically conductive compound is increased (e.g., as compared to an ionically conductive compound otherwise lacking the substituted anion and/or one or more cations).

The ionically conductive compound has a composition as in formula (I):

LiₓM_{y}Q_{w}P_{z}SᵤXₜ (I),

wherein M is selected from the group consisting of Na, K, Fe, Mg, Ag, Cu, Zr, and Zn, wherein Q is absent or is selected from the group consisting of Cr, B, Sn, Ge, Si, Zr, Ta, Nb, V, P, Fe, Ga, Al, As, and combinations thereof, wherein X is absent or is selected from the group consisting of halide and pseudohalide, and wherein x is 8-22, y is 0.1-3, w is 0-3, z is 0.1-3, u is 7-20, t is 0-8. Herein, Q, when present, is different than M.

In the ionically conductive compound having a composition as in formula (I), x is 8-22, for instance 8-16, 8-12, 10-12, 10-14, 12-16, 14-18, 16-20, or 18-22. For instance, x is 8 or greater, 8.5 or greater, 9 or greater, 9.5 or greater, 10 or greater, 10.5 or greater, 11 or greater, 11.5 or greater, 12 or greater, 12.5 or greater, 13 or greater, 13.5 or greater, 14 or greater, 14.5 or greater, 15 or greater, 15.5 or greater, 16 or greater, 16.5 or greater, 17 or greater, 17.5 or greater, 18 or greater, 18.5 or greater, 19 or greater, 19.5 or greater, 20 or greater, 20.5 or greater, 21 or greater, or 21.5 or greater. For instance, x is less than or equal to 22, less than or equal to 21.5, less than or equal to 21, less than or equal to 20.5, less than or equal to 20, less than or equal to 19.5, less than or equal to 19, less than or equal to 18.5, less than or equal to 18, less than or equal to 17.5, less than or equal to 17, less than or equal to 16.5, less than or equal to 16, less than or equal to 15.5, less than or equal to 15, less than or equal to 14.5, less than or equal to 14, less than or equal to 13.5, less than or equal to 13, less than or equal to 12.5, less than or equal to 12, less than or equal to 11.5, less than or equal to 11, less than or equal to 10.5, less than or equal to 10, less than or equal to 9.5, or less than or equal to 9. Combinations of the above referenced ranges are also possible (e.g., greater than or equal to 8 and less than or equal to 22, greater than or equal to 10 and less than or equal to 12). Other ranges are also possible. For example, x is 10. In other examples, x is 11. In other examples, x is 12. In other examples, x is 13. In other examples, x is 14. In other examples, x is 18. In yet other examples, x is 22. Preferably, x is one of 10, 11, 12, 13, 14, 18 and 22.

In the ionically conductive compound having a composition as in formula (I), y is 0.1-3, for instance 0.1-1, 0.1-1.5, 0.1-2, 0.5-3, 0.8-3, 1-3, or 2-3. For instance, y is greater than or equal to 0.1, greater than or equal to 0.2, greater than or equal to 0.25, greater than or equal to 0.4, greater than or equal to 0.5, greater than or equal to 0.6, greater than or equal to 0.75, greater than or equal to 0.8, greater than or equal to 1, greater than or equal to 1.2, greater than or equal to 1.25, greater than or equal to 1.4, greater than or equal to 1.5, greater than or equal to 1.6, greater than or equal to 1.75, greater than or equal to 1.8, greater than or equal to 2.0, greater than or equal to 2.25, greater than or equal to 2.4, greater than or equal to 2.5, greater than or equal to 2.6, greater than or equal to 2.75, or greater than or equal to 2.8. For instance, y is less than or equal to 3.0, less than or equal to 2.8, less than or equal to 2.75, less than or equal to 2.6, less than or equal to 2.5, less than or equal to 2.4, less than or equal to 2.25, less than or equal to 2.2, less than or equal to 2.0, less than or equal to 1.8, less than or equal to 1.75, less than or equal to 1.6, less than or equal to 1.5, less than or equal to 1.4, less than or equal to 1.25, less than or equal to 1.2, less than or equal to 1.0, less than or equal to 0.8, less than or equal to 0.75, less than or equal to 0.6, less than or equal to 0.5, less than or equal to 0.4, less than or equal to 0.25, or less than or equal to 0.2. Combinations of the above-referenced ranges are also possible (e.g., greater than or equal to 0.1 and less than or equal to 3.0, greater than or equal to 1 and less than or equal to 3, greater than or equal to 0.1 and less than or equal to 2.5, greater than or equal to 1.0 and less than or equal to 2.0). Other ranges are also possible. For example, y is 1. In other examples, y is 0.5. In yet other examples, y is 0.75. Preferably, y is one of 0.5, 0.75 and 1.

In the ionically conductive compound having a composition as in formula (I), w is 0-3, for example 0.1-3, 0.1-1, 0.1-1.5, 0.1-2, 0.5-3, 0.8-3, 1-3, or 2-3. For instance, w is greater than or equal to 0, greater than or equal to 0.1, greater than or equal to 0.2, greater than or equal to 0.25, greater than or equal to 0.4, greater than or equal to 0.5, greater than or equal to 0.6, greater than or equal to 0.75, greater than or equal to 0.8, greater than or equal to 1, greater than or equal to 1.2, greater than or equal to 1.25, greater than or equal to 1.4, greater than or equal to 1.5, greater than or equal to 1.6, greater than or equal to 1.75, greater than or equal to 1.8, greater than or equal to 2.0, greater than or equal to 2.25, greater than or equal to 2.4, greater than or equal to 2.5, greater than or equal to 2.6, greater than or equal to 2.75, or greater than or equal to 2.8. For instance, w is less than or equal to 3.0, less than or equal to 2.8, less than or equal to 2.75, less than or equal to 2.6, less than or equal to 2.5, less than or equal to 2.4, less than or equal to 2.25, less than or equal to 2.2, less than or equal to 2.0, less than or equal to 1.8, less than or equal to 1.75, less than or equal to 1.6, less than or equal to 1.5, less than or equal to 1.4, less than or equal to 1.25, less than or equal to 1.2, less than or equal to 1.0, less than or equal to 0.8, less than or equal to 0.75, less than or equal to 0.6, less than or equal to 0.5, less than or equal to 0.4, less than or equal to 0.25, less than or equal to 0.2, or less than or equal to 0.1. Combinations of the above-referenced ranges are also possible (e.g., greater than or equal to 0 and less than or equal to 3, greater than or equal to 0.1 and less than or equal to 3.0, greater than or equal to 1 and less than or equal to 3, greater than or equal to 0.1 and less than or equal to 2.5, greater than or equal to 1.0 and less than or equal to 2.0). Other ranges are also possible. For example, w is 1. In other examples, w is 0.5. In other examples, w is 0.75. In yet other examples, w is 0. Preferably, w is one of 0, 0.5, 0.75 and 1.

In the ionically conductive compound having a composition as in formula (I), z is 0.1-3, for example 0.1-1, 0.1-1.5, 0.1-2, 0.5-3, 0.8-3, 1-3, or 2-3. For instance, z is greater than or equal to 0.1, greater than or equal to 0.2, greater than or equal to 0.25, greater than or equal to 0.4, greater than or equal to 0.5, greater than or equal to 0.6, greater than or equal to 0.75, greater than or equal to 0.8, greater than or equal to 1, greater than or equal to 1.2, greater than or equal to 1.25, greater than or equal to 1.4, greater than or equal to 1.5, greater than or equal to 1.6, greater than or equal to 1.75, greater than or equal to 1.8, greater than or equal to 2.0, greater than or equal to 2.25, greater than or equal to 2.4, greater than or equal to 2.5, greater than or equal to 2.6, greater than or equal to 2.75, or greater than or equal to 2.8. For instance, z is less than or equal to 3.0, less than or equal to 2.8, less than or equal to 2.75, less than or equal to 2.6, less than or equal to 2.5, less than or equal to 2.4, less than or equal to 2.25, less than or equal to 2.2, less than or equal to 2.0, less than or equal to 1.8, less than or equal to 1.75, less than or equal to 1.6, less than or equal to 1.5, less than or equal to 1.4, less than or equal to 1.25, less than or equal to 1.2, less than or equal to 1.0, less than or equal to 0.8, less than or equal to 0.75, less than or equal to 0.6, less than or equal to 0.5, less than or equal to 0.4, less than or equal to 0.25, or less than or equal to 0.2. Combinations of the above-referenced ranges are also possible (e.g., greater than or equal to 0.1 and less than or equal to 3.0, greater than or equal to 1 and less than or equal to 3, greater than or equal to 0.1 and less than or equal to 2.5, greater than or equal to 1.0 and less than or equal to 2.0). Other ranges are also possible. For example, z is 1. In other examples, z is 2. Preferably, z is 1 or 2.

In the ionically conductive compound having a composition as in formula (I), u is 7-20, for example 7-10, 8-14, 10-16, 12-18, or 14-20. For example, u is greater than or equal to 7, greater than or equal to 7.5, greater than or equal to 8, greater than or equal to 8.5, greater than or equal to 9, greater than or equal to 9.5, greater than or equal to 10, greater than or equal to 10.25, greater than or equal to 10.5, greater than or equal to 10.75, greater than or equal to 11, greater than or equal to 11.25, greater than or equal to 11.5, greater than or equal to 11.75, greater than or equal to 12, greater than or equal to 12.25, greater than or equal to 12.5, greater than or equal to 12.75, greater than or equal to 13, greater than or equal to 13.25, greater than or equal to 13.5, greater than or equal to 13.75, greater than or equal to 14, greater than or equal to 14.25, greater than or equal to 14.5, greater than or equal to 14.75, greater than or equal to 15, greater than or equal to 15.25, greater than or equal to 15.5, greater than or equal to 15.75, greater than or equal to 16, greater than or equal to 16.5, greater than or equal to 17, greater than or equal to 17.5, greater than or equal to 18, greater than or equal to 18.5, greater than or equal to 19, or greater than or equal to 19.5. For instance, u is less than or equal to 20, less than or equal to 19.5, less than or equal to 19, less than or equal to 18.5, less than or equal to 18, less than or equal to 17.5, less than or equal to 17, less than or equal to 16.5, less than or equal to 16, less than or equal to 15.75, less than or equal to 15.5, less than or equal to 15.25, less than or equal to 15, less than or equal to 14.75, less than or equal to 14.5, less than or equal to 14.25, less than or equal to 14, less than or equal to 13.75, less than or equal to 13.5, less than or equal to 13.25, less than or equal to 13, less than or equal to 12.75, less than or equal to 12.5, less than or equal to 12.25, less than or equal to 12, less than or equal to 11.75, less than or equal to 11.5, less than or equal to 11.25, less than or equal to 11, less than or equal to 10.75, less than or equal to 10.5, less than or equal to 10.25, less than or equal to 10, less than or equal to 9.5, less than or equal to 9, less than or equal to 8.5, less than or equal to 8, or less than or equal to 7.5. Combinations of the above-referenced ranges are also possible (e.g., greater than or equal to 7 and less than or equal to 20, greater than or equal to 11 and less than or equal to 18). Other ranges are also possible.

In the ionically conductive compound having a composition as in formula (I), t is 0-8, for example 0.1-8, 0.1-1, 0.8-2, 1-3, 1.5-3.5, 2-4, 2.5-5, 3-6, or 4-8. For instance, t is greater than or equal to 0, greater than or equal to 0.1, greater than or equal to 0.2, greater than or equal to 0.4, greater than or equal to 0.5, greater than or equal to 0.6, greater than or equal to 0.8, greater than or equal to 1, greater than or equal to 1.5, greater than or equal to 2, greater than or equal to 2.5, greater than or equal to 3, greater than or equal to 4, greater than or equal to 5, greater than or equal to 6, or greater than or equal to 7. For instance, t is less than or equal to 8, less than or equal to 7, less than or equal to 6, less than or equal to 5, less than or equal to 4, less than or equal to 3, less than or equal to 2.5, less than or equal to 2, less than or equal to 1.5, less than or equal to 1, less than or equal to 0.8, less than or equal to 0.6, less than or equal to 0.5, less than or equal to 0.4, less than or equal to 0.2, or less than or equal to 0.1. Combinations of the above-referenced ranges are also possible (e.g., greater than or equal to 0 and less than or equal to 8, greater than or equal to 0.1 and less than or equal to 8, greater than or equal to 1 and less than or equal to 3). Other ranges are also possible. For example, t is 1. In other examples, t is 2. In yet other examples, t is 3. Preferably, t is one of 1, 2 and 3.

M may be selected from the group consisting of monovalent cations, bivalent cations, trivalent cations, tetravalent cations, and pentavalent cations. Q may be absent, or Q may be present and selected from the group consisting of monovalent cations, bivalent cations, trivalent cations, tetravalent cations, and pentavalent cations.

Non-limiting examples of suitable monovalent cations (for M) include Na, K, Rb, Ag, and Cu. Non-limiting examples of suitable bivalent cations include Ca, Mg, Zn, Cu, and Fe. Non-limiting examples of suitable trivalent cations include Fe, Al, Ga, As, Cr, Mn, and B. Non-limiting examples of suitable tetravalent cations include Mn, Sn, Ge, Zr, and Si. Non-limiting examples of suitable pentavalent cations include Ta, Nb, As, V, and P. Other cations are also possible. In some cases, cations of the same element may have one or another type of valence (e.g. in some cases Ga is trivalent, in other cases Ga is bivalent, in yet other cases, Ga is monovalent). Those of ordinary skill in the art would be capable of determining the one or more valences of a particular atom in the ionically conductive compounds described herein, based upon the teachings of this specification in common with general knowledge in the art.

M is preferably selected from the group consisting of Na, K, Fe, Mg, Ag, Cu, Zr, and Zn. Herein, Q is absent (i.e. w = 0) or Q is present, is different than M, and is selected from the group consisting of Cr, B, Sn, Ge, Si, Zr, Ta, Nb, V, P, Fe, Ga, Al, As, and combinations thereof.

When Q is a combination of two or more atoms (i.e., two or more atoms selected from the group consisting of Cr, B, Sn, Ge, Si, Zr, Ta, Nb, V, P, Fe, Ga, Al, and As), the stoichiometric fraction of each atom in Q is such that the total amount of atoms present in Q is w and is 0.1-3. Each atom may be present in Q in substantially the same amount and the total amount of atoms present in Q is w and within the range 0.1-3. Each atom may be present in Q in different amounts and the total amount of atoms present in Q is w and within the range 0.1-3. For example, each atom in Q may be either silicon or germanium, each present in substantially the same amount, and w is 1 since Q_{w} is Si_{0.5}Ge_{0.5}. In another example, the ionically conductive compound has a composition as in formula (I) and each atom in Q may be either silicon or germanium, each atom present in different amounts such that Qw is Si_{w-p}Geₚ, where p is between 0 and w (e.g., w is 1 and p is 0.25 or 0.75). Other ranges and combinations are also possible. Those skilled in the art would understand that the value and ranges of w may depend on the valences of Q as a combination of two or more atoms, and would be capable of selecting and/or determining w based upon the teachings of this specification. As noted above, when a compound of formula (I) includes more than one atom in Q, the total w is in the range of 0.1-3.

The ionically conductive compound having a composition as in formula (I) may have an argyrodite-type crystal structure. The compound of formula (I) may have a cubic crystal structure. For example, the ionically conductive compound has an argyrodite-type crystal structure in the space group F43m. The crystal structure of the ionically conductive compound may be determined by using x-ray power diffraction (XPRD) crystallography at a wavelength of 1.541 nm using a synchrotron, of particles comprising the compound and characterizing the XPRD patterns using a single-phase Rietveld refinement.

When Q is present, at least a portion of Q and at least a portion of P in the structure each may occupy a tetrahedral coordinated site in the argyrodite-type crystal structure. At least a portion of Q in the compound may occupy a tetrahedral coordinated site in the argyrodite-type crystal structure that would otherwise be occupied by P in the absence of Q. The tetrahedral coordinated site may be on Wyckoff position 4b (e.g., PS₄-tetrahedra and/or QS₄-tetrahedra located at Wyckoff position 4b). In some cases, S²⁻ ions may be on Wyckoff positions 4a and/or 4c.

At least a portion of Li and at least a portion of M in the structure each may occupy a Rietveld Refinement lithium lattice site on the crystal structure. At least a portion of M in the compound may occupy a site that would otherwise be occupied by Li in the crystal structure, in the absence of M. For example, at least a portion of Li and/or at least a portion of M occupy a Rietveld Refinement 48 h lattice site on the crystal structure.

In a particular set of compounds of formula (I), M is Fe. For example, the ionically conductive compound has a composition as in formula (IA):

LiₓFe_{y}Q_{w}P_{z}SᵤXₜ (IA),

wherein x is 8-22, y is 0.1-3, w is 0, z is 0.1-3, u is 7-20, t is 0-8, wherein X is absent or selected from the group consisting of halide and pseudohalide, and wherein Q is absent. Compounds of formula (IA) having an argyrodite-type crystal structure are compounds according to the invention as defined in the claims.

X may be a halide. Non-limiting examples of suitable halides include Cl, I, F, and Br. In other cases, X is a pseudohalide. Non-limiting examples of suitable pseudohalides include cyanide, isocyanide, cyanate, isocyanate, and azide. Other pseudohalides are also possible.

In certain compounds of formula (IA) X is absent or is a halide selected from the group consisting of CI, Br and I.

Further specific cases of compounds of formula (I), namely compounds of formulae (II) to (XXV) (not according to the invention) are defined in the following. For the sake of clarity, it is noted that in formulae (II) to (XXV) the variables x and y have a different meaning than in formulae (I) and (IA) as defined above.

In certain specific cases, the ionically conductive compound has a composition as in formula (I), Q is absent, M is a monovalent cation, x is 8-22, y is 0.1-3, w is 0-3, z is 0.1-3, u is 7-20, and t is 0-8. Herein, the ionically conductive compound may have a composition as in formula (II):

Li_{2x-y+2-t}M_{y-z}P₂S_{x+6-0.5z-t}Xₜ (II),

wherein in formula (II) the amount of Li (i.e. x in formula (I)) is 8-22, the amount of M (i.e. y in formula (I)) is 0.1-3, z is 0.1-3, the amount of S (i.e. u in formula (I)) is 7-20, t is 0-8, such that in formula (II) 2x-y+2-t is 8-22, y-z is 0.1-3, and x+6-0.5z-t is 7-20, wherein X is absent or selected from the group consisting of halide and pseudohalide, and wherein M is a monovalent cation. The compound as in formula (II) may have an argyrodite-type crystal structure.

In yet other specific cases, the ionically conductive compound has a composition as in formula (I), M is a monovalent cation, Q is a monovalent cation different from M, x is 8-22, y is 0.1-3, w is 0-3, z is 0.1-3, u is 7-20, and t is 0-8. Herein, the ionically conductive compound may have a composition as in formula (III):

Li_{2x-y+2+4w-t}M_{y-z}Q_{w}P_{2-w}S_{x+6-0.5z-t}Xₜ (111),

wherein in formula (III) the amount of Li (i.e. x in formula (I)) is 8-22, the amount of M (i.e. y in formula (I)) is 0.1-3, w is 0-3, z is 0.1-3, the amount of S (i.e. u in formula (I)) is 7-20, t is 0-8, such that in formula (III) 2x-y+2+4w-t is 8-22, y-z is 0.1-3, 2-w is 0.1-3, and x+6-0.5z-t is 7-20, wherein X is absent or selected from the group consisting of halide and pseudohalide, wherein M is a monovalent cation, and wherein Q is a monovalent cation different from M. The compound as in formula (III) may have an argyrodite-type crystal structure.

In yet other specific cases, the ionically conductive compound has a composition as in formula (I), Q is a bivalent cation, M is a monovalent cation, x is 8-22, y is 0.1-3, w is 0-3, z is 0.1-3, u is 7-20, and t is 0-8. Herein, the ionically conductive compound may have a composition as in formula (IV):

Li_{2x-y+2+3w-t}M_{y-z}Q_{w}P_{2-w}S_{x+6-0.5z-t}Xₜ (IV),

wherein in formula (IV) the amount of Li (i.e. x in formula (I)) is 8-22, the amount of M (i.e. y in formula (I)) is 0.1-3, w is 0-3, z is 0.1-3, the amount of S (i.e. u in formula (I)) is 7-20, t is 0-8, such that in formula (IV) 2x-y+2+3w-t is 8-22, y-z is 0.1-3, 2-w is 0.1-3, and x+6-0.5z-t is 7-20, wherein X is absent or selected from the group consisting of halide and pseudohalide, wherein M is a monovalent cation, and wherein Q is a bivalent cation. The compound as in formula (IV) may have an argyrodite-type crystal structure.

In yet other specific cases, the ionically conductive compound has a composition as in formula (I), M is a monovalent cation, Q is a trivalent cation, x is 8-22, y is 0.1-3, w is 0-3, z is 0.1-3, u is 7-20, and t is 0-8. Herein, the ionically conductive compound may have a composition as in formula (V):

Li_{2x-y+2+2w-t}M_{y-z}Q_{w}P_{2-w}S_{x+6-0.5z-t}Xₜ (V),

wherein in formula (V) the amount of Li (i.e. x in formula (I)) is 8-22, the amount of M (i.e. y in formula (I)) is 0.1-3, w is 0-3, z is 0.1-3, the amount of S (i.e. u in formula (I)) is 7-20, t is 0-8, such that in formula (V) 2x-y+2+2w-t is 8-22, y-z is 0.1-3, 2-w is 0.1-3, and x+6-0.5z-t is 7-20, wherein X is absent or selected from the group consisting of halide and pseudohalide, wherein M is a monovalent cation, and wherein Q is a trivalent cation. The compound as in formula (V) may have an argyrodite-type crystal structure.

In yet other specific cases, the ionically conductive compound has a composition as in formula (I), Q is a tetravalent cation, M is a monovalent cation, x is 8-22, y is 0.1-3, w is 0-3, z is 0.1-3, u is 7-20, and t is 0-8. Herein, the ionically conductive compound may have a composition as in formula (VI):

Li_{2x-y+2+w-t}M_{y-z}Q_{w}P_{2-w}S_{x+6-0.5z-t}Xₜ (VI),

wherein in formula (VI) the amount of Li (i.e. x in formula (I)) is 8-22, the amount of M (i.e. y in formula (I)) is 0.1-3, w is 0-3, z is 0.1-3, the amount of S (i.e. u in formula (I)) is 7-20, t is 0-8, such that in formula (VI) 2x-y+2+w-t is 8-22, y-z is 0.1-3, 2-w is 0.1-3, and x+6-0.5z-t is 7-20, wherein X is absent or selected from the group consisting of halide and pseudohalide, wherein M is a monovalent cation, and wherein Q is a tetravalent cation. The compound as in formula (VI) may have an argyrodite-type crystal structure.

In yet other specific cases, the ionically conductive compound has a composition as in formula (I), M is a monovalent cation, Q is a pentavalent cation, x is 8-22, y is 0.1-3, w is 0-3, z is 0.1-3, u is 7-20, and t is 0-8. Herein, the ionically conductive compound may have a composition as in formula (VII):

Li_{2x-y+2-t}M_{y-z}Q_{w}P_{2-w}S_{x+6-0.5z-t}Xₜ (VII),

wherein in formula (VII) the amount of Li (i.e. x in formula (I)) is 8-22, the amount of M (i.e. y in formula (I)) is 0.1-3, w is 0-3, z is 0.1-3, the amount of S (i.e. u in formula (I)) is 7-20, t is 0-8, such that in formula (VII) 2x-y+2-t is 8-22, y-z is 0.1-3, 2-w is 0.1-3, and x+6-0.5z-t is 7-20, wherein X is absent or selected from the group consisting of halide and pseudohalide, wherein M is a monovalent cation, and wherein Q is a pentavalent cation. The compound as in formula (VII) may have an argyrodite-type crystal structure.

In yet other specific cases, the ionically conductive compound has a composition as in formula (I), Q is absent, M is a bivalent cation, x is 8-22, y is 0.1-3, w is 0-3, z is 0.1-3, u is 7-20, and t is 0-8. Herein, the ionically conductive compound may have a composition as in formula (VIII):

Li_{2x-2y+2-t}M_{y-z}P₂S_{x+6-z-t}Xₜ (VIII),

wherein in formula (VIII) the amount of Li (i.e. x in formula (I)) is 8-22, the amount of M (i.e. y in formula (I)) is 0.1-3, z is 0.1-3, the amount of S (i.e. u in formula (I)) is 7-20, t is 0-8, such that in formula (VIII) 2x-2y+2-t is 8-22, y-z is 0.1-3, and x+6-z-t is 7-20, wherein X is absent or selected from the group consisting of halide and pseudohalide, and wherein M is a bivalent cation. The compound as in formula (VIII) may have an argyrodite-type crystal structure.

In yet other specific cases, the ionically conductive compound has a composition as in formula (I), M is a bivalent cation, Q is a monovalent cation, x is 8-22, y is 0.1-3, w is 0-3, z is 0.1-3, u is 7-20, and t is 0-8. Herein, the ionically conductive compound may have a composition as in formula (IX):

Li_{2x-2y+2+4w-t}M_{y-z}Q_{w}P_{2-w}S_{x+6-z-t}Xₜ (IX),

wherein in formula (IX) the amount of Li (i.e. x in formula (I)) is 8-22, the amount of M (i.e. y in formula (I)) is 0.1-3, w is 0-3, z is 0.1-3, the amount of S (i.e. u in formula (I)) is 7-20, t is 0-8, such that in formula (IX) 2x-2y+2+4w-t is 8-22, y-z is 0.1-3, 2-w is 0.1-3 and x+6-z-t is 7-20, wherein X is absent or selected from the group consisting of halide and pseudohalide, wherein M is a bivalent cation, and wherein Q is a monovalent cation. The compound as in formula (IX) may have an argyrodite-type crystal structure.

In yet other specific cases, the ionically conductive compound has a composition as in formula (I), Q is a bivalent cation, M is a bivalent cation different from Q, x is 8-22, y is 0.1-3, w is 0-3, z is 0.1-3, u is 7-20, and t is 0-8. Herein, the ionically conductive compound may have a composition as in formula (X):

Li_{2x-2y+2+3w-t}M_{y-z}Q_{w}P_{2-w}S_{x+6-z-t}Xₜ (X),

wherein in formula (X) the amount of Li (i.e. x in formula (I)) is 8-22, the amount of M (i.e. y in formula (I)) is 0.1-3, w is 0-3, z is 0.1-3, the amount of S (i.e. u in formula (I)) is 7-20, t is 0-8, such that in formula (X) 2x-2y+2+3w-t is 8-22, y-z is 0.1-3, 2-w is 0.1-3 and x+6-z-t is 7-20, wherein X is absent or selected from the group consisting of halide and pseudohalide, wherein M is a bivalent cation, and wherein Q is a bivalent cation. The compound as in formula (X) may have an argyrodite-type crystal structure.

In yet other specific cases, the ionically conductive compound has a composition as in formula (I), M is a bivalent cation, Q is a trivalent cation, x is 8-22, y is 0.1-3, w is 0-3, z is 0.1-3, u is 7-20, and t is 0-8. Herein, the ionically conductive compound may have a composition as in formula (XI):

Li_{2x-2y+2+2w-t}M_{y-z}Q_{w}P_{2-w}S_{x+6-z-t}Xₜ (XI),

wherein in formula (XI) the amount of Li (i.e. x in formula (I)) is 8-22, the amount of M (i.e. y in formula (I)) is 0.1-3, w is 0-3, z is 0.1-3, the amount of S (i.e. u in formula (I)) is 7-20, t is 0-8, such that in formula (XI) 2x-2y+2+2w-t is 8-22, y-z is 0.1-3, 2-w is 0.1-3 and x+6-z-t is 7-20, wherein X is absent or selected from the group consisting of halide and pseudohalide, wherein M is a bivalent cation, and wherein Q is a trivalent cation. The compound as in formula (XI) may have an argyrodite-type crystal structure.

In yet other specific cases, the ionically conductive compound has a composition as in formula (I), Q is a tetravalent cation, M is a bivalent cation, x is 8-22, y is 0.1-3, w is 0-3, z is 0.1-3, u is 7-20, and t is 0-8. Herein, the ionically conductive compound may have a composition as in formula (XII):

Li_{2x-2y+2+w-t}M_{y-z}Q_{w}P_{2-w}S_{x+6-z-t}Xₜ (XII),

wherein in formula (XII) the amount of Li (i.e. x in formula (I)) is 8-22, the amount of M (i.e. y in formula (I)) is 0.1-3, w is 0-3, z is 0.1-3, the amount of S (i.e. u in formula (I)) is 7-20, t is 0-8, such that in formula (XII) 2x-2y+2+w-t is 8-22, y-z is 0.1-3, 2-w is 0.1-3 and x+6-z-t is 7-20, wherein X is absent or selected from the group consisting of halide and pseudohalide, wherein M is a bivalent cation, and wherein Q is a tetravalent cation. The compound as in formula (XII) may have an argyrodite-type crystal structure.

In yet other specific cases, the ionically conductive compound has a composition as in formula (I), M is a bivalent cation, Q is a pentavalent cation, x is 8-22, y is 0.1-3, w is 0-3, z is 0.1-3, u is 7-20, and t is 0-8. Herein, the ionically conductive compound may have a composition as in formula (XIII):

Li_{2x-2y+2-t}M_{y-z}Q_{w}P_{2-w}S_{x+6-z-t}Xₜ (XIII),

wherein in formula (XIII) the amount of Li (i.e. x in formula (I)) is 8-22, the amount of M (i.e. y in formula (I)) is 0.1-3, w is 0-3, z is 0.1-3, the amount of S (i.e. u in formula (I)) is 7-20, t is 0-8, such that in formula (XIII) 2x-2y+2-t is 8-22, y-z is 0.1-3, 2-w is 0.1-3 and x+6-z-t is 7-20, wherein X is absent or selected from the group consisting of halide and pseudohalide, wherein M is a bivalent cation, and wherein Q is a pentavalent cation. The compound as in formula (XIII) may have an argyrodite-type crystal structure.

In yet other specific cases, the ionically conductive compound has a composition as in formula (I), Q is absent, M is a trivalent cation, x is 8-22, y is 0.1-3, w is 0-3, z is 0.1-3, u is 7-20, and t is 0-8. Herein, the ionically conductive compound may have a composition as in formula (XIV):

Li_{2x-3y+2-t}M_{y-z}P₂S_{x+6-1.5z-t}Xₜ (XIV),

wherein in formula (XIV) the amount of Li (i.e. x in formula (I)) is 8-22, the amount of M (i.e. y in formula (I)) is 0.1-3, z is 0.1-3, the amount of S (i.e. u in formula (I)) is 7-20, t is 0-8, such that in formula (XIV) 2x-3y+2-t is 8-22, y-z is 0.1-3, and x+6-1.5z-t is 7-20, wherein X is absent or selected from the group consisting of halide and pseudohalide, and wherein M is a trivalent cation. The compound as in formula (XIV) may have an argyrodite-type crystal structure.

In yet other specific cases, the ionically conductive compound has a composition as in formula (I), M is a trivalent cation, Q is a monovalent cation, x is 8-22, y is 0.1-3, w is 0-3, z is 0.1-3, u is 7-20, and t is 0-8. Herein, the ionically conductive compound may have a composition as in formula (XV):

Li_{2x-3y+2+4w-t}M_{y-z}Q_{w}P_{2-w}S_{x+6-15z-t}Xₜ (XV),

wherein in formula (XV) the amount of Li (i.e. x in formula (I)) is 8-22, the amount of M (i.e. y in formula (I)) is 0.1-3, w is 0-3, z is 0.1-3, the amount of S (i.e. u in formula (I)) is 7-20, t is 0-8, such that in formula (XV) 2x-3y+2+4w-t is 8-22, y-z is 0.1-3, 2-w is 0.1-3 and x+6-1.5z-t is 7-20, wherein X is absent or selected from the group consisting of halide and pseudohalide, wherein M is a trivalent cation, and wherein Q is a monovalent cation. The compound as in formula (XV) may have an argyrodite-type crystal structure.

In yet other specific cases, the ionically conductive compound has a composition as in formula (I), Q is a bivalent cation, M is a trivalent cation, x is 8-22, y is 0.1-3, w is 0-3, z is 0.1-3, u is 7-20, and t is 0-8. Herein, the ionically conductive compound may have a composition as in formula (XVI):

Li_{2x-3y+2+3w-t}M_{y-z}Q_{w}P_{2-w}S_{x+6-1.5z-t}Xₜ (XVI),

wherein in formula (XVI) the amount of Li (i.e. x in formula (I)) is 8-22, the amount of M (i.e. y in formula (I)) is 0.1-3, w is 0-3, z is 0.1-3, the amount of S (i.e. u in formula (I)) is 7-20, t is 0-8, such that in formula (XVI) 2x-3y+2+3w-t is 8-22, y-z is 0.1-3, 2-w is 0.1-3 and x+6-1.5z-t is 7-20, wherein X is absent or selected from the group consisting of halide and pseudohalide, wherein M is a trivalent cation, and wherein Q is a bivalent cation. The compound as in formula (XVI) may have an argyrodite-type crystal structure.

In yet other specific cases, the ionically conductive compound has a composition as in formula (I), M is a trivalent cation, Q is a trivalent cation different from M, x is 8-22, y is 0.1-3, w is 0-3, z is 0.1-3, u is 7-20, and t is 0-8. Herein, the ionically conductive compound may have a composition as in formula (XVII):

Li_{2x-3y+2+2w-t}M_{y-z}Q_{w}P_{2-w}S_{x+6-1.5z-t}Xₜ (XVII),

wherein in formula (XVII) the amount of Li (i.e. x in formula (I)) is 8-22, the amount of M (i.e. y in formula (I)) is 0.1-3, w is 0-3, z is 0.1-3, the amount of S (i.e. u in formula (I)) is 7-20, t is 0-8, such that in formula (XVII) 2x-3y+2+2w-t is 8-22, y-z is 0.1-3, 2-w is 0.1-3 and x+6-1.5z-t is 7-20, wherein X is absent or selected from the group consisting of halide and pseudohalide, wherein M is a trivalent cation, and wherein Q is a trivalent cation different from M. The compound as in formula (XVII) may have an argyrodite-type crystal structure.

In yet other specific cases, the ionically conductive compound has a composition as in formula (I), Q is a tetravalent cation, M is a trivalent cation, x is 8-22, y is 0.1-3, w is 0-3, z is 0.1-3, u is 7-20, and t is 0-8. Herein, the ionically conductive compound may have a composition as in formula (XVIII):

Li_{2x-3y+2+w-t}M_{y-z}Q_{w}P_{2-w}S_{x+6-1.5z-t}Xₜ (XVIII),

wherein in formula (XVIII) the amount of Li (i.e. x in formula (I)) is 8-22, the amount of M (i.e. y in formula (I)) is 0.1-3, w is 0-3, z is 0.1-3, the amount of S (i.e. u in formula (I)) is 7-20, t is 0-8, such that in formula (XVIII) 2x-3y+2+w-t is 8-22, y-z is 0.1-3, 2-w is 0.1-3 and x+6-1.5z-t is 7-20, wherein X is absent or selected from the group consisting of halide and pseudohalide, wherein M is a trivalent cation, and wherein Q is a tetravalent cation. The compound as in formula (XVIII) may have an argyrodite-type crystal structure.

In yet other specific cases, the ionically conductive compound has a composition as in formula (I), M is a trivalent cation, Q is a pentavalent cation, x is 8-22, y is 0.1-3, w is 0-3, z is 0.1-3, u is 7-20, and t is 0-8. The ionically conductive compound may have a composition as in formula (XIX):

Li_{2x-3y+2-t}M_{y-z}Q_{w}P_{2-w}S_{x+6-1.5z-t}Xₜ (XIX),

wherein in formula (XIX) the amount of Li (i.e. x in formula (I)) is 8-22, the amount of M (i.e. y in formula (I)) is 0.1-3, w is 0-3, z is 0.1-3, the amount of S (i.e. u in formula (I)) is 7-20, t is 0-8, such that in formula (XIX) 2x-3y+2-t is 8-22, y-z is 0.1-3, 2-w is 0.1-3 and x+6-1.5z-t is 7-20, wherein X is absent or selected from the group consisting of halide and pseudohalide, wherein M is a trivalent cation, and wherein Q is a pentavalent cation. The compound as in formula (XIX) may have an argyrodite-type crystal structure.

In yet other specific cases, the ionically conductive compound has a composition as in formula (I), Q is absent, M is a tetravalent cation, x is 8-22, y is 0.1-3, w is 0-3, z is 0.1-3, u is 7-20, and t is 0-8. Herein, the ionically conductive compound may have a composition as in formula (XX):

Li_{2x-4y+2-t}M_{y-z}P₂S_{x+6-2z-t}Xₜ (XX),

wherein in formula (XX) the amount of Li (i.e. x in formula (I)) is 8-22, the amount of M (i.e. y in formula (I)) is 0.1-3, z is 0.1-3, the amount of S (i.e. u in formula (I)) is 7-20, t is 0-8, such that in formula (XX) 2x-4y+2-t is 8-22, y-z is 0.1-3, and x+6-2z-t is 7-20, wherein X is absent or selected from the group consisting of halide and pseudohalide, and wherein M is a tetravalent cation. The compound as in formula (XX) may have an argyrodite-type crystal structure.

In yet other specific cases, the ionically conductive compound has a composition as in formula (I), M is a tetravalent cation, Q is a monovalent cation, x is 8-22, y is 0.1-3, w is 0-3, z is 0.1-3, u is 7-20, and t is 0-8. Herein, the ionically conductive compound may have a composition as in formula (XXI):

Li_{2x-4y+2+4w-t}M_{y-z}Q_{w}P_{2-w}S_{x+6-2z-t}Xₜ (XXI),

wherein in formula (XXI) the amount of Li (i.e. x in formula (I)) is 8-22, the amount of M (i.e. y in formula (I)) is 0.1-3, w is 0-3, z is 0.1-3, the amount of S (i.e. u in formula (I)) is 7-20, t is 0-8, such that in formula (XXI) 2x-4y+2+4w-t is 8-22, y-z is 0.1-3, 2-w is 0.1-3 and x+6-2z-t is 7-20, wherein X is absent or selected from the group consisting of halide and pseudohalide, wherein M is a tetravalent cation, and wherein Q is a monovalent cation. The compound as in formula (XXI) may have an argyrodite-type crystal structure.

In yet other specific cases, the ionically conductive compound has a composition as in formula (I), Q is a bivalent cation, M is a tetravalent cation, x is 8-22, y is 0.1-3, w is 0-3, z is 0.1-3, u is 7-20, and t is 0-8. Herein, the ionically conductive compound may have a composition as in formula (XXII):

Li_{2x-4y+2+3w-t}M_{y-z}Q_{w}P_{2-w}S_{x+6-2z-t}Xₜ (XXII),

wherein in formula (XXII) the amount of Li (i.e. x in formula (I)) is 8-22, the amount of M (i.e. y in formula (I)) is 0.1-3, w is 0-3, z is 0.1-3, the amount of S (i.e. u in formula (I)) is 7-20, t is 0-8, such that in formula (XXII) 2x-4y+2+3w-t is 8-22, y-z is 0.1-3, 2-w is 0.1-3 and x+6-2z-t is 7-20, wherein X is absent or selected from the group consisting of halide and pseudohalide, wherein M is a tetravalent cation, and wherein Q is a bivalent cation. The compound as in formula (XXII) may have an argyrodite-type crystal structure.

In yet other specific cases, the ionically conductive compound has a composition as in formula (I), M is a tetravalent cation, Q is a trivalent cation, x is 8-22, y is 0.1-3, w is 0-3, z is 0.1-3, u is 7-20, and t is 0-8. Herein, the ionically conductive compound may have a composition as in formula (XXIII):

Li_{2x-4y+2+2w-t}M_{y-z}Q_{w}P_{2-w}S_{x+6-2z-t}Xₜ (XXIII),

wherein in formula (XXIII) the amount of Li (i.e. x in formula (I)) is 8-22, the amount of M (i.e. y in formula (I)) is 0.1-3, w is 0-3, z is 0.1-3, the amount of S (i.e. u in formula (I)) is 7-20, t is 0-8, such that in formula (XXIII) 2x-4y+2+2w-t is 8-22, y-z is 0.1-3, 2-w is 0.1-3 and x+6-2z-t is 7-20, wherein X is absent or selected from the group consisting of halide and pseudohalide, wherein M is a tetravalent cation, and wherein Q is a trivalent cation. The compound as in formula (XXIII) may have an argyrodite-type crystal structure.

In yet other specific cases, the ionically conductive compound has a composition as in formula (I), Q is a tetravalent cation, M is a tetravalent cation different from Q, x is 8-22, y is 0.1-3, w is 0-3, z is 0.1-3, u is 7-20, and t is 0-8. Herein, the ionically conductive compound may have a composition as in formula (XXIV):

Li_{2x-4y+2+w-t}M_{y-z}Q_{w}P_{2-w}S_{x+6-2z-t}Xₜ (XXIV),

wherein in formula (XXIV) the amount of Li (i.e. x in formula (I)) is 8-22, the amount of M (i.e. y in formula (I)) is 0.1-3, w is 0-3, z is 0.1-3, the amount of S (i.e. u in formula (I)) is 7-20, t is 0-8, such that in formula (XXIV) 2x-4y+2+w-t is 8-22, y-z is 0.1-3, 2-w is 0.1-3 and x+6-2z-t is 7-20, wherein X is absent or selected from the group consisting of halide and pseudohalide, wherein M is a tetravalent cation, and wherein Q is a tetravalent cation. The compound as in formula (XXIV) may have an argyrodite-type crystal structure.

In yet other specific cases, the ionically conductive compound has a composition as in formula (I), M is a tetravalent cation, Q is a pentavalent cation, x is 8-22, y is 0.1-3, w is 0-3, z is 0.1-3, u is 7-20, and t is 0-8. Herein, the ionically conductive compound may have a composition as in formula (XXV):

Li_{2x-4y+2-t}M_{y-z}Q_{w}P_{2-w}S_{x+6-2z-t}Xₜ (XXV),

wherein in formula (XXV) the amount of Li (i.e. x in formula (I)) is 8-22, the amount of M (i.e. y in formula (I)) is 0.1-3, w is 0-3, z is 0.1-3, the amount of S (i.e. u in formula (I)) is 7-20, t is 0-8, such that in formula (XXV) 2x-4y+2-t is 8-22, y-z is 0.1-3, 2-w is 0.1-3 and x+6-2z-t is 7-20, wherein X is absent or selected from the group consisting of halide and pseudohalide, wherein M is a tetravalent cation, and wherein Q is a pentavalent cation. The compound as in formula (XXV) may have an argyrodite-type crystal structure.

In certain preferred cases, Q and X are absent and the ionically conductive compound has a composition as in Li₂₂MP₂S₁₈, wherein M is a tetravalent cation. In other preferred cases, Q and X are absent and the ionically conductive compound has a composition as in Li₁₈MP₂S₁₆, wherein M is a tetravalent cation. In yet other preferred cases, Q and X are absent and the ionically conductive compound has a composition as in Li₁₄MP₂S₁₄, wherein M is a tetravalent cation. In yet other preferred cases, Q and X are absent and the ionically conductive compound has a composition as in Li₁₂MP₂S₁₂, wherein M is a tetravalent cation. In yet other preferred cases, Q and X are absent and the ionically conductive compound has a composition as in Li₁₀MP₂S₁₂, wherein M is a tetravalent cation. In yet other preferred cases, the ionically conductive compound has a composition as in Li₁₄M₂P₂S_{13.5}, wherein M is a tetravalent cation.

In certain preferred cases, Q is absent and the ionically conductive compound has a composition as in Li₁₃MP₂S₁₃Cl. In yet other preferred cases, Q is absent and the ionically conductive compound has a composition as in Li₁₂MP₂S₁₂Cl₂. In yet other preferred cases, Q is absent and the ionically conductive compound has a composition as in Li₁₁MP₂S₁₁Cl₃. In yet other preferred cases, Q is absent and the ionically conductive compound has a composition as in Li₁₁MP₂S₁₁Br₃.

Non-limiting examples of preferred compounds having a composition as in formula (I) include Li₁₀FeP₂S₁₂, Li_{12.5}Fe_{0.75}P₂S₁₂, Li_{13.5}Fe_{0.75}P₂S_{12.25}, Li₁₃Fe_{0.5}P₂S₁₂, Li₁₃Fe_{0.75}P₂S_{12.25}, Li₁₃FeP₂S_{12.5}, Li₁₄5Fe_{0.75}P₂S₁₃, Li₁₄Fe_{0.5}P₂S_{12.5}, Li₁₄Fe_{0.75}P₂S_{12.75}, Li₁₄FeP₂S₁₃, Li₁₅Fe_{0.5}P₂S₁₃, Li₂₂FeP₂S₁₈, Li₁₈FeP₂S₁₆, Li₁₄FeP₂S₁₄, Li₁₂FeP₂S₁₂, Li₁₀FeP₂S₁₂, Li₁₄Fe₂PS_{13.5}, Li₁₃FeP₂S₁₃Cl, Li₁₂Fe₂S₁₂Cl₂, Li₁₁FeP₂S₁₁Cl₃, and Li₁₃FeP₂S₁₃Br.

The ionically conductive compound of formula (I)) may be in the form of a particle. A plurality of particles comprising the ionically conductive compound may be conductive to ions of an electroactive material (e.g., lithium), e.g., may be substantially conductive to lithium ions. The plurality of particles may have an average ion conductivity (e.g., lithium ion conductivity) of greater than or equal to 10⁻⁵ S/cm. For instance, the average ion conductivity of the plurality of particles is greater than or equal to 10⁻⁵ S/cm, greater than or equal to 10⁻⁴ S/cm, greater than or equal to 10⁻³ S/cm, greater than or equal to 10⁻² S/cm, or greater than or equal to 10⁻¹ S/cm. For instance, the average ion conductivity of the plurality of particles is less than or equal to 1 S/cm, less than or equal to 10⁻¹ S/cm, less than or equal to 10⁻² S/cm, less than or equal to 10⁻³ S/cm, or less than or equal to 10⁻⁴ S/cm. Combinations of the above-reference ranges are also possible (e.g., an ion conductivity greater than or equal to 10⁻⁵S/cm and less than or equal to 10⁻¹ S/cm, greater than or equal to 10⁻⁴ S/cm and less than or equal to 10⁻² S/cm). Other ion conductivities are also possible.

The average ion conductivity of the plurality of particles can be determined before the particles are incorporated into a layer of an electrochemical cell (e.g., a protective layer, a solid electrolyte layer, an intercalated electrode layer). The average ionic conductivity can be measured using a conductivity bridge (i.e., an impedance measuring circuit) operating at 1 kHz by pressing the particles between two copper cylinders at a pressure of up to 4 metric tons/cm². The average ion conductivity (i.e., the inverse of the average resistivity) can be measured at 500 kg/cm² increments using a conductivity bridge (i.e., an impedance measuring circuit) operating at 1 kHz. Herein, the pressure is increased until changes in average ion conductivity are no longer observed in the sample. Conductivity is usually measured at room temperature (usually 25 °C).

The average largest cross-sectional dimension of a plurality of particles (e.g., within a layer of an electrochemical cell, or prior to being incorporated into a layer) comprising the ionically conductive compound may be less than or equal to 100 µm, less than or equal to 50 µm, less than or equal to 25 µm, less than or equal to 10 µm, less than or equal to 5 µm, less or equal to 2 µm , less than or equal to 1 µm, less than or equal to 500 nm, less than or equal to 100 nm, or less than or equal to 50 nm. The average largest cross-sectional dimension of the plurality of particles may be greater than or equal to 10 nm, greater than or equal to 100 nm, greater than or equal to 500 nm, greater than or equal to 1 µm, greater than or equal to 2 µm, greater than or equal to 5 µm, greater than or equal to 10 µm, greater than or equal to 25 µm, or greater than or equal to 50 µm. Combinations of the above-referenced ranges are also possible (e.g., a largest cross-sectional dimension of less than 100 µm and greater than 10 µm, less than 25 µm and greater than 1 µm, less than 2 µm and greater than 100 nm, less than 500 nm and greater than 10 nm).

The average largest cross-sectional dimension of the plurality of particles may be determined by imaging the particles with a scanning electron microscope (SEM). An image may be acquired at a magnification between 10X to 100,000X, depending on the overall dimensions of the plurality of particles. Those skilled in the art would be capable of selecting an appropriate magnification for imaging the sample. The average largest cross-sectional dimension of the plurality of particles can be determined by taking the longest cross-sectional dimension of each particle and averaging the longest cross-sectional dimensions (e.g., averaging the longest cross-sectional dimensions for 10 particles).

Particles comprising an ionically conductive compound described herein may be formed by heating a mixture of precursors, as described in more detail herein. The mixture of precursors comprises atoms of the elements Li, S, P, M, Q (if present), and X (if present), where M is selected from the group consisting of Na, K, Fe, Mg, Ag, Cu, Zr, and Zn, Q is absent or selected from the group consisting of Cr, B, Sn, Ge, Si, Zr, Ta, Nb, V, P, Fe, Ga, Al, As, and combinations thereof, and X is absent or selected from the group consisting of halide and pseudohalide.

In the mixture of precursors, the elements Li, S, P, M, Q, if present, and X, if present, are present either in elemental form or in chemically bound form. For example, Li, S, P, M, Q, if present, and X, if present, may be provided in chemically bound form, such as in the form of a chemical compound comprising atoms of one or more of the elements Li, S, P, M, Q, and X as described above (e.g., Li₂S, P₂S₅, FeS, FeS₂, SiS₂, GeS₂, Ga₂S₃, MgS, ZnS). M, Q, X, P, and S may be provided in elemental form. In some cases, the mixture of precursors comprises atoms of the elements Li, S, P, and M. In other cases, the mixture of precursors comprises atoms of the elements Li, S, P, and Fe. In yet other cases, the mixture of precursors comprises atoms of the elements Li, S, P, Fe and Q.

The mixture of precursors may be a mixture comprising at least two of Li₂S, MSₐ, P_{b}S_{c}, QS_{d}, LiX, and S, where a is 0-8, b is 0-2, c is 0-8, such that b+c is 1 or greater, and d is 0-3. For example, a is 0-3, b is 2, c is 0-5, and d is 0-2. Non-limiting examples of suitable precursors include Li₂S, P₂S₅, FeS, FeS₂, SiS₂, GeS₂, Ga₂S₃, MgS, ZnS, SnS₂, Si, Ge, Sn, Fe, S₂, S₄, Ss, P₂S₅, P, LiCI, LiBr, and combinations thereof.

For instance, a is greater than or equal to 0, greater than or equal to 1, greater than or equal to 2, greater than or equal to 3, greater than or equal to 4, greater than or equal to 5, greater than or equal to 6, or greater than or equal to 7. For instance, a is less than or equal to 8, less than or equal to 7, less than or equal to 6, less than or equal to 5, less than or equal to 4, less than or equal to 3, or less than or equal to 2. Combinations of the above-referenced ranges are also possible (e.g., greater than or equal to 0 and less than or equal to 8, greater than or equal to 1 and less than or equal to 4, greater than or equal to 2 and less than or equal to 6, greater than or equal to 4 and less than or equal to 8). In some cases, a is 0 (i.e. the precursor is elemental M).

For instance, b is greater than or equal to 0, or greater than or equal to 1. For instance, b is less than or equal to 2, or less than or equal to 1. Combinations of the above-referenced ranges are also possible (e.g., greater than or equal to 0 and less than or equal to 2). In some cases, b is 0 (i.e., the precursor is elemental sulfur). In other cases, b is 1. In yet other cases, b is 2.

For instance, c is greater than or equal to 0, greater than or equal to 1, greater than or equal to 2, greater than or equal to 3, greater than or equal to 4, greater than or equal to 5, greater than or equal to 6, or greater than or equal to 7. For instance, c is less than or equal to 8, less than or equal to 7, less than or equal to 6, less than or equal to 5, less than or equal to 4, less than or equal to 3, or less than or equal to 2. Combinations of the above-referenced ranges are also possible (e.g., greater than or equal to 0 and less than or equal to 8, greater than or equal to 1 and less than or equal to 4, greater than or equal to 2 and less than or equal to 6, greater than or equal to 4 and less than or equal to 8). In certain cases, c is 0 (i.e., the precursor is elemental phosphorous). In other cases, c is 1.

For instance, b and c are selected such that b+c is 1 or greater (e.g., 2 or greater, 3 or greater, 4 or greater, 5 or greater, 6 or greater, 7 or greater, 8 or greater, or 9 or greater). In some cases, b+c is less than or equal to 10, less than or equal to 9, less than or equal to 8, less than or equal to 7, less than or equal to 6, less than or equal to 5, less than or equal to 4, less than or equal to 3, or less than or equal to 2. Combinations of the above-referenced ranges are also possible.

For instance, d is greater than or equal to 0, or greater than or equal to 1. For instance, d is less than or equal to 2, or less than or equal to 1. Combinations of the above-referenced ranges are also possible (e.g., greater than or equal to 0 and less than or equal to 2). In certain cases, d is 0 (i.e., the precursor is elemental Q). In other cases, d is 1. In yet other cases, d is 2.

The mixture of precursors described herein may have a stoichiometric ratio of the elements Li, S, P, M, X (if present), and Q (if present) as in formula (I), as described above (e.g., LiₓM_{y}Q_{w}P_{z}SᵤXₜ). Herein Li, S, P, M, X (if present) and Q (if present) may have a stoichiometric ratio such that the plurality of particles formed from the mixture comprises a compound of formula (I). For example, the mixture of precursors is selected such that the ratio of the elements Li, S, P, M, X and Q result in the formation of an ionically conductive compound described herein, such as Li₁₀FeP₂S₁₂, Li_{12.5}Fe_{0.75}P₂S₁₂, Li_{13.5}Fe_{0.75}P₂S_{12.25}, Li₁₃Fe_{0.5}P₂S₁₂, Li₁₃Fe_{0.75}P₂S_{12.25}, Li₁₃FeP₂S_{12.5}, Li_{14.5}Fe_{0.75}P₂S₁₃, Li₁₄Fe_{0.5}P₂S_{12.5}, Li₁₄Fe_{0.75}P₂S_{12.75}, Li₁₄FeP₂S₁₃, Li₁₅Fe_{0.5}P₂S₁₃, Li₂₂FeP₂S₁₈, Li₁₈FeP₂S₁₆, Li₁₄FeP₂S₁₄, Li₁₂FeP₂S₁₂, Li₁₀FeP₂S₁₂, Li₁₄Fe₂PS_{13.5}, Li₁₃FeP₂S₁₃Cl, Li₁₂FeP₂S₁₂Cl₂, Li₁₁FeP₂S₁₁Cl₃, and Li₁₃FeP₂S₁₃Br.

Other suitable ratios for forming a compound as in formula (I) are also possible. For example, in certain cases, excess sulfur may be present in the mixture (e.g., sulfur in excess of that included in a formula of an ionically conductive compound described herein). The excess sulfur may, for example, compensate for sulfur loss during mixing. For instance, the mixture of precursors described herein has a stoichiometric ratio of two or more of the elements Li₂S, LiX, MSₐ, P_{b}S_{c}, QS_{d}, and S where a, b, c, and d are as described above.

In certain cases, the mixture of precursors comprises or consists of: Li₂S, MS₂ (e.g., FeS₂) and P₂S₅; or Li₂S, MS (e.g., FeS), and P₂S_{5;} or Li₂S, M (e.g., Fe), Ss and P₂S₅; or Li₂S, M (e.g., Fe), Ss and P; or Li₂S, MS₂ (e.g., FeS₂), LiX (e.g., LiCI, LiBr) and P₂S₅; or Li₂S, MS (e.g., FeS), LiX (LiCI, LiBr) and P₂S₅. M is a metal other than lithium. Other mixtures of precursors are also possible.

Li₂S may be present in the mixture of precursors (e.g., prior to heating the mixture, during heating of the mixture) in an amount of greater than or equal to 20 wt%, greater than or equal to 25 wt%, greater than or equal to 27 wt%, greater than or equal to 30 wt%, greater than or equal to 35 wt%, greater than or equal to 40 wt%, greater than or equal to 45 wt%, greater than or equal to 50 wt%, or greater than or equal to 55 wt% versus the total weight of the mixture of precursors. Li₂S may be present in the mixture of precursors (e.g., prior to heating the mixture, during heating of the mixture) in an amount of less than or equal to 60 wt%, less than or equal to 55 wt%, less than or equal to 50 wt%, less than or equal to 45 wt%, less than or equal to 40 wt%, less than or equal to 35 wt%, less than or equal to 30 wt%, less than or equal to 27 wt%, or less than or equal to 25 wt% versus the total weight of the mixture of precursors. Combinations of the above-referenced ranges are also possible (e.g., greater than or equal to 20 wt% and less than or equal to 60 wt%, greater than or equal to 27 wt% and less than or equal to 60 wt%). Other ranges are also possible.

MS (e.g., FeS) may be present in the mixture of precursors (e.g., prior to heating the mixture, during heating of the mixture) in an amount of greater than or equal to 5 wt%, greater than or equal to 7 wt%, greater than or equal to 10 wt%, greater than or equal to 15 wt%, greater than or equal to 20 wt%, greater than or equal to 25 wt%, greater than or equal to 26 wt%, greater than or equal to 29 wt% versus the total weight of the mixture of precursors. MS (e.g., FeS) may be present in the mixture of precursors (e.g., prior to heating the mixture, during heating of the mixture) in an amount of less than or equal to 30 wt%, less than or equal to 29 wt%, less than or equal to 26 wt%, less than or equal to 25 wt%, less than or equal to 20 wt%, less than or equal to 15 wt%, less than or equal to 10 wt%, or less than or equal to 7 wt% versus the total weight of the mixture of precursors. Combinations of the above-referenced ranges are also possible (e.g., greater than or equal to 5 wt% and less than or equal to 30 wt%, greater than or equal to 7 wt% and less than or equal to 26 wt%). Other ranges of also possible.

P₂S₅ may be present in the mixture of precursors (e.g., prior to heating the mixture, during heating of the mixture) in an amount of greater than or equal to 10 wt%, greater than or equal to 12 wt%, greater than or equal to 14 wt%, greater than or equal to 16 wt%, greater than or equal to 18 wt%, greater than or equal to 20 wt%, greater than or equal to 25 wt%, greater than or equal to 30 wt%, greater than or equal to 35 wt%, greater than or equal to 40 wt%, or greater than or equal to 45 wt% versus the total weight of the mixture of precursors. P₂S₅ may be present in the mixture of precursors (e.g., prior to heating the mixture, during heating of the mixture) in an amount of less than or equal to 50 wt%, less than or equal to 45 wt%, less than or equal to 40 wt%, less than or equal to 35 wt%, less than or equal to 30 wt%, less than or equal to 25 wt%, less than or equal to 20 wt%, less than or equal to 18 wt%, less than or equal to 16 wt%, less than or equal to 14 wt%, or less than or equal to 12 wt% versus the total weight of the mixture of precursors. Combinations of the above-referenced ranges are also possible (e.g., greater than or equal to 10 wt% and less than or equal to 50 wt%, greater than or equal to 16 wt% and less than or equal to 40 wt%). Other ranges of also possible.

LiX (e.g., LiCI, LiBr, Lil) may be present in the mixture of precursors (e.g., prior to heating the mixture, during heating of the mixture) in an amount of greater than or equal to 0 wt%, greater than or equal to 5 wt%, greater than or equal to 10 wt%, greater than or equal to 15 wt%, or greater than or equal to 20 wt% versus the total weight of the mixture of precursors. LiX (e.g., LiCI, LiBr, Lil) may be present in the mixture of precursors (e.g., prior to heating the mixture, during heating of the mixture) in an amount of less than or equal to 25 wt%, less than or equal to 20 wt%, less than or equal to 15 wt%, less than or equal to 10 wt%, or less than or equal to 5 wt% versus the total weight of the mixture of precursors. Combinations of the above-referenced ranges are also possible (e.g., greater than or equal to 0 wt% and less than or equal to 25 wt%, greater than or equal to 0 wt% and less than or equal to 20 wt%). Other ranges of also possible.

Sulfur (excess sulfur such as e.g. S and/or Ss, not already present in the mixture of precursors with other components such as LiS, MS, or P₂S₅) may be present in the mixture of precursors (e.g., prior to heating the mixture, during heating of the mixture) in an amount of greater than or equal to 0 wt%, greater than or equal to 2 wt%, greater than or equal to 5 wt%, greater than or equal to 7 wt%, greater than or equal to 10 wt%, or greater than or equal to 12 wt% versus the total weight of the mixture of precursors. Sulfur (excess sulfur such as e.g. S and/or Ss) may be present in the mixture of precursors (e.g., prior to heating the mixture, during heating of the mixture) in an amount of less than or equal to 15 wt%, less than or equal to 12 wt%, less than or equal to 10 wt%, less than or equal to 7 wt%, less than or equal to 5 wt%, or less than or equal to 2 wt% versus the total weight of the mixture of precursors. Combinations of the above-referenced ranges are also possible (e.g., greater than or equal to 0 wt% and less than or equal to 15 wt%, greater than or equal to 0 wt% and less than or equal to 10 wt%). Other ranges of also possible. In some cases, excess sulfur is not present in the mixture of precursors.

Li₂S and MS (e.g., FeS) may be present in the mixture of precursors in a particular ratio. The ratio of Li₂S to MS in the mixture of precursors (e.g., prior to heating the mixture, during heating of the mixture) may be less than or equal to 12:1, less than or equal to 10:1, less than or equal to 8:1, less than or equal to 6:1, less than or equal to 4:1, less than or equal to 2:1, less than or equal to 1:1, or less than or equal to 0.8:1. The ratio of Li₂S to MS in the mixture of precursors (e.g., prior to heating the mixture, during heating of the mixture) may be greater than or equal to 0.6:1, greater than or equal to 0.8:1, greater than or equal to 1:1, greater than or equal to 2:1, greater than or 4:1, greater than or equal to 6:1, greater than or equal to 8:1, or greater than or equal to 10:1. Combinations of the above-referenced ranges are also possible (e.g., greater than or equal to 0.6:1 and less than or equal to 12:1). Other ranges are also possible.

An exemplary mixture of precursors (e.g., prior to heating the mixture, during heating of the mixture) comprises greater than or equal to 20 wt% and less than or equal to 60 wt% Li₂S, greater than or equal to 5 wt% and less than or equal to 30 wt% MS (e.g., FeS), greater than or equal to 10 wt% and less than or equal to 50 wt% P₂S₅, greater than or equal to 0 wt% and less than or equal to 25 wt% LiX (e.g., LiCI, LiBr, Lil), and greater than or equal to 0 wt% and less than or equal to 15 wt% excess sulfur (versus the total weight of the mixture of precursors).

In another example, the mixture of precursors (e.g., prior to heating the mixture, during heating of the mixture) comprises greater than or equal to 27 wt% and less than or equal to 60 wt% Li₂S, greater than or equal to 7 wt% and less than or equal to 26 wt% MS (e.g., FeS), greater than or equal to 16 wt% and less than or equal to 40 wt% P₂S₅, greater than or equal to 0 wt% and less than or equal to 20 wt% LiX (e.g., LiCI, LiBr, Lil), and greater than or equal to 0 wt% and less than or equal to 10 wt% excess sulfur (versus the total weight of the mixture of precursors).

In some cases, excess sulfur is not present in these exemplary mixture of precursors.

Those of ordinary skill in the art would understand, based upon the teachings of this specification, that the amount of each component (e.g., Li₂S, MS, P₂S₅, LiX, S, and/or other components) may be selected to produce a particular stoichiometry such as those described above in the context of the compounds described herein.

The mixture of precursors (mixture comprising atoms of the elements Li, S, P, M, Q (if present), and X (if present)) may be heated to any suitable temperature for forming a compound described herein. The mixture of precursors may be heated to a temperature of greater than or equal to 500°C, greater than or equal to 550°C, greater than or equal to 600°C, greater than or equal to 650°C, greater than or equal to 700°C, greater than or equal to 750°C, greater than or equal to 800°C, greater than or equal to 850°C, greater than or equal to 900°C, greater than or equal to 950°C, greater than or equal to 1000°C, greater than or equal to 1050°C, greater than or equal to 1100°C, or greater than or equal to 1150°C. The mixture of precursors may be heated to a temperature less than or equal to 1200°C, less than or equal to 1150°C, less than or equal to 1100°C, less than or equal to 1050°C, less than or equal to 1000°C, less than or equal to 950°C, less than or equal to 900°C, less than or equal to 850°C, less than or equal to 800°C, less than or equal to 750°C, less than or equal to 700°C, less than or equal to 650°C, less than or equal to 600°C, or less than or equal to 550°C. Combinations of the above-referenced ranges are also possible (e.g., greater than or equal to 500°C and less than or equal to 1200°C, greater than or equal to 400°C and less than or equal to 900°C, greater than or equal to 500°C and less than or equal to 800°C, greater than or equal to 500°C and less than or equal to 700°C, greater than or equal to 600°C and less than or equal to 800°C). Other ranges are also possible.

The mixture of precursors may be heated for any suitable amount of time. The mixture of precursors may be heated for greater than or equal to 3 hours, greater than or equal to 5 hours, greater than or equal to 8 hours, greater than or equal to 12 hours, greater than or equal to 16 hours, or greater than or equal to 20 hours. The mixture of precursors may be heated for less than or equal to 24 hours, less than or equal to 48 hours, less than or equal to 36 hours, less than or equal to 24 hours, less than or equal to 20 hours, less than or equal to 16 hours, less than or equal to 12 hours, less than or equal to 8 hours, or less than or equal to 5 hours. Combinations of the above referenced ranges are also possible (e.g., greater than or equal to 3 hours and less than or equal to 24 hours, greater than or equal to 5 hours and less than or equal to 12 hours, greater than or equal to 8 hours and less than or equal to 20 hours, greater than or equal to 12 hours and less than or equal to 24 hours). Other ranges are also possible.

The mixture of precursors may be heated at any suitable pressure. The mixture of precursors may be heated at a relatively low pressure. For example, the mixture of precursors is heated at a pressure of between 0.1 MPa and 0.3 MPa, or at other suitable pressures.

After heating the mixture of precursors, the mixture may be cooled. For example, the mixture of precursors may be heated to a temperature between 500°C and 1200°C (e.g., between 500°C and 900°C) for between 3 hours to 24 hours, and the mixture may be cooled to a temperature less than 500°C such as room temperature. The mixture may then be ground into a plurality of particles of desired size. Those skilled in the art would be capable of selecting suitable methods for grinding a material into particles including, for example, ball milling or blender crushing. The mixture of precursors may be ground in a ball mill prior to and/or during heating. In some cases, the grinding of the plurality of particles is conducted at relative low pressures. For example, the grinding of the plurality of particles may be conducted at pressures less than or equal to about 1 GPa, less than or equal to about 500 MPa, less than or equal to about 100 MPa, less than or equal to about 50 MPa, less than or equal to about 10 MPa, less than or equal to about 5 MPa, less than or equal to about 1 MPa, or less than or equal to about 0.5 MPa. For example, the grinding of the plurality of particles may be conducted at pressures of at least about 0.1 MPa, at least about 0.5 MPa, at least about 1 MPa, at least about 5 MPa, at least about 10 MPa, at least about 50 MPa, at least about 100 MPa, or at least about 500 MPa. Combinations of the above-referenced ranges are also possible (e.g., at least about 0.1 MPa and less than or equal to about 1 GPa). Other ranges are also possible.

A compound described herein (e.g., the compounds of any one of formulas (I)-(XXV)) may be deposited as a layer. Herein, a plurality of particles comprising the compound of formula (I) may be deposited as a layer (e.g., in an electrochemical cell). As will be understood by one of ordinary skill in the art, the compounds of any one of formulas (I)-(XXV) refers to a compound of formula (I), a compound of formula (IA), a compound of formula (II), a compound of formula (III), a compound of formula (IV), a compound of formula (V), a compound of formula (VI), a compound of formula (VII), a compound of formula (VIII), a compound of formula (IX), a compound of formula (X), a compound of formula (XI), a compound of formula (XII), a compound of formula (XIII), a compound of formula (XIV), a compound of formula (XV), a compound of formula (XVI), a compound of formula (XVII), a compound of formula (XVIII), a compound of formula (XIX), a compound of formula (XX), a compound of formula (XXI), a compound of formula (XXII), a compound of formula (XXIII), a compound of formula (XXIV), or a compound of formula (XXV). Accordingly, the compounds of any one of formulas (IA)-(XXV) refers to a compound of formula (IA), a compound of formula (II), a compound of formula (III), a compound of formula (IV), a compound of formula (V), a compound of formula (VI), a compound of formula (VII), a compound of formula (VIII), a compound of formula (IX), a compound of formula (X), a compound of formula (XI), a compound of formula (XII), a compound of formula (XIII), a compound of formula (XIV), a compound of formula (XV), a compound of formula (XVI), a compound of formula (XVII), a compound of formula (XVIII), a compound of formula (XIX), a compound of formula (XX), a compound of formula (XXI), a compound of formula (XXII), a compound of formula (XXIII), a compound of formula (XXIV), or a compound of formula (XXV).

A layer comprising a compound described herein (e.g., the compounds of formulas (I)-(XXV)) may be deposited on a surface (e.g., on another layer) by any suitable method such as sputtering (e.g., magnetron sputtering), ion beam deposition, molecular beam epitaxy, electron beam evaporation, vacuum thermal evaporation, aerosol deposition, sol-gel, laser ablation, chemical vapor deposition (CVD), thermal evaporation, plasma enhanced chemical vacuum deposition (PECVD), laser enhanced chemical vapor deposition, jet vapor deposition, etc. For example, a layer comprising a compound described herein is made by cold pressing. The technique used may depend on the desired thickness of the layer, the material being deposited on, etc. The compound of formula (I) (or one or more of the compounds for formulas (IA)-(XXV)) may be deposited in powder form. The particles comprising the compound of formula (I) may be deposited on a surface and sintered.

A layer comprising a compound described herein (e.g., the compounds of formulas (I)-(XXV)) may be deposited using aerosol deposition.

In certain cases, the layer comprising the compound of formula (I) is deposited on an electrode or on a layer comprising an electroactive material (e.g., an anode, a cathode). In certain other cases, the layer comprising the compound of formula (I) is deposited on a separator, a protective layer, an electrolyte layer, or another layer of an electrochemical cell.

A layer comprising the compound of formula (I) (or one or more of the compounds for formulas (IA)-(XXV)) as described herein, may be substantially crystalline. For instance, the layer comprising the compound of formula (I) (or one or more of the compounds for formulas (IA)-(XXV)), or the layer comprising a plurality of particles comprising the compound of formula (I) (or one or more of the compounds for formulas (IA)-(XXV)) as described herein, is between 1 wt.% and 100 wt.% crystalline. That is to say, the crystalline fraction of the compound of formula (I) comprised by the layer (or particles) is in the range of 1% to 100% based on the total weight of the compound of formula (I) comprised by the layer (or particles).For instance, the layer comprising the compound of formula (I) (or one or more of the compounds for formulas (IA)-(XXV)), or the layer comprising a plurality of particles comprising the compound of formula (I) (or one or more of the compounds for formulas (IA)-(XXV)) as described herein, is greater than or equal to 1 wt.%, greater than or equal to 2 wt.%, greater than or equal to 5 wt.%, greater than or equal to 10 wt.%, greater than or equal to 20 wt.%, greater than or equal to 25 wt.%, greater than or equal to 50 wt.%, greater than or equal to 75 wt.%, greater than or equal to 90 wt.%, greater than or equal to 95 wt.%, greater than or equal to 98 wt.%, greater than or equal to 99 wt.%, or greater than or equal to 99.9 wt.% crystalline. For instance, the layer comprising the compound of formula (I), or a plurality of particles comprising the compound of formula (I) as described herein, is less than or equal to 99.9 wt.%, less than or equal to 98 wt.%, less than or equal to 95 wt.%, less than or equal to 90 wt.%, less than or equal to 75 wt.%, less than or equal to 50 wt.%, less than or equal to 25 wt.%, less than or equal to 20 wt.%, less than or equal to 10 wt.%, less than or equal to 5 wt.%, or less than or equal to 2 wt.% crystalline.

For instance, a layer comprising the compound of formula (I) (or one or more of the compounds for formulas (IA)-(XXV)), or a plurality of particles comprising the compound of formula (I) (or one or more of the compounds for formulas (IA)-(XXV)) as described herein, is greater than or equal to 99.2 wt.%, greater than or equal to 99.5 wt.%, greater than or equal to 99.8 wt.%, or greater than or equal to 99.9 wt.% crystalline. In some cases, a layer comprising the compound of formula (I) (or one or more of the compounds for formulas (IA)-(XXV)), or a plurality of particles comprising the compound of formula (I) (or one or more of the compounds for formulas (IA)-(XXV)) as described herein, may be 100% crystalline. Combinations of the above referenced ranges are also possible (e.g., greater than or equal to 1 wt.% and less than or equal to 100 wt.%, greater than or equal to 50 wt.% and less than or equal to 100 wt.%).

The ionically conductive compound of formula (I) (or one or more of the compounds for formulas (IA)-(XXV)) may be present in a layer (e.g., a separator, a protective layer) in an amount of at least about 1 wt%, at least about 2 wt%, at least about 5 wt%, at least about 10 wt%, at least about 20 wt%, about 30 wt%, at least about 40 wt%, at least about 50 wt%, at least about 60 wt%, at least about 70 wt%, at least about 80 wt%, at least about 85 wt%, at least about 90 wt%, at least about 95 wt%, or at least about 98 wt% versus the total layer weight. The ionically conductive compound of formula (I) (or one or more of the compounds for formulas (IA)-(XXV)) may be present in the layer in an amount of less than or equal to about 100 wt%, less than or equal to about 99 wt%, less than or equal to about 98 wt%, less than or equal to about 95 wt%, less than or equal to about 90 wt%, less than or equal to about 85 wt%, less than or equal to about 80 wt%, less than or equal to about 70 wt%, less than or equal to about 60 wt%, less than or equal to about 50 wt%, less than or equal to about 40 wt%, less than or equal to about 30 wt%, less than or equal to about 20 wt%, less than or equal to about 10 wt%, less than or equal to about 5 wt%, or less than or equal to about 2 wt% versus the total layer weight. Combinations of the above-referenced ranges are also possible (e.g., at least about 1 wt% and less than or equal to about 100 wt%). Other ranges are also possible.

In some cases, the layer may comprise the ionically conductive compound of formula (I) (or one or more of the compounds for formulas (IA)-(XXV)) and one or more additional materials (e.g., polymers, metals, ceramics, ionically-conductive materials) as described in more detail below.

One or more layers of an electrochemical cell may comprise the ionically conductive compound of formula (I) (or one or more of the compounds for formulas (IA)-(XXV)). In some cases, the compound in the one or more layers is in the form of a plurality of particles. In some cases, the layer comprising the compound of formula (I) (or one or more of the compounds for formulas (II)A-(XXV)) is in direct contact with an electrode (e.g., with an electroactive material of the electrode).

The layer comprising the compound of formula (I) (or one or more of the compounds for formulas (IA)-(XXV)) may allow ions (e.g., electrochemically active ions, such as lithium ions) to pass through the layer but may substantially impede electrons from passing across the layer. By "substantially impedes", in this context, it is meant that the layer allows lithium ion flux greater than or equal to ten times greater than electron passage. Advantageously, particles and layers described herein (i.e., comprising the compound of formula (I)) may be capable of conducting specific cations (e.g., lithium cations) while not conducting certain anions (e.g., polysulfide anions) and/or may be capable of acting as a barrier to an electrolyte and/or a component in the electrolyte (e.g., a polysulfide species) for the electrode.

The layer (e.g., a separator, a protective layer, a solid electrolyte layer) comprising the ionically conductive compound of formula (I) (or one or more of the compounds for formulas (IA)-(XXV)) is ionically conductive. The average ionic conductivity of the layer comprising the ionically conductive compound of formula (I) (or one or more of the compounds for formulas (IA)-(XXV)) may be greater than or equal to 10⁻⁵ S/cm, greater than or equal to 10⁻⁴ S/cm, greater than or equal to 10⁻³ S/cm, greater than or equal to 10⁻² S/cm, greater than or equal to 10⁻¹ S/cm. The average ionic conductivity of the layer comprising the ionically conductive compound of formula (I) (or one or more of the compounds for formulas (IA)-(XXV)) may be less than or equal to 1 S/cm, less than or equal to 10⁻¹ S/cm, less than or equal to 10⁻² S/cm, less than or equal to 10⁻³ S/cm, or less than or equal to 10⁻⁴ S/cm. Combinations of the above-referenced ranges are also possible (e.g., an average ionic conductivity of greater than or equal to 10⁻¹ S/cm and less than or equal to 10⁻¹ S/cm). Other ion conductivities are also possible.

The average ion conductivity of the layer comprising the ionically conductive compound of formula (I) (or one or more of the compounds for formulas (IA)-(XXV)) can be determined using a conductivity bridge (i.e., an impedance measuring circuit) operating at 1 kHz by pressing the layer between two copper cylinders at a pressure of up to 4 metric tons/cm². The average ion conductivity (i.e., the inverse of the average resistivity) can be measured at 500 kg/cm² increments using a conductivity bridge (i.e., an impedance measuring circuit) operating at 1 kHz. The pressure may be increased until changes in average ion conductivity are no longer observed in the sample. Conductivity is usually measured at room temperature (usually 25°C).

As described herein, it may be desirable to determine if a layer including a compound described herein has advantageous properties as compared to a layer formed of other materials for particular electrochemical systems. Simple screening tests can be employed to help select between candidate materials. One simple screening test includes positioning a layer (e.g., comprising the compound of formula (I)) in an electrochemical cell, e.g., as a protective layer in a cell. The electrochemical cell may then undergo multiple discharge/charge cycles, and the electrochemical cell may be observed for whether inhibitory or other destructive behavior occurs compared to that in a control system. If inhibitory or other destructive behavior is observed during cycling of the cell, as compared to the control system, it may be indicative of degradation or other failure of the layer in question, within the assembled electrochemical cell. It is also possible to evaluate the electrical conductivity and/or ion conductivity of the layer using methods described herein and known to one of ordinary skill in the art. The measured values may be compared to select between candidate materials and may be used for comparison with reference material(s) in the control (i.e. materials not comprising the compounds of formula (I) described herein).

It may be desirable to test the layer (e.g., a layer comprising the compound of formula (I)) for swelling in the presence of a particular electrolyte or solvent to be used in an electrochemical cell. A simple screening test may involve, for example, pieces of the layer that are weighed and then placed in a solvent or an electrolyte to be used in an electrochemical cell for any suitable amount of time (e.g., 24 hours). The percent difference in weight (or volume) of the layer before and after the addition of a solvent or an electrolyte may determine the amount of swelling of the layer in the presence of the electrolyte or the solvent.

Another simple screening test may involve determining the stability (i.e., integrity) of a layer (e.g., a layer comprising the compound of formula (I)) to polysulfides. Briefly, the layer may be exposed to a polysulfide solution/mixture for any suitable amount of time (e.g., 72 hours) and the percent weight loss of the layer after exposure to the polysulfide solution may be determined by calculating the difference in weight of the layer before and after the exposure. For example, the percent weight loss of the layer after exposure to the polysulfide solution may be less than or equal to 15 wt.%, less than or equal to 10 wt.%, less than or equal to 5 wt.%, less than or equal to 2 wt.%, less than or equal to 1 wt.%, or less than or equal to 0.5 wt.%. The percent weight loss of the layer after exposure to the polysulfide solution may be greater than or equal to 0.1 wt.%, greater than or equal to 0.5 wt.%, greater than or equal to 1 wt.%, greater than or equal to 2 wt.%, greater than or equal to 5 wt.%, or greater than or equal to 10 wt.%. Combinations of the above-referenced ranges are also possible (e.g., greater than or equal to 0.1 wt.% and less than or equal to 5 wt.%).

Yet another simple screening test may involve determining the stability (i.e. integrity) of a layer (e.g., a layer comprising the compound of formula (I)) to metallic lithium. Briefly, a layer or a pellet comprising the compound of formula (I) (or one or more of the compounds for formulas (IA)-(XXV)) may be placed between two lithium metal foils in an electrochemical cell and one can measure the change in impedance over any suitable amount of time (e.g., 72 hours). In general, the lower impedance may result in a greater stability of the layer to metallic lithium.

The above described screening tests may also be adapted and used to determine the properties of individual components of the layer (e.g., a plurality of particles comprising the compound of formula (I)).

Turning now to the figures, non-limiting examples of the current disclosure are described in more detail below. It should be understood that while certain layers depicted in the figures are disposed directly on one another, other intermediate layers may also be present between the depicted layers in certain cases. Accordingly, as used herein, when a layer is referred to as being "disposed on", "deposited on", or "on" another layer, it can either be directly disposed on, deposited onto, or on the layer, or an intervening layer may also be present. In contrast, a layer that is "directly disposed on", "in contact with", "directly deposited on", or "directly on" another layer indicates that no intervening layer is present.

The figures are schematic and are not intended to be drawn to scale. In the figures, each identical or nearly identical component illustrated is typically represented by a single numeral. For purposes of clarity, not every component is labeled in every figure, nor is every component of each example of the invention shown where illustration is not necessary to allow those of ordinary skill in the art to understand the invention. In the figures:
FIGs. 1A-1E are schematics of articles incorporating ionically conductive compounds;
FIGs. 2A-2B show XRD spectral plots of Li₂₁SiP₂Si_{7.5} and Li₂₁P₃S₁₈;
FIGs. 3A-3D show XRD spectral plots of Li₂₂FeP₂S₁₈, Li₁₈FeP₂S₁₆, Li₁₄FeP₂S₁₄, and Li₁₀FeP₂S₁₂;
FIGs. 4A-4B show plots of conductivity (in S/cm) as a function of x for a compound having a formula as in LiₓFeP₂S_{7+x/2} and a compound having a formula as in LiₓSiP₂S_{7+x/2};
FIGs. 5A-5B show XRD spectral plots of Li₂₁SiP₂S_{17.5} and Li₁₄FeP₂S₁₄;
FIG. 6 shows a plot of electronic impedance spectroscopy (EIS) measurements of Li₁₄FeP₂S₁₄;
FIGs. 7A-7D show XRD spectral plots of Li₁₄FeP₂S₁₄, Li₁₃FeP₂S₁₃Cl, Li₁₂FeP₂S₁₂Cl₂, and Li₁₁FeP₂S₁₁Cl₃;
FIG. 8 shows a plot of conductivity (in S/cm) as a function of x for a compound having a formula LiₓFeP₂S_{7+x/2}, a compound having a formula LiₓSiP₂S_{7+x/2}, and a compound having a formula as in LiₓFeP₂S_{7+x/2} doped with a halide;
FIG. 9 shows a plot of electronic impedance spectroscopy (EIS) measurements of Li₁₁FeP₂S₁₁Cl₃; and
FIGs. 10A-10C show XRD spectral plots of Li₁₄FeP₂S₁₄, Li₁₃FeP₂S₁₃Cl, and Li₁₃FeP₂S₁₃Br.

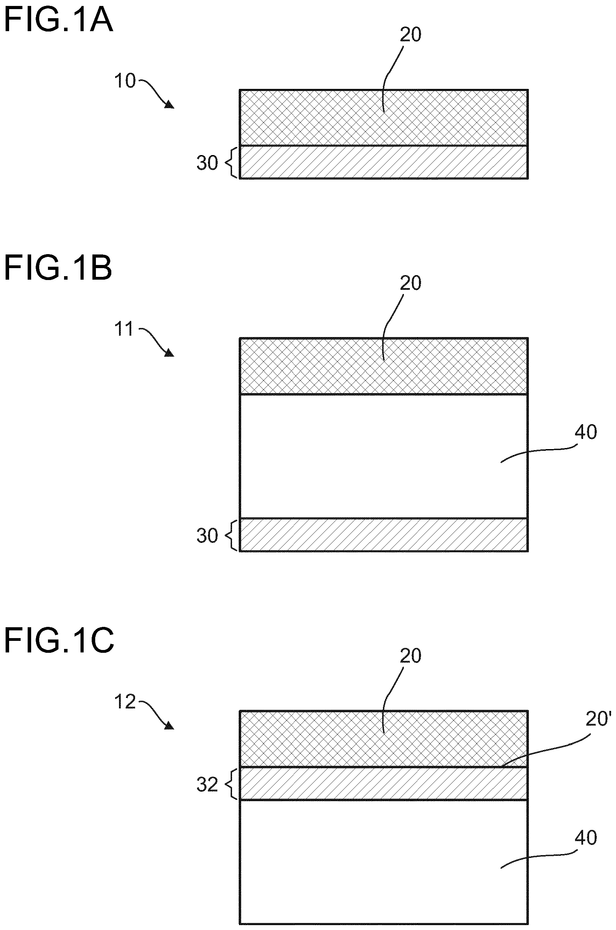

FIGs. 1A-E show examples of an article that can be incorporated into an electrochemical cell.

In some cases, an article or an electrochemical cell comprises a separator comprising the ionically conductive compound of formula (I) (or one or more of the compounds for formulas (IA)-(XXV)) and/or a plurality of particles comprising the ionically conductive compound of formula (I) (or one or more of the compounds for formulas (IA)-(XXV)). One or more ionically conductive compounds of formula (I) as described herein may be incorporated into a separator.

Generally, a separator may be interposed between a cathode and an anode in an electrochemical cell. The separator separates or insulates the anode and the cathode from each other preventing short circuiting, and permits the transport of ions between the anode and the cathode. The separator may be porous, wherein the pores may be partially or substantially filled with electrolyte. Separators may be supplied as porous free standing films which are interleaved with the anodes and the cathodes during the fabrication of cells. Alternatively, the separator layer may be applied directly to the surface of one of the electrodes.

FIG. 1A shows an example of an article that can be incorporated into an electrochemical cell. Exemplary article 10 includes an electrode 20 (e.g., an anode or a cathode) that comprises an electroactive material, and a separator 30 adjacent the electrode 20. Herein, the separator 30 comprises the ionically conductive compound of formula (I) (or one or more of the compounds for formulas (IA)-(XXV)) and/or a plurality of particles comprising the ionically conductive compound of formula (I) (or one or more of the compounds for formulas (IA)-(XXV)). For example, the ionically conductive compound is directly deposited on at least a portion of a surface of the separator, or the ionically conductive compound is incorporated into the separator. However, other materials can also be included in the separator. The electrode may include an electroactive material (e.g., an anode active electrode material, a cathode active electrode material), described in more detail below.

In some cases, an article or an electrochemical cell comprises an electrolyte, and, a separator is located between the electrolyte and an electrode (e.g., an anode, a cathode). For example, as illustrated in FIG. 1B, exemplary article 11 includes an electrode 20 (e.g., an anode or a cathode) that comprises an electroactive material, an electrolyte 40 adjacent the electrode 20, and separator 30 adjacent the electrolyte 40. Herein, the separator 30 comprises the ionically conductive compound of formula (I) (or one or more of the compounds for formulas (IA)-(XXV)) and/or a plurality of particles comprising the ionically conductive compound of formula (I) (or one or more of the compounds for formulas (IA)-(XXV)). However, other materials can also be included in the separator. The electrode may include an electroactive material (e.g., an anode active electrode material, a cathode active electrode material), described in more detail below.

The electrolyte can function as a medium for the storage and transport of ions. The electrolyte may have any suitable configuration such as a liquid electrolyte, a solid electrolyte, or a gel polymer electrolyte, as described in more detail herein.

Generally, the separator may comprise a polymeric material (e.g., polymeric material that does or does not swell upon exposure to electrolyte). The separator may include an ionically conductive compound (or plurality of particles comprising the compound) of formula (I) (or one or more of the compounds for formulas (IA)-(XXV)). For example, the ionically conductive compound is directly deposited on at least a portion of a surface of the separator, or the ionically conductive compound is incorporated into the separator.

The separator is configured to inhibit (e.g., prevent) physical contact between a first electrode and a second electrode, which could result in short circuiting of the electrochemical cell. The separator is configured to be substantially electronically non-conductive, which can inhibit the degree to which the separator causes short circuiting of the electrochemical cell. All or portions of the separator can be formed of a material with a bulk electronic resistivity of greater than or equal to 10⁴ Ohm*m, greater than or equal to 10⁵ Ohm*m, greater than or equal to 10¹⁰ Ohm*m, greater than or equal to 10¹⁵ Ohm*m, or greater than or equal to 10²⁰ Ohm*m. The bulk electronic resistivity may be less than or equal to 10⁵⁰ Ohm*m. Bulk electronic resistivity is usually measured at room temperature (usually 25°C).

The separator can be a solid. The separator may be porous to allow an electrolyte solvent to pass through it. The separator may be in the form of a gel. In some cases, the separator does not substantially include a solvent (e.g. in case of a separator in the form of a gel), except for solvent that may pass through or reside in the pores of the separator.

The porosity of the separator can be greater than or equal to 30 vol%, greater than or equal to 40 vol%, greater than or equal to 50%, greater than or equal to 60 vol%, greater than or equal to 70 vol%, greater than or equal to 80 vol%, or greater than or equal to 90 vol%. The porosity can be less than or equal to 90 vol%, less than or equal to 80 vol%, less than or equal to 70 vol%, less than or equal to 60 vol%, less than or equal to 50 vol%, less than or equal to 40 vol%, or less than or equal to 30 vol%. Other porosities are also possible. Combinations of the above-noted ranges are also possible. Porosity as used herein refers to the fraction of a volume of voids in a layer divided by the total volume of the layer and is measured using mercury porosimetry.

Generally, a separator can be made of a variety of materials. In certain cases, the separator comprises the ionically conductive compound of formula (I) (or one or more of the compounds for formulas (IA)-(XXV)), as in the examples shown in figs. 1A and 1B. Additionally or alternatively, the separator may comprise any suitable separator material such as a polymer material.

Examples of suitable polymer materials include, but are not limited to, polyolefins (e.g., polyethylenes, poly(butene-1), poly(n-pentene-2), polypropylene, polytetrafluoroethylene), polyamines (e.g., poly(ethylene imine) and polypropylene imine (PPI)); polyamides (e.g., polyamide (Nylon), poly(ε-caprolactam) (Nylon 6), poly(hexamethylene adipamide) (Nylon 66)), polyimides (e.g., polyimide, polynitrile, and poly(pyromellitimide-1,4-diphenyl ether) (Kapton®) (NOMEX®) (KEVLAR®)); polyether ether ketone (PEEK); vinyl polymers (e.g., polyacrylamide, poly(2-vinyl pyridine), poly(N-vinylpyrrolidone), poly(methylcyanoacrylate), poly(ethylcyanoacrylate), poly(butylcyanoacrylate), poly(isobutylcyanoacrylate), poly(vinyl acetate), poly (vinyl alcohol), poly(vinyl chloride), poly(vinyl fluoride), poly(2-vinyl pyridine), vinyl polymer, polychlorotrifluoro ethylene, and poly(isohexylcynaoacrylate)); polyacetals; polyesters (e.g., polycarbonate, polybutylene terephthalate, polyhydroxybutyrate); polyethers (poly(ethylene oxide) (PEO), poly(propylene oxide) (PPO), poly(tetramethylene oxide) (PTMO)); vinylidene polymers (e.g., polyisobutylene, poly(methyl styrene), poly(methylmethacrylate) (PMMA), poly(vinylidene chloride), and poly(vinylidene fluoride)); polyaramides (e.g., poly(imino-1,3-phenylene iminoisophthaloyl) and poly(imino-1,4-phenylene iminoterephthaloyl)); polyheteroaromatic compounds (e.g., polybenzimidazole (PBI), polybenzobisoxazole (PBO) and polybenzobisthiazole (PBT)); polyheterocyclic compounds (e.g., polypyrrole); polyurethanes; phenolic polymers (e.g., phenol-formaldehyde); polyalkynes (e.g., polyacetylene); polydienes (e.g., 1,2-polybutadiene, cis or trans-1,4-polybutadiene); polysiloxanes (e.g., poly(dimethylsiloxane) (PDMS), poly(diethylsiloxane) (PDES), polydiphenylsiloxane (PDPS), and polymethylphenylsiloxane (PMPS)); and inorganic polymers (e.g., polyphosphazene, polyphosphonate, polysilanes, polysilazanes). The polymer may be selected from poly(n-pentene-2), polypropylene, polytetrafluoroethylene, polyamides (e.g., polyamide (Nylon), poly(ε-caprolactam) (Nylon 6), poly(hexamethylene adipamide) (Nylon 66)), polyimides (e.g., polynitrile, and poly(pyromellitimide-1,4-diphenyl ether) (Kapton®) (NOMEX®) (KEVLAR®)), polyether ether ketone (PEEK), and combinations thereof.

The mechanical and electronic properties (e.g., conductivity, resistivity) of these polymers are known. Accordingly, those of ordinary skill in the art can choose suitable materials based on their mechanical and/or electronic properties (e.g., ionic and/or electronic conductivity/resistivity), and/or can modify such polymers to be ionically conducting (e.g., conductive towards single ions) based on knowledge in the art, in combination with the description herein. For example, the polymer materials listed above and herein may further comprise salts, for example, lithium salts (e.g., LiSCN, LiBr, Lil, LiClO₄, LiAsF₆, LiSO₃CF₃, LiSO₃CH₃, LiBF₄, LiB(Ph)₄, LiPF₆, LiC(SO₂CF₃)₃, and LiN(SO₂CF₃)₂), and/or the ionically conductive compound of formula (I) to enhance ionic conductivity, if desired.

The separator may be porous. The separator pore size may be less than 5 µm. The pore size may be less than or equal to 5 µm, less than or equal to 3 µm, less than or equal to 2 µm, less than or equal to 1 µm, less than or equal to 500 nm, less than or equal to 300 nm, less than or equal to 100 nm, or less than or equal to 50 nm. The pore size may be greater than or equal to 50 nm, greater than or equal to 100 nm, greater than or equal to 300 nm, greater than or equal to 500 nm, or greater than or equal to 1 µm. Other values are also possible. Combinations of the above-noted ranges are also possible (e.g., a pore size of less than 300 nm and greater than or equal to 100 nm). In certain cases, the separator may be substantially non-porous.

The separator may have any suitable thickness. The separator may have a thickness of greater than or equal to 500 nm, greater than or equal to 1 µm, greater than or equal to 5 µm, greater than or equal to 10 µm, greater than or equal to 15 µm, greater than or equal to 20 µm, greater than or equal to 25 µm, greater than or equal to 30 µm, greater than or equal to 40 µm, greater than or equal to 50 µm, greater than or equal to 60 µm, greater than or equal to 70 µm, greater than or equal to 80 µm, greater than or equal to 90 µm, greater than or equal to 100 µm, greater than or equal to 120 µm, greater than or equal to 140 µm, greater than or equal to 160 µm, or greater than or equal to 180 µm. The thickness of the separator may be less than or equal to 200 µm, less than or equal to 180 µm, less than or equal to 160 µm, less than or equal to 140 µm, less than or equal to 120 µm, less than or equal to 100 µm, less than or equal to 90 µm, less than or equal to 80 µm, less than or equal to 70 µm, less than or equal to 60 µm, less than or equal to 50 µm, less than or equal to 40 µm, less than or equal to 30 µm, less than or equal to 20 µm, less than or equal to 10 µm, or less than or equal to 5 µm. Other values are also possible. Combinations of the above-noted ranges are also possible (e.g., greater than or equal to 500 nm and less than or equal to 200 µm, greater than or equal to 1 µm and less than or equal to 50 µm). Other ranges are also possible.

The average thickness of the separator or other layers described herein is determined by scanning electron microscopy (SEM). Briefly, the layer can be imaged along a cross-section (e.g., by cutting the layer) after formation and the image may be acquired by SEM. The average thickness may be determined by taking an average of the thickness of the sample at several different locations along the cross-section (e.g., at least 10 locations). Those skilled in the art would be capable of selecting an appropriate magnification for imaging the sample.

In certain cases, an article or an electrochemical cell comprises a protective layer comprising the ionically conductive compound of formula (I) (or one or more of the compounds for formulas (IA)-(XXV)) and/or a plurality of particles comprising the ionically conductive compound of formula (I) (or one or more of the compounds for formulas (IA)-(XXV)). One or more ionically conductive compounds of formula (I) as described herein may be incorporated into a protective layer.

A protective layer that incorporates the ionically conductive compounds described herein may be substantially impermeable to the electrolyte. The protective layer may be configured such that it is unswollen in the presence of the electrolyte. However, in other cases, at least a portion of the protective layer can be swollen in the presence of the electrolyte. The protective layer may be substantially non-porous. The protective layer may be positioned directly adjacent an electrode, or adjacent the electrode via an intervening layer (e.g., another protective layer).

Referring now to FIG. 1C, exemplary article 12 comprises electrode 20, a protective layer 32 disposed on or adjacent at least a portion of electrode active surface 20', and an optional electrolyte 40. A second protective layer (not shown in FIG. 1C) adjacent protective layer 32 may be present. At least one or both of protective layer 32 and the second protective layer includes an ion-conductive layer comprising the ionically conductive compound of formula (I). Other configurations are also possible.

Generally, a protective layer can be made of a variety of materials. In certain cases, the protective layer comprises the ionically conductive compound of formula (I) (or one or more of the compounds for formulas (IA)-(XXV)) as in the example shown in fig. 1C. Additionally or alternatively, the protective layer may comprise any suitable material. Additionally, where more than one protective layer may be present, each of the layers may independently be formed of one or more materials described herein. For instance, the protective layer comprises a ceramic and/or a glass (e.g., an ion conducting ceramic/glass conductive to lithium ions). Suitable glasses and/or ceramics include, but are not limited to, those that may be characterized as containing a "modifier" portion and a "network" portion, as known in the art. The modifier may include a metal oxide of the metal ion conductive in the glass or ceramic. The network portion may include a metal chalcogenide such as, for example, a metal oxide or sulfide. For lithium metal and other lithium-containing electrodes, an ion conductive layer may be lithiated or contain lithium to allow passage of lithium ions across it. Ion conductive layers may include layers comprising a material such as lithium nitrides, lithium silicates, lithium borates, lithium aluminates, lithium phosphates, lithium phosphorus oxynitrides, lithium silicosulfides, lithium germanosulfides, lithium oxides (e.g., Li₂O, Li₂O₂, LiO, LiO₂ and any kind of non-stoichiometric lithium oxides, LiRO₂, where R is a rare earth metal), lithium lanthanum oxides, lithium lanthanum zirconium oxides, lithium titanium oxides, lithium borosulfides, lithium aluminosulfides, lithium phosphates, and lithium phosphosulfides, and combinations thereof. The selection of the material will be dependent on a number of factors including, but not limited to, the properties of electrolyte, anode, and cathode used in the cell.

In other cases, the protective layer is a non-electroactive metal layer. The non-electroactive metal layer may comprise a metal alloy layer, e.g., a lithiated metal layer especially in the case where a lithium anode is employed. The lithium content of the metal alloy layer may vary from 0.5% by weight to 20% by weight, depending, for example, on the specific choice of metal, the desired lithium ion conductivity, and the desired flexibility of the metal alloy layer. Suitable metals for use in the ion conductive material include, but are not limited to, Al, Zn, Mg, Ag, Pb, Cd, Bi, Ga, In, Ge, Sb, As, and Sn. Sometimes, a combination of metals, such as the ones listed above, may be used in an ion conductive material.

The protective layer may have any suitable thickness. The protective layer described herein may have a thickness of greater than or equal to 1 nm, greater than or equal to 2 nm, greater than or equal to 5 nm, greater than or equal to 10 nm, greater than or equal to 20 nm, greater than or equal to 50 nm, greater than or equal to 100 nm, greater than or equal to 500 nm, greater than or equal to 1 µm, greater than or equal to 2 µm, or greater than or equal to 5 µm. The protective layer may have a thickness of less than or equal to 10 µm, less than or equal to 5 µm, less than or equal to 2 µm, less than or equal to 1 µm, less than or equal to 500 nm, less than or equal to 100 nm, less than or equal to 50 nm, less than or equal to 20 nm, less than or equal to 10 nm, less than or equal to 5 nm, or less than or equal to 2 nm. Other values are also possible. Combinations of the above-noted ranges are also possible (e.g., greater than or equal to 1 nm and less than or equal to 10 µm, greater than or equal to 500 nm and less than or equal to 2 µm). Other ranges are also possible.
in certain cases, the protective layer is a polymer layer or a layer that comprises a polymeric material. The ionically conductive compound of formula (I) (or one or more of the compounds for formulas (IA)-(XXV)) may be incorporated into the polymer layer. Suitable polymer layers for use in electrochemical cells may be, for example, highly conductive towards lithium and minimally conductive towards electrons. Such polymers may include, for example, ionically conductive polymers, sulfonated polymers, and hydrocarbon polymers. The selection of the polymer will be dependent upon a number of factors including the properties of electrolyte, anode, and cathode used in the cell. Suitable ionically conductive polymers include, e.g., ionically conductive polymers known to be useful in solid polymer electrolytes and gel polymer electrolytes for lithium electrochemical cells, such as, for example, polyethylene oxides. Suitable sulfonated polymers include, e.g., sulfonated siloxane polymers, sulfonated polystyrene-ethylene-butylene polymers, and sulfonated polystyrene polymers. Suitable hydrocarbon polymers include, e.g., ethylenepropylene polymers, polystyrene polymers, and the like.

The polymer layer may comprise a crosslinked polymer. Polymer layers can include crosslinked polymer materials formed from the polymerization of monomers such as alkyl acrylates, glycol acrylates, polyglycol acrylates, polyglycol vinyl ethers, and polyglycol divinyl ethers. For example, one such crosslinked polymer material is polydivinyl poly(ethylene glycol). The crosslinked polymer materials may further comprise salts, for example, lithium salts, to enhance ionic conductivity. Other classes polymers that may be suitable for use in a polymer layer include, but are not limited to, polyamines (e.g., poly(ethylene imine) and polypropylene imine (PPI)); polyamides (e.g., polyamide (Nylon), poly(ε-caprolactam) (Nylon 6), poly(hexamethylene adipamide) (Nylon 66)), polyimides (e.g., polyimide, polynitrile, and poly(pyromellitimide-1,4-diphenyl ether) (Kapton)); vinyl polymers (e.g., polyacrylamide, poly(2-vinyl pyridine), poly(N-vinylpyrrolidone), poly(methylcyanoacrylate), poly(ethylcyanoacrylate), poly(butylcyanoacrylate), poly(isobutylcyanoacrylate), poly(vinyl acetate), poly (vinyl alcohol), poly(vinyl chloride), poly(vinyl fluoride), poly(2-vinyl pyridine), vinyl polymer, polychlorotrifluoro ethylene, and poly(isohexylcynaoacrylate)); polyacetals; polyolefins (e.g., poly(butene-1), poly(n-pentene-2), polypropylene, polytetrafluoroethylene); polyesters (e.g., polycarbonate, polybutylene terephthalate, polyhydroxybutyrate); polyethers (poly(ethylene oxide) (PEO), poly(propylene oxide) (PPO), poly(tetramethylene oxide) (PTMO)); vinylidene polymers (e.g., polyisobutylene, poly(methyl styrene), poly(methylmethacrylate) (PMMA), poly(vinylidene chloride), and poly(vinylidene fluoride)); polyaramides (e.g., poly(imino-1,3-phenylene iminoisophthaloyl) and poly(imino-1,4-phenylene iminoterephthaloyl)); polyheteroaromatic compounds (e.g., polybenzimidazole (PBI), polybenzobisoxazole (PBO) and polybenzobisthiazole (PBT)); polyheterocyclic compounds (e.g., polypyrrole); polyurethanes; phenolic polymers (e.g., phenol-formaldehyde); polyalkynes (e.g., polyacetylene); polydienes (e.g., 1,2-polybutadiene, cis or trans-1,4-polybutadiene); polysiloxanes (e.g., poly(dimethylsiloxane) (PDMS), poly(diethylsiloxane) (PDES), polydiphenylsiloxane (PDPS), and polymethylphenylsiloxane (PMPS)); and inorganic polymers (e.g., polyphosphazene, polyphosphonate, polysilanes, polysilazanes). The mechanical and electronic properties (e.g., conductivity, resistivity) of these polymers are known. Accordingly, those of ordinary skill in the art can choose suitable polymers for use in lithium batteries, e.g., based on their mechanical and/or electronic properties (e.g., ionic and/or electronic conductivity), and/or can modify such polymers to be ionically conducting (e.g., conductive towards single ions) and/or electronically conducting based on knowledge in the art, in combination with the description herein. For example, the polymer materials listed above may further comprise salts, for example, lithium salts (e.g., LiSCN, LiBr, Lil, LiClO₄, LiAsF₆, LiSO₃CF₃, LiSO₃CH₃, LiBF₄, LiB(Ph)₄, LiPF₆, LiC(SO₂CF₃)₃, and LiN(SO₂CF₃)₂), to enhance ionic conductivity.

The polymeric materials can be selected or formulated to have suitable physical/mechanical characteristics by, for example, tailoring the amounts of components of polymer blends, adjusting the degree of cross-linking (if any), etc.

In certain cases, the protective layer is a composite layer comprising a polymer material and an ionically conductive compound described herein (e.g., an ionically conductive compound of formula (I)). Such a composite layer may be formed by any suitable method including, for example: co-spraying (e.g., via aerosol deposition) the polymer material and the ionically conductive compound of formula (I) (or one or more of the compounds for formulas (IA)-(XXV)) onto a substrate; casting the composite layer from a slurry, solution, or suspension comprising the polymer material and the ionically conductive compound of formula (I) (or one or more of the compounds for formulas (IA)-(XXV)); pressing particles comprising the ionically conductive compound of formula (I) (or one or more of the compounds for formulas (IA)-(XXV)) into a polymer layer comprising a polymer material; and/or filling pores of a layer comprising the ionically conductive compound of formula (I) (or one or more of the compounds for formulas (IA)-(XXV)) with a polymer material. Other methods for forming composite layers are also possible and are generally known in the art. The composite layer may be used for any suitable component of an electrochemical cell described herein, such as a protective layer. These and other methods for forming such composite layers are described in more detail in U.S. Patent Publication No. US 2016/0344067, filed May 20, 2016 and entitled "Protective Layers for Electrodes," which is incorporated herein by reference in its entirety.

In certain cases, an article or an electrochemical cell comprises an electrolyte (e.g., electrolyte 40 in FIGs. 1B-1C). The electrolytes used in electrochemical or battery cells function as a medium for the storage and transport of ions, and in the special case of solid electrolytes and gel electrolytes, these materials may additionally function as a separator between the anode and the cathode. Any suitable liquid, solid, or gel material capable of storing and transporting ions may be used, so long as the material facilitates the transport of ions (e.g., lithium ions) between the anode and the cathode. The electrolyte is substantially electronically non-conductive to prevent short circuiting between the anode and the cathode. The electrolyte may comprise a non-solid electrolyte.

The electrolyte may be in the form of a layer having a particular thickness. An electrolyte layer may have a thickness of, greater than or equal to 50 nm, greater than or equal to 100 nm, greater than or equal to 200 nm, greater than or equal to 500 nm, greater than or equal to 1 µm, greater than or equal to 5 µm, greater than or equal to 10 µm, greater than or equal to 15 µm, greater than or equal to 20 µm, greater than or equal to 25 µm, greater than or equal to 30 µm, greater than or equal to 40 µm, greater than or equal to 50 µm, greater than or equal to 70 µm, greater than or equal to 100 µm, greater than or equal to 200 µm, greater than or equal to 500 µm, or greater than or equal to 1 mm. The thickness of the electrolyte layer may be less than or equal to 1 mm, less than or equal to 500 µm, less than or equal to 200 µm, less than or equal to 100 µm, less than or equal to 70 µm, less than or equal to 50 µm, less than or equal to 40 µm, less than or equal to 30 µm, less than or equal to 20 µm, less than or equal to 10 µm, less than or equal to 50 µm, less than or equal to 40 µm, less than or equal to 30 µm, less than or equal to 25 µm, less than or equal to 20 µm, less than or equal to 15 µm, less than or equal to 10 µm, less than or equal to 5 µm, less than or equal to 1 µm, less than or equal to 500 nm, less than or equal to 200 nm, or less than or equal to 100 nm. Other values are also possible. Combinations of the above-noted ranges are also possible.

The electrolyte may include a non-aqueous electrolyte. Suitable non-aqueous electrolytes may include organic electrolytes such as liquid electrolytes, gel polymer electrolytes, and solid polymer electrolytes. These electrolytes may optionally include one or more ionic electrolyte salts (e.g., to provide or enhance ionic conductivity) as described herein. Examples of useful non-aqueous liquid electrolyte solvents include, but are not limited to, non-aqueous organic solvents, such as, for example, N-methyl acetamide, acetonitrile, acetals, ketals, esters (e.g., esters of carbonic acid), carbonates (e.g., ethylene carbonate, dimethyl carbonate), sulfones, sulfites, sulfolanes, suflonimidies (e.g., bis(trifluoromethane)sulfonimide lithium salt). aliphatic ethers, acyclic ethers, cyclic ethers, glymes, polyethers, phosphate esters (e.g., hexafluorophosphate), siloxanes, dioxolanes, N-alkylpyrrolidones, nitrate containing compounds, substituted forms of the foregoing, and blends thereof. Examples of acyclic ethers that may be used include, but are not limited to, diethyl ether, dipropyl ether, dibutyl ether, dimethoxymethane, trimethoxymethane, 1,2-dimethoxyethane, diethoxyethane, 1,2-dimethoxypropane, and 1,3-dimethoxypropane. Examples of cyclic ethers that may be used include, but are not limited to, tetrahydrofuran, tetrahydropyran, 2-methyltetrahydrofuran, 1,4-dioxane, 1,3-dioxolane, and trioxane. Examples of polyethers that may be used include, but are not limited to, diethylene glycol dimethyl ether (diglyme), triethylene glycol dimethyl ether (triglyme), tetraethylene glycol dimethyl ether (tetraglyme), higher glymes, ethylene glycol divinyl ether, diethylene glycol divinyl ether, triethylene glycol divinyl ether, dipropylene glycol dimethyl ether, and butylene glycol ethers. Examples of sulfones that may be used include, but are not limited to, sulfolane, 3-methyl sulfolane, and 3-sulfolene. Fluorinated derivatives of the foregoing are also useful as liquid electrolyte solvents.

In some cases, mixtures of the solvents described herein may also be used. For example, mixtures of solvents are selected from the group consisting of 1,3-dioxolane and dimethoxyethane, 1,3-dioxolane and diethyleneglycol dimethyl ether, 1,3-dioxolane and triethyleneglycol dimethyl ether, and 1,3-dioxolane and sulfolane. The weight ratio of the two solvents in the mixtures may range from 5 wt.% : 95 wt.% to 95 wt.% : 5 wt.%.

Non-limiting examples of suitable gel polymer electrolytes include polyethylene oxides, polypropylene oxides, polyacrylonitriles, polysiloxanes, polyimides, polyphosphazenes, polyethers, sulfonated polyimides, perfluorinated membranes (NAFION resins), polydivinyl polyethylene glycols, polyethylene glycol diacrylates, polyethylene glycol dimethacrylates, derivatives of the foregoing, copolymers of the foregoing, cross-linked and network structures of the foregoing, and blends of the foregoing.

The non-aqueous electrolyte may comprise at least one lithium salt. For example, the at least one lithium salt is selected from the group consisting of LiNO₃, LiPF₆, LiBF₄, LiClO₄, LiAsF₆, Li₂SiF₆, LiSbF₆, LiAlCl₄, lithium bis-oxalatoborate, LiCF₃SO₃, LiN(SO₂F)₂, LiC(CₙF₂ₙ₊₁SO₂)₃, wherein n is an integer in the range of from 1 to 20, and (CₙF₂ₙ₊₁SO₂)ₘQLi with n being an integer in the range of from 1 to 20, m being 1 when Q is selected from oxygen or sulfur, m being 2 when X is selected from nitrogen or phosphorus, and m being 3 when Q is selected from carbon or silicon.

In some cases, the electrolyte is a solid electrolyte layer comprising the ionically conductive compound of formula (I) (or one or more of the compounds for formulas (IA)-(XXV)) and/or a plurality of particles comprising the ionically conductive compound of formula (I) (or one or more of the compounds for formulas (IA)-(XXV)). One or more ionically conductive compounds of formula (I) as described herein may be incorporated into a solid electrolyte layer.

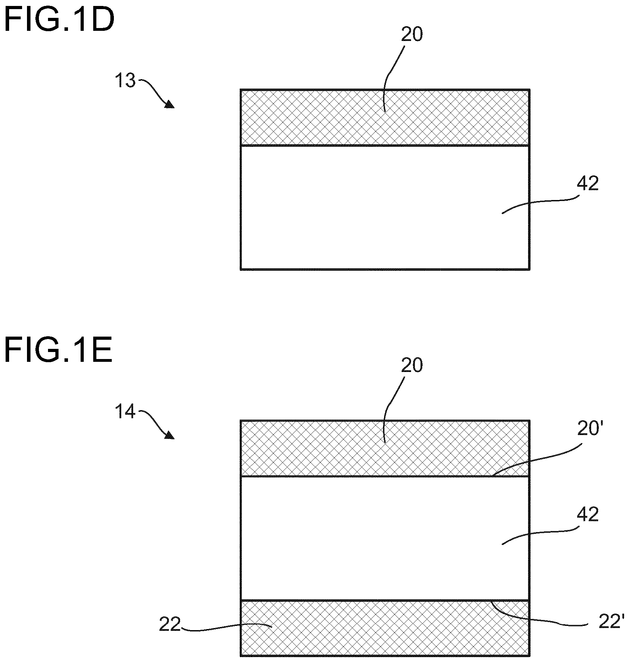

Referring to FIG. 1D, exemplary article 13 comprises electrode 20 (e.g., an anode or a cathode) and a solid electrolyte 42 in direct contact with electrode 20. Referring to FIG. 1E, exemplary article 14 comprises electrode 20 (e.g., a cathode) and electrode 22 (e.g., an anode) in direct contact with solid electrolyte 42 at a first electrode surface 20' and a second electrode surface 22', respectively. The solid electrolyte may replace an organic or non-aqueous liquid electrolyte in an electrochemical cell.

Generally, a solid electrolyte can be made of a variety of materials. In certain cases, the solid electrolyte comprises the ionically conductive compound of formula (I) (or one or more of the compounds for formulas (IA)-(XXV)), as in the examples shown in figs. 1D and 1E. Additionally or alternatively, the solid electrolyte may comprise any suitable material such as a polymer material. Non-limiting examples of materials that may be suitable for a solid polymer electrolyte include polyethers, polyethylene oxides, polypropylene oxides, polyimides, polyphosphazenes, polyacrylonitriles, polysiloxanes, derivatives of the foregoing, copolymers of the foregoing, cross-linked and network structures of the foregoing, and blends of the foregoing.

A solid electrolyte layer (e.g., a solid electrolyte layer comprising the ionically conductive compound of formula (I)) may have any suitable thickness. For example, the solid electrolyte layer has a thickness of greater than or equal to 50 nm, greater than or equal to 100 nm, greater than or equal to 200 nm, greater than or equal to 500 nm, greater than or equal to 1 µm, greater than or equal to 5 µm, greater than or equal to 10 µm, greater than or equal to 15 µm, or greater than or equal to 20 µm. For example, the thickness of the solid electrolyte layer is less than or equal to 25 µm, less than or equal to 20 µm, less than or equal to 10 µm, less than or equal to 5 µm , less than or equal to 1 µm, less than or equal to 500 nm, less than or equal to 200 nm, or less than or equal to 100 nm. Other values are also possible. Combinations of the above-noted ranges are also possible (e.g., greater than or equal to 50 nm and less than or equal to 25 µm, greater than or equal to 5 µm and less than or equal to 25 µm). Other ranges are also possible.

An electrode described herein may be a cathode (e.g., a cathode of an electrochemical cell). In certain cases, an electrode such as a cathode comprises the compound of formula (I) (or one or more of the compounds for formulas (IA)-(XXV)). For example, a layer comprising the compound of formula (I) (or one or more of the compounds for formulas (IA)-(XXV)) is deposited on a cathode, as described herein, or the compound of formula (I) (or one or more of the compounds for formulas (IA)-(XXV)) is incorporated into the cathode (e.g., by mixing with a cathode active electrode material prior to the formation of the cathode).

In certain cases, the electroactive material in the cathode comprises the compound of formula (I) (or one or more of the compounds for formulas (IA)-(XXV)). That is, the ionically conductive compound of formula (I) (or one or more of the compounds for formulas (IA)-(XXV)) may be the active electrode species of the cathode. Herein, the compound of formula (I) (or one or more of the compounds for formulas (IA)-(XXV)) is a lithium intercalation compound (e.g., a compound that is capable of reversibly inserting lithium ions at lattice sites and/or interstitial sites). The cathode may be an intercalation electrode comprising the ionically conductive compound of formula (I) (or one or more of the compounds for formulas (IA)-(XXV)). For example, the cathode comprises a compound selected from the group consisting of Li₁₀Fe₂S₁₂, Li_{12.5}Fe_{0.75}P₂S₁₂, Li_{13.5}Fe_{0.75}P₂S_{12.25}, Li₁₃Fe_{0.5}P₂S₁₂, Li₁₃Fe_{0.75}P₂S_{12.25}, Li₁₃FeP₂S_{12.5}, Li₁₄5Fe_{0.75}P₂S₁₃, Li₁₄Fe_{0.5}P₂S_{12.5}, Li₁₄Fe_{0.75}P₂S_{12.75}, Li₁₄FeP₂S₁₃, Li₁₅Fe_{0.5}P₂S₁₃, Li₂₂FeP₂S₁₈, Li₁₈FeP₂S₁₆, Li₁₄FeP₂S₁₄, Li₁₂FeP₂S₁₂, Li₁₀FeP₂S₁₂, Li₁₄Fe₂PS_{13.5}, Li₁₃FeP₂S₁₃Cl, Li₁₂FeP₂S₁₂Cl₂, Li₁₁FeP₂S₁₁Cl₃, and Li₁₃FeP₂S₁₃Br. Incorporation of other ionically conductive compounds and/or lithium intercalation compounds in addition to or alternatively to those described above are also possible.

Additional non-limiting examples of suitable materials that may intercalate ions of an electroactive material (e.g., alkaline metal ions), and which may be included in an electrode (e.g., cathode), include oxides, titanium sulfide, and iron sulfide. Specific examples include LiₓCoO₂, LiₓNiO₂, LiₓMnO₂, LiₓMn₂O₄, LiₓFePO₄, LiₓCoPO₄, LiₓMnPO₄, and LiₓNiPO₄, where (0 < x ≤ 1), and LiNiₓMn_{y}Co_{z}O₂ where (x + y + z =1).

For example, the electroactive material in the cathode comprising the compound of formula (I) is present in the cathode in an amount of at least about 30 wt%, at least about 40 wt%, at least about 50 wt%, at least about 60 wt%, at least about 70 wt%, at least about 80 wt%, at least about 85 wt%, at least about 90 wt%, at least about 95 wt%, or at least about 98 wt% versus the total cathode weight. For example, the electroactive material in the cathode comprising the compound of formula (I) is present in the cathode in an amount of less than or equal to about 100 wt%, less than or equal to about 99 wt%, less than or equal to about 98 wt%, less than or equal to about 95 wt%, less than or equal to about 90 wt%, less than or equal to about 85 wt%, less than or equal to about 80 wt%, less than or equal to about 70 wt%, less than or equal to about 60 wt%, or less than or equal to about 50 wt% versus the total cathode weight. Combinations of the above-referenced ranges are also possible (e.g., at least about 40 wt% and less than or equal to about 95 wt%). Other ranges are also possible.

Additional or alternatively, active electrode materials for use as cathode active material in the cathode of the electrochemical cells described herein may include, but are not limited to, electroactive transition metal chalcogenides, electroactive conductive polymers, sulfur, carbon, and/or combinations thereof. As used herein, the term "chalcogenides" pertains to compounds that contain one or more of the elements of oxygen, sulfur, and selenium. Examples of suitable transition metal chalcogenides include, but are not limited to, the electroactive oxides, sulfides, and selenides of transition metals selected from the group consisting of Mn, V, Cr, Ti, Fe, Co, Ni, Cu, Y, Zr, Nb, Mo, Ru, Rh, Pd, Ag, Hf, Ta, W, Re, Os, and Ir. The transition metal chalcogenide may be selected from the group consisting of the electroactive oxides of nickel, manganese, cobalt, and vanadium, and the electroactive sulfides of iron. The cathode may include as an electroactive species elemental sulfur, sulfides, and/or polysulfides.

A cathode may include one or more of the following materials: manganese dioxide, iodine, silver chromate, silver oxide and vanadium pentoxide, copper oxide, copper oxyphosphate, lead sulfide, copper sulfide, iron sulfide, lead bismuthate, bismuth trioxide, cobalt dioxide, copper chloride, manganese dioxide, and carbon. A cathode active layer may comprise an electroactive conductive polymer. Examples of suitable electroactive conductive polymers include, but are not limited to, electroactive and electronically conductive polymers selected from the group consisting of polypyrroles, polyanilines, polyphenylenes, polythiophenes, and polyacetylenes. Examples of conductive polymers include polypyrroles, polyanilines, and polyacetylenes.

Active electrode materials for use as cathode active materials in electrochemical cells described herein may include electroactive sulfur-containing materials (e.g., lithium-sulfur electrochemical cells). "Electroactive sulfur-containing materials" as used herein, relates to cathode active materials which comprise the element sulfur in any form, wherein the electrochemical activity involves the oxidation or reduction of sulfur atoms or moieties. The nature of the electroactive sulfur-containing materials useful in the practice of this invention may vary widely, as known in the art. For example, the electroactive sulfur-containing material comprises elemental sulfur, or the electroactive sulfur-containing material comprises a mixture of elemental sulfur and a sulfur-containing polymer. Thus, suitable electroactive sulfur-containing materials may include, but are not limited to, elemental sulfur and organic materials comprising sulfur atoms and carbon atoms, which may or may not be polymeric. Suitable organic materials include those further comprising heteroatoms, conductive polymer segments, composites, and conductive polymers.

The sulfur-containing material (e.g., in an oxidized form) may comprise a polysulfide moiety, Sₘ, selected from the group consisting of covalent Sₘ moieties, ionic Sₘ moieties, and ionic Sₘ²⁻ moieties, wherein m is an integer equal to or greater than 3, or an integer equal to or greater than 6, or an integer equal to or greater than 8. The sulfur-containing material may be a sulfur-containing polymer. For example, the sulfur-containing polymer has a polymer backbone chain and the polysulfide moiety Sₘ is covalently bonded by one or both of its terminal sulfur atoms as a side group to the polymer backbone chain, or the sulfur-containing polymer has a polymer backbone chain and the polysulfide moiety Sₘ is incorporated into the polymer backbone chain by covalent bonding of the terminal sulfur atoms of the polysulfide moiety.

The electroactive sulfur-containing material may comprise more than 50% by weight of sulfur or more than 75% by weight of sulfur (e.g., more than 90% by weight of sulfur).

As will be known by those skilled in the art, the nature of the electroactive sulfur-containing materials described herein may vary widely. The electroactive sulfur-containing material may comprise elemental sulfur or a mixture of elemental sulfur and a sulfur-containing polymer.

An electrochemical cell as described herein may comprise one or more cathodes comprising sulfur as a cathode active material. The cathode may include elemental sulfur as a cathode active material.

In certain cases, the compound of formula (I) is chosen such that the compound of formula (I) is different from the anode active material and different from the cathode active material.

As described herein, an electrochemical cell or an article for use in an electrochemical cell may include an electrode (i.e., an anode) comprising an anode active material. For instance, a layer comprising the compound of formula (I) is deposited on an anode, or the compound of formula (I) is incorporated into the anode (e.g., by mixing with an active electrode material prior to the formation of the anode).

The compound of formula (I) may be present in the anode (e.g., as a layer on the anode or incorporated into the anode) in an amount of at least about 40 wt%, at least about 50 wt%, at least about 60 wt%, at least about 70 wt%, at least about 80 wt%, or at least about 85 wt% versus the total anode weight. The compound of formula (I) may be present in the anode in an amount of less than or equal to about 90 wt%, less than or equal to about 85 wt%, less than or equal to about 80 wt%, less than or equal to about 70 wt%, less than or equal to about 60 wt%, or less than or equal to about 50 wt% versus the total anode weight. Combinations of the above-referenced ranges are also possible (e.g., at least about 40 wt% and less than or equal to about 90 wt%). Other ranges are also possible. The total anode weight may be measured as the anode active layer itself or the anode active material including any protective layer(s).

Suitable active electrode materials for use as anode active material in the electrochemical cells described herein include, but are not limited to, lithium metal such as lithium foil and lithium deposited onto a conductive substrate, lithium alloys (e.g., lithium-aluminum alloys and lithium-tin alloys), and graphite. Lithium can be contained as one film or as several films, optionally separated by a protective material such as a ceramic material or an ion conductive material described herein. Suitable ceramic materials include silica, alumina, or lithium containing glassy materials such as lithium phosphates, lithium aluminates, lithium silicates, lithium phosphorous oxynitrides, lithium tantalum oxide, lithium aluminosulfides, lithium titanium oxides, lithium silcosulfides, lithium germanosulfides, lithium aluminosulfides, lithium borosulfides, and lithium phosphosulfides, and combinations of two or more of the preceding. Suitable lithium alloys for use in the anodes described herein can include alloys of lithium and aluminum, magnesium, silicium (silicon), indium, and/or tin. While these materials may be preferred in some cases, other cell chemistries are also contemplated. For instance, certain electrodes (e.g., anodes) may include other alkali metals (e.g., group 1 atoms) in some instances. The electrode may comprise one or more binder materials (e.g., polymers, etc.).

In other cases, a silicon-containing or silicon-based anode may be used.

The thickness of the anode may vary from 2 to 200 µm. For instance, the anode may have a thickness of less than 200 µm, less than 100 µm, less than 50 µm, less than 25 µm, less than 10 µm, or less than 5 µm. The anode may have a thickness of greater than or equal to 2 µm, greater than or equal to 5 µm, greater than or equal to 10 µm, greater than or equal to 25 µm, greater than or equal to 50 µm, greater than or equal to 100 µm, or greater than or equal to 150 µm. Combinations of the above-referenced ranges are also possible (e.g., greater than or equal to 2 µm and less than or equal to 200 µm, greater than or equal to 2 µm and less than or equal to 100 µm, greater than or equal to 5 µm and less than or equal to 50 µm, greater than or equal to 5 µm and less than or equal to 25 µm, greater than or equal to 10 µm and less than or equal to 25 µm). Other ranges are also possible. The choice of the thickness may depend on cell design parameters such as the excess amount of lithium desired, cycle life, and the thickness of the cathode electrode.

An electrochemical cell described herein may comprise at least one current collector. Materials for the current collector may be selected from metals (e.g., copper, nickel, aluminum, passivated metals, and other appropriate metals), metallized polymers, electrically conductive polymers, polymers comprising conductive particles dispersed therein, and other appropriate materials. For example, the current collector is deposited onto the electrode layer using physical vapor deposition, chemical vapor deposition, electrochemical deposition, sputtering, doctor blading, flash evaporation, or any other appropriate deposition technique for the selected material. The current collector may be formed separately and bonded to the electrode structure. It should be appreciated, however, that in some cases a current collector separate from the electroactive layer may not be present or needed.

In some cases, an electrochemical cell comprises a lithium or silicon based anode, a cathode (e.g., a cathode comprising electroactive sulfur-containing material or a lithium ion intercalation cathode) and a solid electrolyte layer comprising the compound of formula (I). The electrochemical cell may include other components as described herein.

In certain cases, an electrochemical cell comprises a lithium or silicon based anode, a cathode (e.g., a cathode comprising electroactive sulfur-containing material or a lithium ion intercalation cathode), a liquid electrolyte, and a protective layer comprising the compound of formula (I). The electrochemical cell may include other components as described herein.

In certain cases, an electrochemical cell comprises a lithium or silicon based anode, a cathode (e.g., a cathode comprising electroactive sulfur-containing material, or a lithium ion intercalation cathode), a liquid electrolyte, and a separator comprising the compound of formula (I). The electrochemical cell may include other components as described herein.

In certain cases, an electrochemical cell comprises a lithium or silicon based anode, an intercalated cathode (e.g., a cathode comprising the compound of formula (I) as a lithium ion intercalation species), and an electrolyte (e.g., a liquid electrolyte). The electrochemical cell may include other components as described herein.

The following examples are intended to illustrate certain aspects of the present invention, but do not exemplify the full scope of the invention.

### EXAMPLES

These examples describe the conductivity and composition of various ionically conductive compounds having the formula as in Formula (I).

### General Synthesis

For the ion conductive materials used in the Examples and in the comparative examples, the following procedure was followed. The precursor materials Li₂S (99.9% purity), P₂S₅ (99% purity), FeS (99.9% purity) and elemental sulfur (99.9% purity) were thoroughly mixed together in the respective stoichiometric ratios. Sulfur was added in such amounts to oxidize FeS to FeS₂ (e.g., including a 10% surplus to make up for losses due to evaporation in the reaction vessel). In compositions that included a halide, LiCI (99% purity) or LiBr (99.9% purity) were added in the respective stoichiometric amounts, as well. Due in part to the rather small reaction batches (overall between 5-15g), homogeneous, fine mixtures were produced by grinding the powders together carefully by mortar and pistil.

The resulting mixtures were heated to 750°C under inert atmosphere (Ar) overnight (generally between 14-18 hours) in a vitreous carbon crucible enclosed in a sealed steel cylinder (Cu gaskets on conflat (CF) flanges). The oven was flushed with Ar (e.g., in order to avoid undesired side reactions even in the event of a leakage of the steel reaction vessel). The reactants were subsequently slowly cooled down to room temperature before opening the steel cylinder. Without wishing to be bound by theory, it was anticipated that unreacted sulfur would condensate from the gas phase first on the cylinder walls and not back into the product mixture (for this reason a surplus of sulfur can be safely used to start with). The reacted powder was then removed from the crucible in an Ar-filled glove box and ground down before submitting samples for analysis.

### Analytical Methods

EDX measurements were performed to verify the composition of the samples and identify impurities and contaminations, e.g., from undesired side reactions such as oxidation in case of a leakage of the reaction vessel.

Powder conductivity measurements were carried out by densifying a specified amount of powder under increasing pressures in a die (measurement takes place between two aluminum foils, which were sandwiched between two copper plates). From the measurement curve and the experimental conductivity values under very high pressure values (up to 5 metric tons on a 1" pellet, corresponding to ∼968.5 bar), the bulk conductivity of the material under consideration was extrapolated.

EIS (electronic impedance spectroscopy) measurements were performed under the same conditions and setup to distinguish between the electronic and ionic contributions to the overall powder conductivity.

XRD measurements were used to verify the success and reproducibility of the synthesis (final reaction products are crystalline). It was shown that the XRD patterns are reminiscent of lithium-based argyrodites. Generally, Li₂₁SiP₂S_{17.5} was used for comparison.

### Comparative Example Compounds - Li₂ₓSiP₂Sₓ₊₇ (x=10-14) and Li₂₁P₃S₁₈

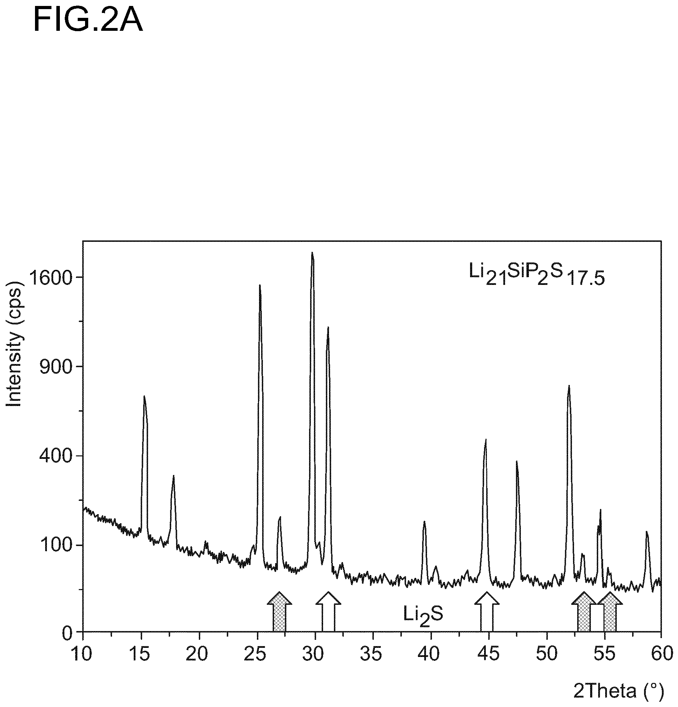

The XRD powder diffractogram of Li₂₁SiP₂Si_{17.5} as a typical representative is shown in FIG. 2A. The pattern displays several sharp peaks indicative of the lithium argyrodites (cubic phase, space group F-43m), while some remaining Li₂S can still be observed (marked by arrows in FIG. 2A). Lighter shaded arrows indicate Li₂S positions overlapping with strong argyrodite signals.

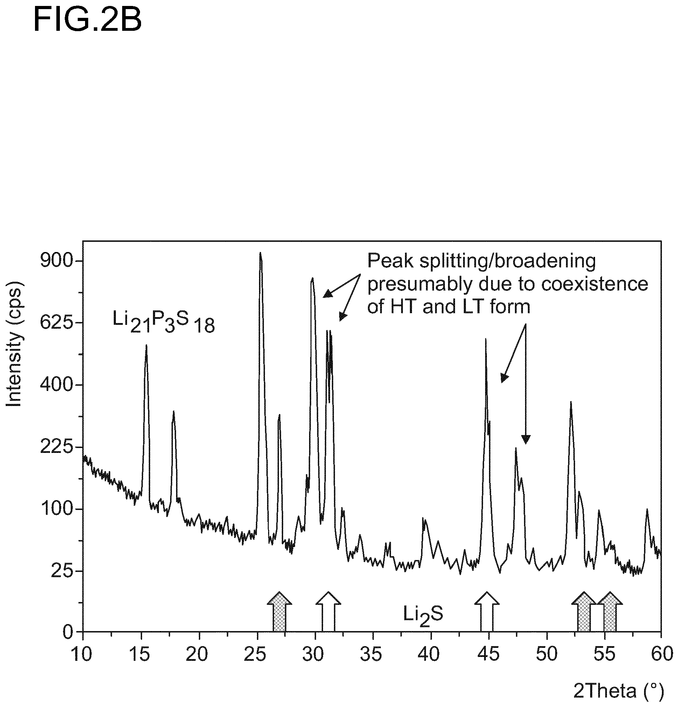

A comparison of both the diffractogram of Li₂₁SiP₂S_{17.5} (FIG. 2A) and Li₂₁P₃S₁₈ (FIG. 2B) shows that both compounds share the same pattern characteristic for the argyrodites. However, in the spectrum of Li₂₁P₃S₁₈ some peak splitting and peak broadening can be observed (marked by arrows). These are most likely indicative of the presence of a high-temperature (HT) and low-temperature (LT) modification both present in the final product based on the current fabrication procedure. These features can be used to differentiate between the two compounds together with the very different conductivities (on the order of 10⁻³ S/cm for Li₂₁SiP₂S_{17.5} and 10⁻⁶ S/cm for Li₂₁P₃S₁₈).

### Example 1- LiₓFeP₂S_{x/2+7} (x=10-22) (Example compounds having a structure as in Formula (I), where x is 10-22, y is 1, z is 2, u is 12-18, M is Fe, Q is absent, and X is absent)

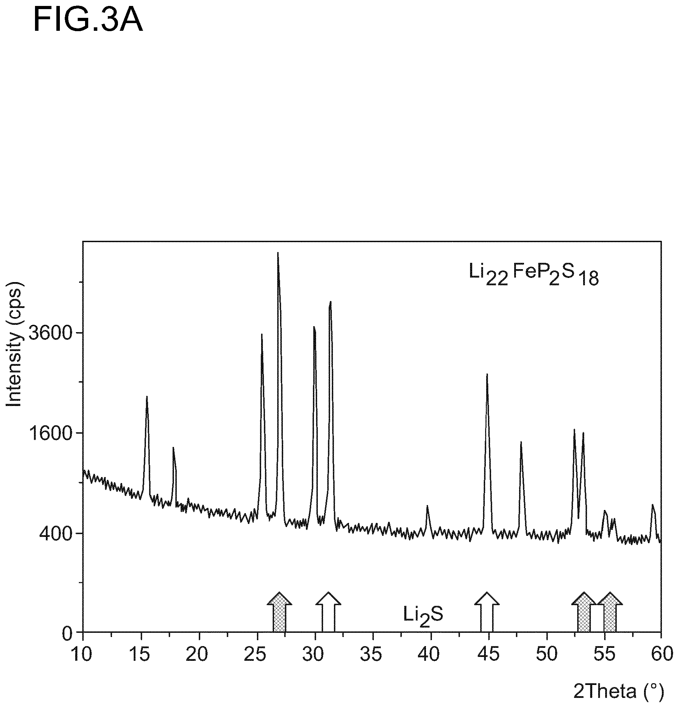

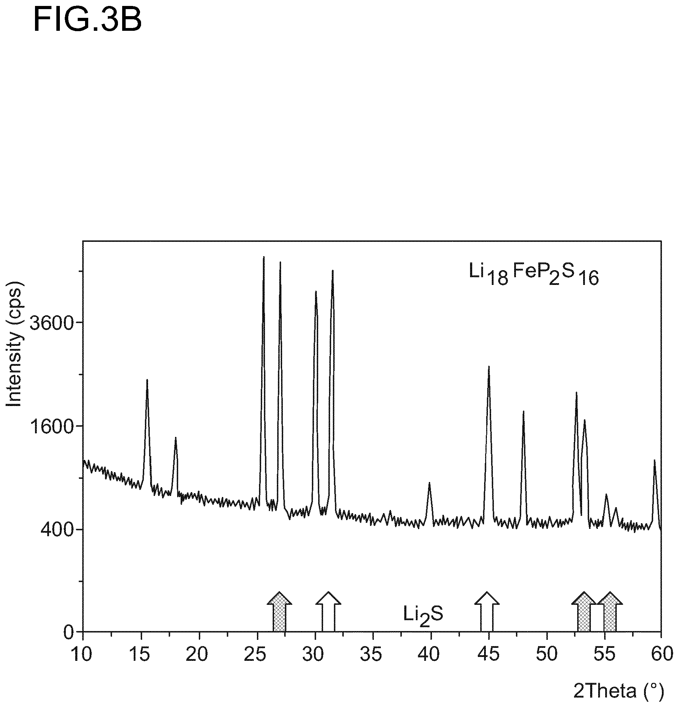

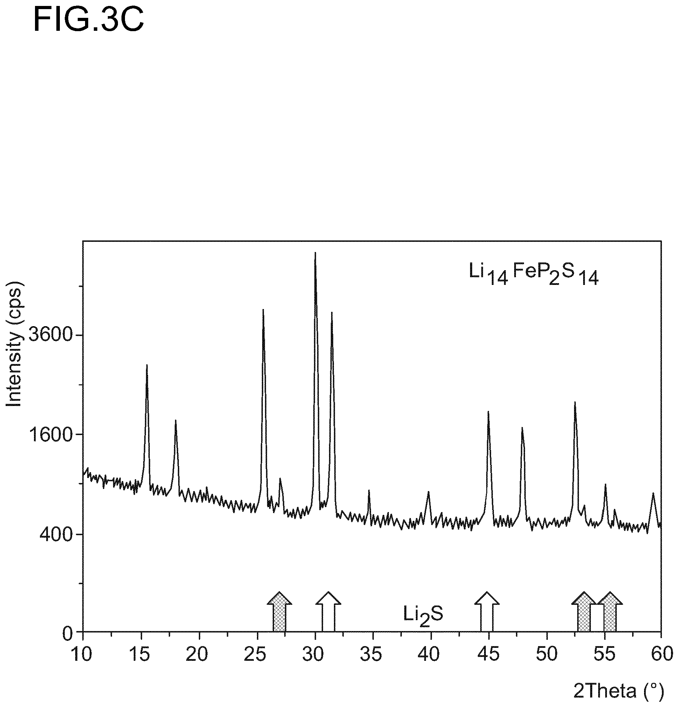

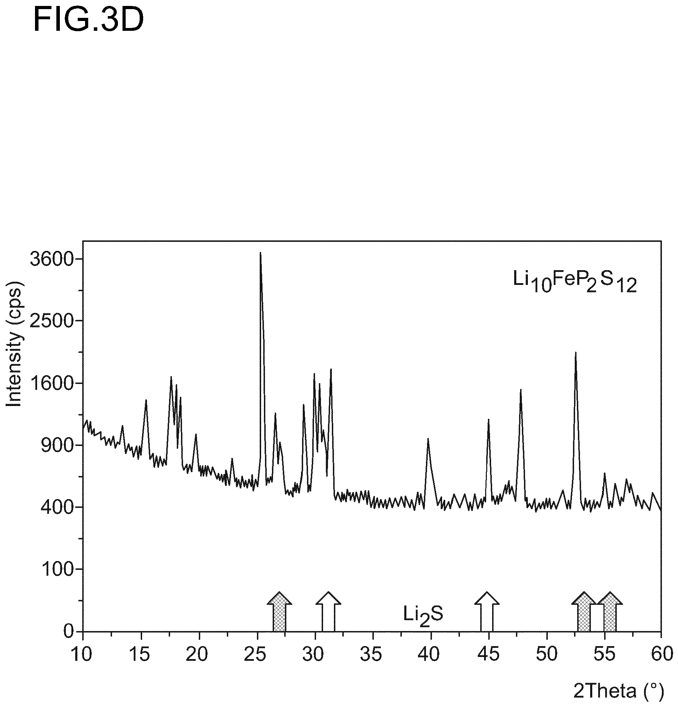

FIGs. 3A-3D are XRD powder diffractograms of Li₂₂FeP₂S₁₈, Li₁₈FeP₂S₁₆, Li₁₄FeP₂S₁₄, and Li₁₀FPe₂S₁₂. Compounds having a structure as in formula (I) were synthesized with varying Li₂S content, starting with the same composition as the comparative example Li₂₂SiP₂S₁₈, except M is Fe instead of Si. Interestingly, the spectrum of Li₂₂FeP₂S₁₈ (FIG. 3A) shows the same characteristic pattern indicative of the argyrodite-type crystal structure as the Si-compounds (FIG. 2A). However, very strong peaks stemming from unreacted Li₂S can be noticed (marked by arrows). Reducing the amount of Li₂S in the precursor mixture yielded compounds of nominal composition Li₁₈FeP₂S₁₆, Li₁₄FeP₂S₁₄, and Li₁₀FeP₂S₁₂. Their respective XRD patterns (FIGs. 3B-3D) display a sharp decrease of residual unreacted Li₂S in the final product mixture with decreasing relative amount of Li₂S in the stoichiometric composition. The XRD powder diffractogram of Li₁₄FeP₂S₁₄ shows a pattern extremely similar to the ones recorded for the Si-based compounds.

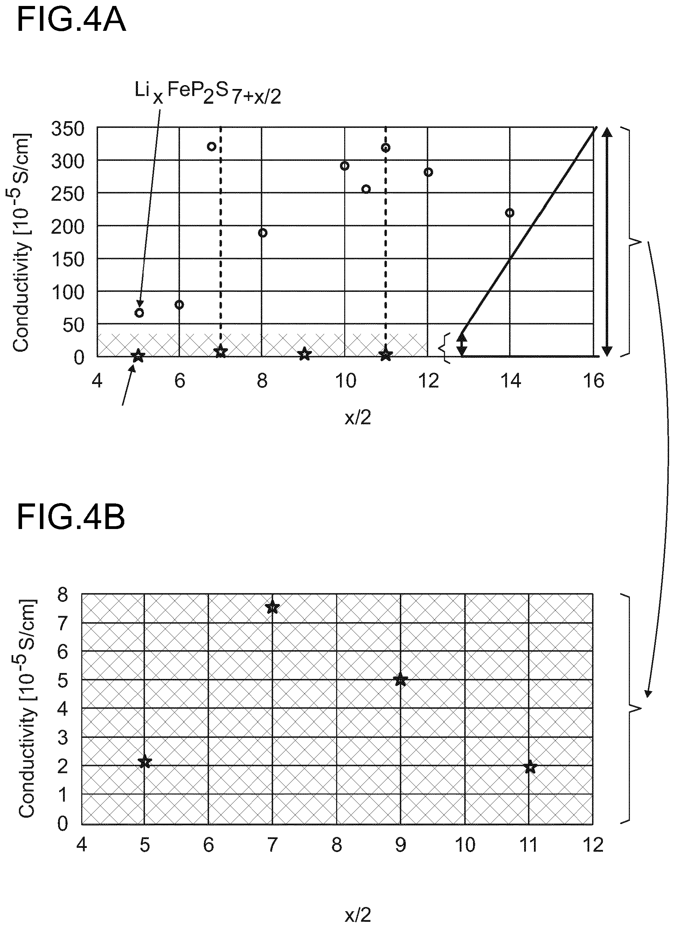

FIGs. 4A and 4B show a comparison of the powder conductivities of LiₓSiP₂S_{x/2+7} and LiₓFeP₂S_{x/2+7} as a function of x/2 (Li₂S content). Dashed lines indicate the composition for which maximum conductivities were found for both LiₓSiP₂S_{x/2+7} and LiₓFeP₂S_{x/2+7}. The measured powder conductivities followed the same pattern observed for the XRD diffractograms (FIG. 4 and Table 1): Conductivities of ∼7.5·10⁻⁵ S/cm were measured for Li₁₄Fe₂S₁₄, and of ∼1·10⁻⁴ S/cm for Li₁₂FeP₂S₁₂, reflecting a structural resemblance to the argyrodites observed in the XRD patterns (figure 2).

**Table 1: Powder conductivities of LiₓFeP₂S_{x/2+7}. The conductivity of Li₂₁SiP₂S_{17.5} as a reference material is listed as well. Gross Formulas are based on analysis of EDX measurements and the XRD data and the Rietveld refinement of the structural XRD data, to verify the composition of the samples and identify impurities and contaminations, as described above in Example 1.**

| Material class | Gross Formula | Temperature during synthesis [°C] | Conductivity [mS/cm] |
|---|---|---|---|
| Si-based argyrodite (comparison) | Li₂₁SiP₂S_{17.5} | 700 | 2.5 |
| Fe-based compounds (halogen-free) | Li₂₂FeP₂S₁₈ | 700 | 0.02 |
| | Li₁₈FeP₂S₁₆ | 700 | 0.049 |
| | Li₁₄FeP₂S₁₄ | 700 | 0.075 |
| | Li₁₂FeP₂S₁₂ | 750 | 0.1 |
| | Li₁₀FeP₂S₁₂ | 700 | 0.024 |

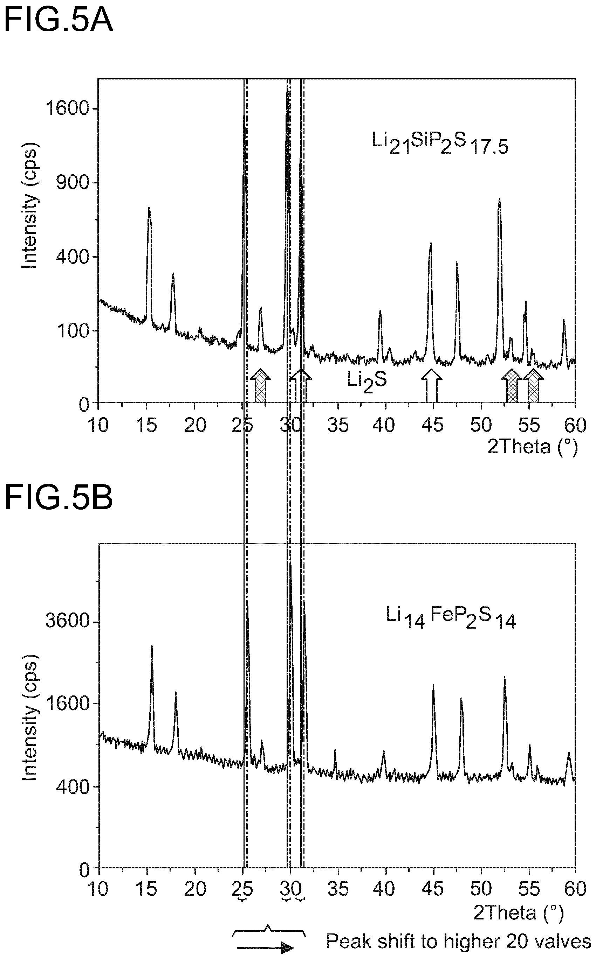

A comparison of the diffractograms (FIG. 5) of both Li₂₁SiP₂S_{17.5} and Li₁₄FeP₂S₁₄ compounds reveals the characteristic argyrodite pattern, with a general peak shift to higher 2θ values observed in the case of the Fe-based material. Without wishing to be bound by theory, such a peak shift may indicate a contraction of the unit cell, which in turn could be one of the reasons for the relative drop in ionic conductivity.

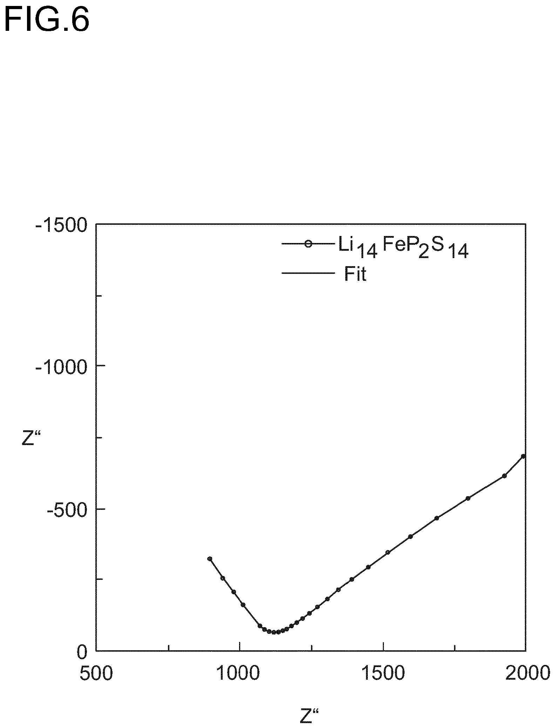

Electronic impedance spectroscopy (EIS) measurements of Li₁₄FeP₂S₁₄ are shown in FIG. 6. Towards lower frequencies, no second semicircle is found but only a linear increase in Z" values, indicating that only lithium ionic conductivity, but no electronic conductivity, is involved. The overall lithium ionic contributions were derived from this measurement to amount to ∼8.7·10⁻⁵ S/cm.

### Example 2 - LiₓFeP₂S_{x/2+7} (x=10-22) + LiX

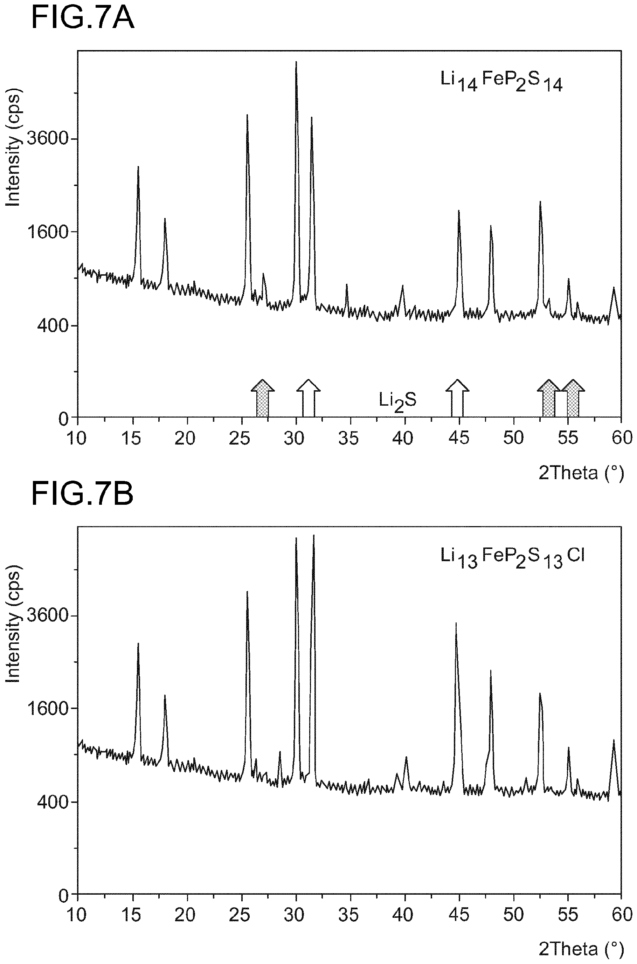

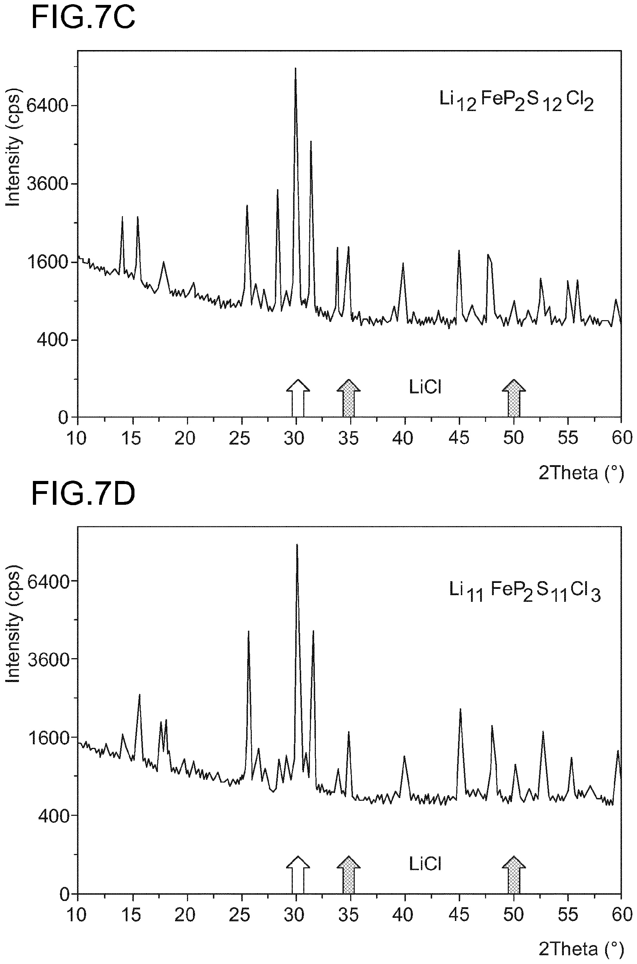

Doping with halogens may be one viable strategy to increase the conductivity of the synthesized argyrodites. Therefore, Li₁₄FeP₂S₁₄ was chosen to start with, given that it was found to be the (halogen-free) Fe-based compound with the highest intrinsic conductivity and purest argyrodite-type spectral pattern (see Example 1). In order to investigate the influence of halogen-doping in a systematic manner, Li₂S units were consecutively replaced by LiCI entities in the Li₁₄FeP₂S₁₄ material to yield Li₁₃FeP₂S₁₃Cl, Li₁₂FeP₂S₁₂Cl₂ and Li₁₁FeP₂S₁₁Cl₃. The respective XRD spectra are shown in FIGs. 7A-D. Interestingly, replacing one Li₂S unit in Li₁₄FeP₂S₁₄ to fabricate Li₁₃FeP₂S₁₃Cl entails complete disappearance of the weak remaining Li₂S signals in the diffractogram, while some other weak, yet undefined peaks appear. The overall typical spectral pattern of the argyrodites is completely preserved. Further increasing the LiCI content to Li₁₂FeP₂S₁₂Cl₂ and Li₁₁FeP₂S₁₁Cl₃, respectively, entails the appearance of spectral patterns corresponding to LiCI which start to grow in intensity with increasing LiCI ratios. This indicates incomplete reactions and some amounts of unreacted LiCI in the overall reaction mixture, which means, in some cases, that more than one Li₂S unit may not substitute in Li₁₄FeP₂S₁₄ while maintaining a complete reaction process. Some additional peaks appear in the diffractograms of Li₁₂FeP₂S₁₂Cl₂ and Li₁₁FeP₂S₁₁Cl₃ indicating an increasing amount of side reactions and products and a subsequent slow loss of the desired argyrodite-type spectral pattern.

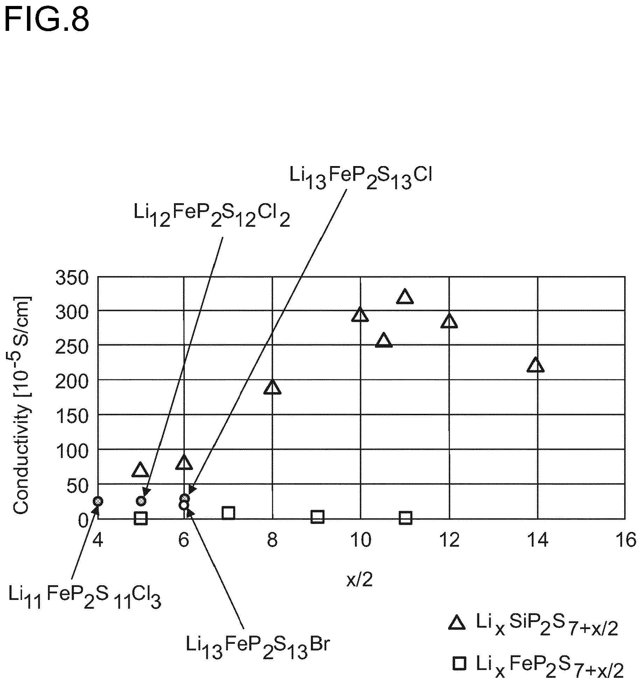

It is interesting at this point to compare the findings described for the XRD patterns to the powder conductivities for the same compounds, shown in FIG. 8 and summarized in Table 2. The measured powder conductivities increase from ∼7.5·10⁻¹ S/cm for Li₁₄FeP₂S₁₄ to ∼2.9·10⁻⁴ S/cm for Li₁₃FeP₂S₁₃Cl.

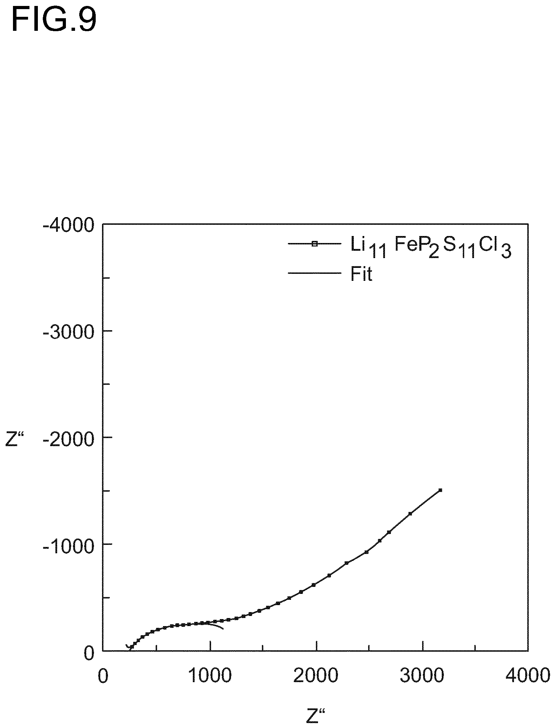

As expected from the XRD spectra, the highest conductivity value is obtained for Li₁₃FeP₂S₁₃Cl, displaying the purest argyrodite-type spectrum. However, it should be noted that a further increase in LiCI entails only a slight decrease in conductivity (within the error of these measurements / synthesis procedures), despite the increasing amount of unreacted LiCI within the product mix. In order to show that the overall powder conductivity is purely ionic, EIS spectra have been recorded. The impedance spectrum for Li₁₁FeP₂S₁₁Cl₃ is exemplarily shown in FIG. 9. As can be derived from the graph in FIG. 9, no electronic conductivity is observed but only an ionic conductivity of ∼6.5·10⁻⁵ S/cm is measured.

**Table 2.**

| Material class | Gross Formula | Temperature during synthesis [°C] | Conductivity [mS/cm] |
|---|---|---|---|
| Si-based argyrodite (reference) | Li₂₁SiP₂S_{17.5} | 700 | 2.5 |
| Fe-based compounds (halogen-doped) | Li₁₃FeP₂S₁₃Cl | 700 | 0.29 |
| | Li₁₂FeP₂S₁₂Cl₂ | 700 | 0.26 |
| | Li₁₁FeP₂S₁₁Cl₃ | 750 | 0.26 |
| | Li₁₃FeP₂S₁₃Br | 700 | 0.21 |

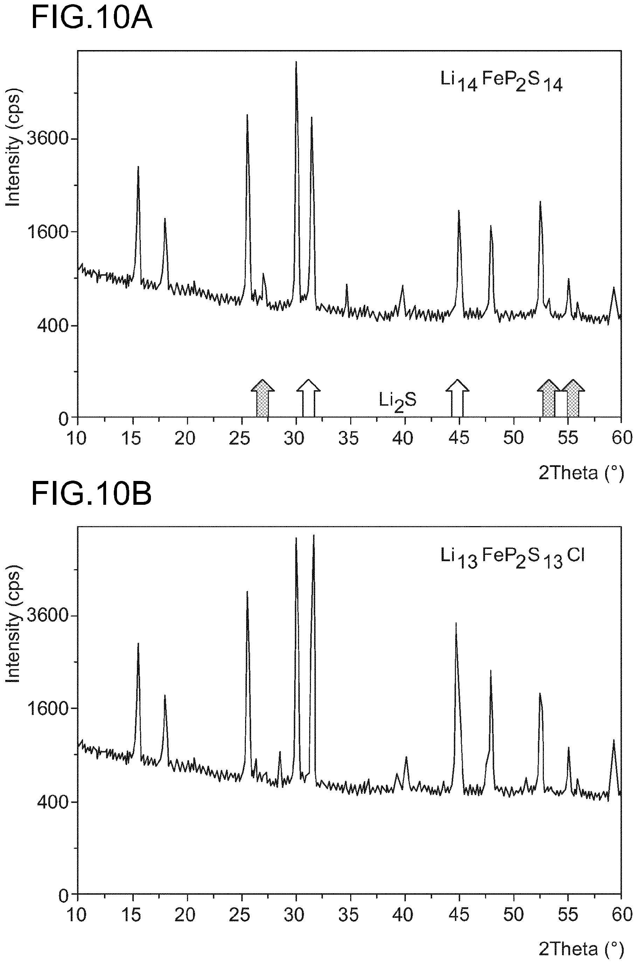

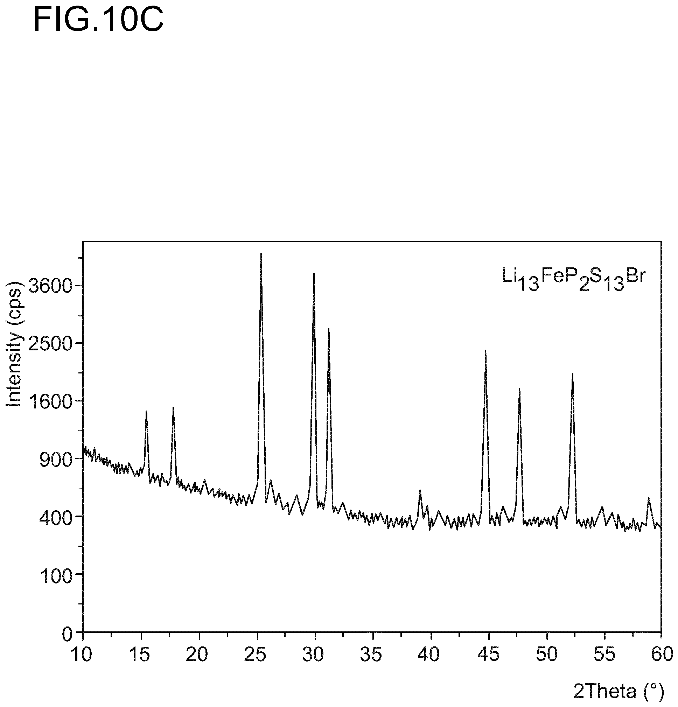

In order to check the influence of different halogen atoms, LiBr was used instead of LiCI to synthesize Li₁₃FeP₂S₁₃Br. The XRD powder diffractogram alongside the diffractogram of both Li₁₄FeP₂S₁₄ and Li₁₃FeP₂S₁₃Cl for ease of comparison are shown in FIGs 10A-C. The spectra of Li₁₃FeP₂S₁₃Br and Li₁₃FeP₂S₁₃Cl very closely resemble each other, with both of them showing the characteristic argyrodite-type patterns. In comparison to the diffractogram of the "parent" compound Li₁₄FeP₂S₁₄ it is interesting to note that in both cases formal replacement of one Li₂S unit by either LiCI or LiBr leads to disappearance of the remaining Li₂S signals in the XRD diffractrogram. Powder conductivity measurements of Li₁₃FeP₂S₁₃Br yield values of about 2.1·10⁻⁴ S/cm.

### Example 3 - Further Compounds

Table 3 summarizes the composition of the mixture of precursors, synthesis temperature, conductivity, and gross formula for further exemplary ionically conductive compounds synthesized as described herein.

**Table 3.**

| **Gross Formula** | **Conductivity (S/cm)** | **Li₂S (wt%)** | **FeS (wt%)** | **P₂S₅ (wt%)** | **LiX (X = Cl resp. Br) (wt%)** | **Excess Sulfur (wt%)** | **Synthesis Temp (°C)** |
|---|---|---|---|---|---|---|---|
| Li₁₀FeP₂S₁₂ | 2.4E-05 | 40 | 15 | 39 | 0 | 6 | 700 |
| Li₁₁FeP₂S₁₁Cl₃ | 2.6E-04 | 28 | 13 | 34 | 19 | 5 | 750 |
| Li_{12.5}Fe_{0.75}P₂S₁₂ | 5.6E-05 | 50 | 11 | 39 | 0 | 0 | 750 |
| Li₁₂FeP₂S₁₂ | 1.9E-05 | 47 | 15 | 38 | 0 | 0 | 750 |
| Li₁₂FeP₂S₁₂Cl₂ | 3.1 E-04 | 37 | 13 | 33 | 12 | 5 | 700 |
| Li₁₂FeP₂S₁₂Cl₂ | 2.1 E-04 | 35 | 13 | 34 | 13 | 5 | 750 |
| Li_{13.5}Fe_{0.75}P₂S_{12.25} | 1.2E-04 | 52 | 11 | 37 | 0 | 0 | 750 |
| Li₁₃Fe_{0.5}P₂S₁₂ | 2.6E-05 | 53 | 8 | 40 | 0 | 0 | 750 |
| Li₁₃FeP₂S_{12.5} | 1.4E-04 | 49 | 14 | 37 | 0 | 0 | 750 |
| Li₁₃FeP₂S₁₃Br | 1.8E-04 | 39 | 12 | 32 | 12 | 5 | 700 |
| Li₁₃FeP₂S₁₃Cl | 2.9E-04 | 41 | 13 | 34 | 6 | 5 | 700 |
| Li_{14.5}Fe_{0.75}P₂S₁₃ | 5.3E-05 | 53 | 11 | 36 | 0 | 0 | 750 |
| Li₁₄Fe_{0.5}P₂S_{12.5} | 1.8E-05 | 55 | 7 | 38 | 0 | 0 | 750 |
| Li₁₄Fe_{0.75}P₂S_{12.75} | 5.1 E-05 | 53 | 11 | 37 | 0 | 0 | 750 |
| Li₁₄Fe₂PS_{13.5} | 2.2E-05 | 47 | 26 | 16 | 0 | 10 | 700 |
| Li₁₄FeP₂S₁₃ | 8.4E-05 | 51 | 14 | 35 | 0 | 0 | 750 |
| Li₁₄FeP₂S₁₄ | 4.4E-05 | 48 | 13 | 34 | 0 | 5 | 700 |
| Li₁₄FeP₂S₁₄ | 1.1 E-04 | 48 | 13 | 34 | 0 | 5 | 750 |
| Li₁₅Fe_{0.5}P₂S₁₃ | 1.6E-05 | 56 | 7 | 37 | 0 | 0 | 750 |
| Li₁₈FeP₂S₁₆ | 4.9E-05 | 54 | 12 | 29 | 0 | 5 | 700 |
| Li₂₂FeP₂S₁₈ | 2.0E-05 | 59 | 10 | 26 | 0 | 4 | 700 |

### Example 4: Crystallography of Li₁₄FeP₂S₁₄ and Li₁₃FeP₂S₁₃X (X=CI, Br)

Samples of Li₁₃FeP₂S₁₃Cl, Li₁₃FeP₂S₁₃Br, and Li₁₄FeP₂S₁₄ were placed into an argon-filled glovebox for x-ray diffraction measurements. Small amounts of the samples were ground in an agate mortar, filled into capillaries made of borosilicate glass (Hilgenberg GmbH, outer diameter 0.3 mm and 0.01 mm wall thickness), and flame-sealed. Standard powder X-ray diffraction data were recorded in Debye-Scherrer geometry with Ge(111)-monochromated Cu-Kα1 radiation (1.540596 Å) at 298 K on a STOE Stadi P powder diffractometer equipped with a DECTRIS MYTHEN 1K strip detector in the range 5- 90°2θ. The Topas Academic software was used for analyses of the diffraction patterns.

The measurements of the Li₁₄FeP₂S₁₄ samples resulted in diffraction patterns that indicate a cubic metric with a lattice parameter a = 9.86888(10) Å, typical for the argyrodite structure type. The structure of the argyrodite compound Li₇(PS₄)S₂ includes PS₄³⁻-tetrahedra on Wyckoff position 4b, S²⁻ ions on 4a and 4c, and Li⁺ ions on 48h (ICSD 421130; further Li sites are another 48h and a 24g site). As described in examples 1 and 2, iron could be incorporated into the structure, e.g., substituting P by Fe and synthesizing argyrodite derivatives of compositions Liₓ₋ᵤM_{y}P_{3-y}S_{z-t}Xₜ (with M = Fe and X = Br, CI). For quantitative Rietveld analyses the aforementioned structure model was used as a starting point.

In a first attempt of refinement, Fe was allowed to replace P while retaining full occupation of the site. This resulted in a composition Li_{14.6(5)}(Fe_{0.15(2)}P_{0.85(2)}S₄)S₂ with a Fe-ratio of 15% (instead of 33 %, expected by the nominal composition Li₁₄FeP₂S₁₄) on the P site. The occupancy of the Li⁺ ions refined to twice the value that is expected and required for charge balancing (14 instead of 7). Moreover, the structure revealed P/Fe-S bond lengths of 2.038(5) Å that are characteristic for pure P-S bonds without the influence of Fe (typical bond lengths in solids are: P-S: 2.04 Å; Fe-S: 2.3-2.4 Å). These results are all strong indications for Fe ions (Fe(II) or Fe(III), to be determined by Mößbauer spectroscopy) being located on the Li sites. Refinements allowing Fe on the Li sites resulted in the structure models indicated in Tables 4-6 (including estimated standard deviation (esd)).

**Table 4. Results of the Rietveld refinements of Li₁₄FeP₂S₁₄ for two samples (esd's in parentheses)**

| | Sample 1 | Sample 2 |
|---|---|---|
| ***Crystal Structure Data*** | | |
| formula | Li₈₍₁₂₎Fe_{0.8(12)}(PS₄)S₂ | Li₈₍₁₂₎Fe_{0.8(12)}(PS₄)S₂ |
| crystal system | cubic | cubic |
| space group | *F*43m | *F*43m |
| cell parameter /Å | a = 9-86811(7) | a = 9.86888(10) |
| cell volume /Å³ | *V* = 960.95(2) | *V* = 961.18(3) |
| formula units Z /cell | 4 | 4 |

| ***Structure refinement*** | | |
|---|---|---|
| data points | 7075 | 7075 |
| number of observed reflections | 35 | 35 |
| number of parameters | 67 | 77 |
| background function / parameters | shifted Chebyshev / 32 | shifted Chebyshev / 32 |
| R indices | Rₚ = 0.02218 | Rₚ = 0.02673 |
| | wRₚ = 0.02966 | wRₚ= 0.03463 |
| | R_{bragg} = 0.0053 | R_{bragg} = 0.0045 |
| | GoF = 1 2068 | GoF = 1.0384 |

**Table 5. Atom coordinates, Wyckoff symbols and isotropic displacement parameters Biso / Å2 for the atoms in Li₆₍₆₎Fe_{(0.6)(12)}(PS₄)S₂, sample 1 (esd's in parentheses).**

| *atom* | *Wyckott symbol* | *x* | *y* | *z* | *occupancy* | *Bᵢₛₒ* |
|---|---|---|---|---|---|---|
| P(1) | 4*b* | 0.5 | 0.5 | 0.5 | 1 | 0.82(13) |
| S(1) | 16*e* | 0.6195(3) | 0.6195(3) | 0.6195(3) | 1 | 1.99(6) |
| S(2) | 4*a* | 0 | 0 | 0 | 1 | 1.62(12) |
| S(3) | 4*d* | 0.25 | 0.25 | 0.25 | 1 | 1.27(10) |
| Li(1) | 24*g* | 0,52(12) | 0.25 | 0.25 | 0.0(13)^{†} | 1.7(7) |
| Fe(1) | 24g | 0.52(12) | 0.25 | 0.25 | 0.00(12)^{†} | 1.7(7) |
| Li(2) | 48*h* | 0.1778(17) | 0.1789(17) | 0.020(3) | 0.3(5)^{†} | 1.7(7) |
| Fe(2) | 48*h* | 0.1778(17) | 0.1789(17) | 0.020(3) | 0.04(5)^{†} | 1.7(7) |
| Li(3) | 48*h* | 0.091(2) | 0.091(2) | 0.789(3) | 0.2(6)^{†} | 1.7(7) |
| Fe(3) | 48*h* | 0.091(2) | 0.091(2) | 0.789(3) | 0.01(5)^{†} | 1.7(7) |

**Table 6. Atom coordinates, Wyckoff symbols and isotropic displacement parameters Bᵢₛₒ / Å² for the atoms in Li₆₍₆₎Fe_{(0.6)(12)}(PS₄)S₂, sample 2 (esd's in parentheses).**

| *atom* | *Wyckott symbol* | *x* | *y* | *z* | *occupancy* | *Bᵢₛₒ* |
|---|---|---|---|---|---|---|
| P(1) | 4*b* | 0.5 | 0.5 | 0.5 | 1 | 1.09(14) |
| S(1) | 16*e* | 0.6190(5) | 0.6190(5) | 0.6190(5) | 1 | 2.19(7) |
| S(2) | 4*a* | 0 | 0 | 0 | 1 | 2.00(15) |
| S(3) | 4*d* | 0.25 | 0.25 | 0.25 | 1 | 1.48(12) |
| Li(1) | 24*g* | 0.48(10) | 0.25 | 0.25 | 0(3)^{†} | 3.2(7) |
| Fe(1) | 24*g* | 0.48(10) | 0.25 | 0.25 | 0.0(2)^{†} | 32(7) |
| Li(2) | 48*h* | 0.1768(17) | 0.1768(17) | 0.025(3) | 0.3(6)^{†} | 32(7) |
| Fe(2) | 48*h* | 0.1700(17) | 0.1768(17) | 0.025(3) | 0.05(6)^{†} | 3.2(7) |
| Li(3) | 48*h* | 0.092(6) | 0.092(6) | 0.780(9) | 0.2(7)^{†} | 3.2(7) |
| Fe(3) | 48*h* | 0.092(6) | 0.092(6) | 0.780(9) | 0.00(6)^{†} | 3.2(7) |

| | | | | | | |
|---|---|---|---|---|---|---|
| t high errors in Li/Fe occupancy numbers is due to low data to parameter ratio | | | | | | |

Although the standard deviations for the occupancies are high the formulas resulting from the second refinement with Fe on the Li positions are closer to the nominal composition than the other structure model (with Fe on the P position). Consequently, the assumption that all the Fe that was added to the synthesis mixture is contained in the argyrodite phase is supported by the fact that no other Fe-containing phases were detected in the diffraction patterns (although amorphous phases and sublimation should be also considered). With the structure model with 15 % of Fe on the P position, left-over FeS, FeS₂ or other Fe-containing phases would have been expected. Furthermore, the structure model with Fe ions on the Li⁺ positions could also explain that there is no significant enlargement in the lattice parameter of the Fe-containing phases compared to Li₇(PS₄)S₂. The ionic radius of e.g. Fe³⁺ with r=49 pm (Coordination number (CN) of CN=4) is smaller than the one of Li⁺ with r = 59 pm (Coordination number (CN) of CN=4). Expansion of the lattice parameter would be expected if Fe replaces P because of the longer Fe-S distance, while experimentally most likely a small contraction was observed as outlined above.

The results of the modeling of the diffraction patterns measured from the Br-sample (Li₁₃FeP₂S₁₃Br) and the Cl-sample (Li₁₃FeP₂S₁₃Cl) are shown in Tables 7-9 (including estimated standard deviation (esd)). In these compounds, it appears that most of the Fe ions are located on the Li positions. The P-S distances do again not indicate any expansion. The incorporation of Br in these samples seems to have worked success- fully: Excess electron density was found on positions 4a and 4d and no residual LiBr was found in the pattern. The incorporation of Cl appears to have worked as well as suggested indirectly by the absence of LiCI in the pattern, as S²⁻ and Cl⁻ on the 4a and 4d positions cannot be distinguished by XRD (e.g., they have the same amount of electrons and therefore the same scattering power). In both samples side phases were detected to be Li₄P₂S₆ and lithium iron sulfide. Li₂S has not been found in any of those samples.

**Table 7. Results of the Rietveld refinements of Li₁₃FeP₂S₁₃X, X = Cl, Br (esd's in parentheses).**

| | X=Cl | X=Br |
|---|---|---|
| ***Crystal Structure Data*** | | |
| formula | Li_{0.85}Fe_{0.88}(PS₄)(S/Cl)₂ | Li_{4.2}Fe_{0.5}(PS₄)S_{1.61(3)}Br_{0.39(3)} |
| crystal system | cubic | cubic |
| space group | *F*43*m* | *F*43*m* |
| cell parameter /Å | *a* = 9.85716(6) | *a* = 9.90400(6) |
| cell volume / Å³ | *V* = 957.757(19) | *V* = 971.475(18) |
| formula units Z /cell | 4 | 4 |

| ***Structure solution and refinement*** | | |
|---|---|---|
| data points | 7075 | 7075 |
| number of observed reflections | 35 | 37 |
| number of parameters | 77 | 80 |
| background function / parameters | shifted Chebyshev / 32 | shifted Chebyshev / 32 |
| R indices | Rₚ = 0.02900 | Rₚ = 0.02583 |
| | wRₚ = 0.03809 | wRₚ = 0.03673 |
| | R_{bragg} = 0.0070 | R_{bragg} =0.0033 |
| | GoF = 1.1063 | GoF = 1.4319 |

**Table 8. Atom coordinates, Wyckoff symbols and isotropic displacement parameters Bᵢₛₒ / Å² for the atoms in Li_{14.58}(Fe_{0.15(2)}P_{0.85(2)}S₄)S₂ (esd's in parentheses).**

| *atom* | *Wyckott symbol* | *x* | *y* | *z* | *occupancy* | *Bᵢₛₒ* |
|---|---|---|---|---|---|---|
| P(1) | *4b* | 0.5 | 0.5 | 0.5 | 1 | 0.27(13) |
| S(1) | 16*e* | 0.6197(4) | 0.6197(4) | 0.6197(4) | 1 | 1.79(9) |
| S/Cl(2) | 4*a* | 0 | 0 | 0 | 1 | 1.48(14) |
| S/Cl(3) | 4*d* | 0.25 | 0.25 | 025 | 1 | 0.77(16) |
| Li(1) | 24*g* | 0.5(11) | 0.25 | 0.25 | 0(2)^{†} | 0.4(8) |
| Fe(1) | 24*g* | 0.5(11) | 0.25 | 0.25 | 0.00(18)^{†} | 0.4(8) |
| Li(2) | 48*h* | 0.1711(11) | 01711(11) | 0.0287(16) | 0.0(8)^{†} | 0.4(8) |
| Fe(2) | 48h | 0.1711(11) | 0.1711(11) | 0.0287(16) | 0.06(7)^{†} | 0.4(8) |
| Li(3) | 48*h* | 0(12) | 0(12) | 0.735(10) | 0.1(11)^{†} | 0.4(8) |
| Fe(3) | 48*h* | 0(12) | 0(12) | 0.735(10) | 0.00(10)^{†} | 0.4(8) |

| | | | | | | |
|---|---|---|---|---|---|---|
| † high errors in Li/Fe occupancy numbers is due to low data to parameter ratio | | | | | | |

**Table 9. Atom coordinates, Wyckoff symbols and isotropic displacement parameters Biso / Å2 for the atoms in Li_{7.0}(Fe_{0.15(2)}P_{0.85(2)}S₄)S_{1.731(18)} Br₀₂₆₉₍₁₈₎ (esd's in parentheses).**

| atom | *Wyckoff* | *x* | *y* | *z* | *occupancy* | *Bᵢₛₒ* |
|---|---|---|---|---|---|---|
| | *symbol* | | | | | |
| P(1) | *4b* | 0.5 | 0.5 | 0.5 | 1 | 1.40(19) |
| S(1) | 16*e* | 0.6189(6) | 0.6189(6) | 0.6189(6) | 1 | 2.24(14) |
| S(2) | 4*a* | 0 | 0 | 0 | 0.76(18) | 2.1(2) |
| Br(2) | 4*a* | 0 | 0 | 0 | 0.24(18) | 2.1 (2) |
| S(3) | 4*d* | 0.25 | 0.25 | 0.25 | 0.85(3) | 1.1(3) |
| Br(3) | 4*d* | 0.25 | 0.25 | 0.25 | 0.15(3) | 1.1(3) |
| Li(1) | 24*g* | 046(12) | 0.25 | 0.25 | 0(4)^{†} | 0.6(11) |
| Fe(1) | 24*g* | 0.46(12) | 0.25 | 0.25 | 0.0(4)^{†} | 0.6(11) |
| Li(2) | 48*h* | 0.177(3) | 0.177(3) | 0.023(4) | 0.1(18)^{†} | 0.6(11) |
| Fe(2) | 48*h* | 0.177(3) | 0.177(3) | 0.023(4) | 0.04(16)^{†} | 0.6(11) |
| Li(3) | 48*h* | 0.103(10) | 0.103(10) | 0.803(16) | 0.0(3)^{†} | 0.6(11) |
| Fe(3) | 48*h* | 0.103(10) | 0.103(10) | 0.803(16) | 0.00(3)^{†} | 0.6(11) |

While several embodiments of the present invention have been described and illustrated herein, those of ordinary skill in the art will readily envision a variety of other means and/or structures for performing the functions and/or obtaining the results and/or one or more of the advantages described herein, and each of such variations and/or modifications is deemed to be within the scope of the present invention. More generally, those skilled in the art will readily appreciate that all parameters, dimensions, materials, and configurations described herein are meant to be exemplary and that the actual parameters, dimensions, materials, and/or configurations will depend upon the specific application or applications for which the teachings of the present invention is/are used. Those skilled in the art will recognize, or be able to ascertain using no more than routine experimentation, many equivalents to the specific embodiments of the invention described herein. It is, therefore, to be understood that the foregoing embodiments are presented by way of example only and that, within the scope of the appended claims and equivalents thereto, the invention may be practiced otherwise than as specifically described and claimed. The present invention is directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the scope of the present invention.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of." "Consisting essentially of," when used in the claims, shall have its ordinary meaning as used in the field of patent law.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

It should also be understood that, unless clearly indicated to the contrary, in any methods claimed herein that include more than one step or act, the order of the steps or acts of the method is not necessarily limited to the order in which the steps or acts of the method are recited.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases.

## Claims

1. A compound of formula (IA) having an argyrodite-type crystal structure:
LiₓFe_{y}Q_{w}P_{z}SᵤXₜ (IA)
wherein:
X is absent or is selected from the group consisting of Cl, Br and I,
x is 8-22,
y is 0.1-3,
w is 0,
z is 0.1-3,
u is 7-20, and
t is 0-8.

2. A compound as in claim 1, wherein the argyrodite-type crystal structure is the space group F43m.

3. A compound as in claim 2, wherein at least a portion of Li and at least a portion of Fe occupy a Rietveld Refinement lithium lattice site on the argyrodite-type crystal structure, preferably a Rietveld Refinement 48 h lattice site on the argyrodite-type crystal structure.

4. An article for use in an electrochemical cell, comprising a compound of formula (IA) as defined in any of claims 1 to 3.

5. An article as in claim 4, wherein the article comprises a layer comprising a compound of formula (IA) and an electrode, wherein said layer is in direct contact with said electrode, wherein said electrode is preferably
- a lithium ion intercalation electrode
or
- an electrode comprising a lithium metal layer.

6. An article as in any one of claims 4 and 5, wherein the article comprises a layer comprising a compound of formula (IA),
wherein the layer comprising a compound of formula (IA) is selected from the group consisting of
- a protective layer
- a separator
- a solid electrolyte layer
and/or
the layer comprising a compound of formula (IA) is deposited on a layer selected from the group consisting of
- a protective layer
- a separator.

7. An electrochemical cell comprising an article or a compound as defined in any preceding claim.

8. An electrochemical cell as in claim 7, wherein said cell comprises a liquid electrolyte, an anode comprising lithium metal or silicon and/or a cathode comprising sulfur or a lithium-ion intercalation species.

9. A method for forming a composition, said method comprising:
heating a mixture of precursors comprising atoms of the elements Li, S, P, and Fe, and optionally X to a temperature ranging from 500°C to 1200°C for a duration ranging from 3 hours to 24 hours;
cooling the mixture; and
forming a composition comprising a compound of formula (IA) as defined in any of claims 1 to 3.

10. A method as in claim 9, wherein:
the mixture of precursors comprises at least two of Li₂S, MSₐ, P_{b}S_{c}, and S,
wherein:
M is Fe
a is 0-8;
b is 0-2;
c is 0-8, such that b+c is 1 or greater.

11. A method as in claim 9 or 10, wherein,
- prior to heating, the mixture is mixed by ball milling;
and/or
- heating the mixture occurs at a pressure of between 0.1 MPa and 0.3 MPa,
and/or
- the compound of formula (IA) is deposited on a layer, wherein depositing preferably comprises aerosol deposition or vacuum deposition.

12. A method as in any of claims 9 to 11, wherein the layer on which the compound of formula (IA) is deposited is selected from the group consisting of
- an electrode, preferably a lithium-intercalation electrode
- a lithium metal layer
- a protective layer
- a separator.

## Patentansprüche

1. Verbindung der Formel (IA) mit einer Kristallstruktur vom Argyrodit-Typ:
LiₓFe_{y}Q_{w}P_{z}SᵤXₜ (IA),
wobei:
X fehlt oder aus der Gruppe bestehend aus Cl, Br und
I ausgewählt ist,
x für 8-22 steht,
y für 0,1-3 steht,
w für 0 steht,
z für 0,1-3 steht,
u für 7-20 steht und
t für 0-8 steht.

2. Verbindung nach Anspruch 1, wobei es sich bei der Kristallstruktur vom Argyrodit-Typ um die Raumgruppe F43m handelt.

3. Verbindung nach Anspruch 2, wobei mindestens ein Teil von Li und mindestens ein Teil von Fe eine Rietveld-Verfeinerungs-Lithiumgitterstelle in der Kristallstruktur vom Argyrodit-Typ besetzen, vorzugsweise eine Rietveld-Verfeinerungs-48-h-Gitterstelle in der Kristallstruktur vom Argyrodit-Typ.

4. Artikel zur Verwendung in einer elektrochemischen Zelle, umfassend eine Verbindung der Formel (IA) gemäß einem der Ansprüche 1 bis 3.

5. Artikel nach Anspruch 4, wobei der Artikel eine Schicht, die eine Verbindung der Formel (IA) umfasst, und eine Elektrode umfasst, wobei die Schicht in direktem Kontakt mit der Elektrode steht, wobei es sich bei der Elektrode vorzugsweise um
- eine Lithiumioneninterkalationselektrode
oder
- eine Elektrode, die eine Lithiummetallschicht umfasst,
handelt.

6. Artikel nach einem der Ansprüche 4 und 5, wobei der Artikel eine Schicht, die eine Verbindung der Formel (IA) umfasst, umfasst,
wobei die Schicht, die eine Verbindung der Formel (IA) umfasst, aus der Gruppe bestehend aus
- einer Schutzschicht,
- einem Separator und
- einer Festelektrolytschicht
ausgewählt ist und/oder
die Schicht, die eine Verbindung der Formel (IA) umfasst, auf einer Schicht, die aus der Gruppe bestehend aus
- einer Schutzschicht und
- einem Separator
ausgewählt ist, abgeschieden ist.

7. Elektrochemische Zelle, umfassend einen Artikel oder eine Verbindung gemäß einem der vorhergehenden Ansprüche.

8. Elektrochemische Zelle nach Anspruch 7, wobei die Zelle einen Flüssigelektrolyt, eine Anode, die Lithiummetall oder Silicium umfasst, und/oder eine Kathode, die Schwefel oder eine Lithiumioneninterkalationsspezies umfasst, umfasst.

9. Verfahren zur Bildung einer Zusammensetzung, wobei das Verfahren Folgendes umfasst:
Erhitzen einer Mischung von Vorläufern, die Atome der Elemente Li, S, P und Fe und gegebenenfalls X umfasst, auf eine Temperatur im Bereich von 500 °C bis 1200 °C über eine Dauer im Bereich von 3 Stunden bis 24 Stunden;
Abkühlen der Mischung und
Bilden einer Zusammensetzung, die eine Verbindung der Formel (IA) gemäß einem der Ansprüche 1 bis 3 umfasst.

10. Verfahren nach Anspruch 9, wobei:
die Mischung von Vorläufern mindestens zwei von Li₂S, MSₐ, P_{b}S_{c} und S umfasst, wobei:
M für Fe steht;
a für 0-8 steht;
b für 0-2 steht;
c für 0-8 steht, derart, dass b + c gleich 1 oder mehr ist.

11. Verfahren nach Anspruch 9 oder 10, wobei
- die Mischung vor dem Erhitzen durch Kugelmahlen gemischt wird
und/oder
- das Erhitzen der Mischung bei einem Druck zwischen 0,1 MPa und 0,3 MPa erfolgt
und/oder
- die Verbindung der Formel (IA) auf einer Schicht abgeschieden wird, wobei das Abscheiden vorzugsweise Aerosolabscheidung oder Vakuumabscheidung umfasst.

12. Verfahren nach einem der Ansprüche 9 bis 11, wobei die Schicht, auf der die Verbindung der Formel (IA) abgeschieden wird, aus der Gruppe bestehend aus
- einer Elektrode, vorzugsweise einer Lithiuminterkalationselektrode,
- einer Lithiummetallschicht,
- einer Schutzschicht und
- einem Separator
ausgewählt wird.

## Revendications

1. Composé de formule (IA) possédant une structure cristalline de type argyrodite :
**LiₓFe_{y}Q_{w}P_{z}SᵤXₜ** **(IA)**
X étant absent ou étant choisi dans le groupe constitué par Cl, Br et I,
x étant 8 à 22,
y étant 0,1 à 3,
w étant 0,
z étant 0,1 à 3,
u étant 7 à 20, et
t étant 0 à 8.

2. Composé selon la revendication 1, la structure cristalline de type argyrodite étant le groupe d'espace F43m.

3. Composé selon la revendication 2, au moins une partie de Li et au moins une partie de Fe occupant un site de réseau de lithium d'affinement de Rietveld sur la structure cristalline de type argyrodite, préférablement un site de réseau 48 h d'affinement de Rietveld sur la structure cristalline de type argyrodite.

4. Article pour une utilisation dans une cellule électrochimique, comprenant un composé de formule (IA) tel que défini dans l'une quelconque des revendications 1 à 3.

5. Article selon la revendication 4, l'article comprenant une couche comprenant un composé de formule (IA) et une électrode, ladite couche étant en contact direct avec ladite électrode, ladite électrode étant préférablement
- une électrode d'intercalation à ion lithium
ou
- une électrode comprenant une couche de lithium métallique.

6. Article selon l'une quelconque des revendications 4 et 5, l'article comprenant une couche comprenant un composé de formule (IA),
la couche comprenant un composé de formule (IA) étant choisie dans le groupe constitué par
- une couche protectrice
- un séparateur
- une couche d'électrolyte solide
et/ou
la couche comprenant un composé de formule (IA) étant déposée sur une couche choisie dans le groupe constitué par
- une couche protectrice
- un séparateur.

7. Cellule électrochimique comprenant un article ou un composé tel que défini dans une quelconque revendication précédente.

8. Cellule électrochimique selon la revendication 7, ladite cellule comprenant un électrolyte liquide, une anode comprenant du lithium métallique ou du silicium et/ou une cathode comprenant du soufre ou une espèce d'intercalation à ion lithium.

9. Procédé pour la formation d'une composition, ledit procédé comprenant :
le chauffage d'un mélange de précurseurs comprenant des atomes des éléments Li, S, P et Fe, et éventuellement X à une température dans la plage de 500 °C à 1 200 °C pendant une durée dans la plage de 3 heures à 24 heures ;
le refroidissement du mélange ; et
la formation d'une composition comprenant un composé de formule (IA) tel que défini dans l'une quelconque des revendications 1 à 3.

10. Procédé selon la revendication 9, le mélange de précurseurs comprenant au moins deux parmi Li₂S, MSₐ, P_{b}S_{c}, et S,
M étant Fe
a étant 0 à 8 ;
b étant 0 à 2 ;
c étant 0 à 8, de sorte que b + c est 1 ou plus.

11. Procédé selon la revendication 9 ou 10, dans lequel,
- avant le chauffage, le mélange est mélangé par un broyage à billes ;
et/ou
- le chauffage du mélange a lieu à une pression comprise entre 0,1 MPa et 0,3 MPa,
et/ou
- le composé de formule (IA) est déposé sur une couche, le dépôt comprenant préférablement un dépôt par aérosol ou un dépôt sous vide.

12. Procédé selon l'une quelconque des revendications 9 à 11, la couche sur laquelle le composé de formule (IA) est déposé étant choisie dans le groupe constitué par
- une électrode, préférablement une électrode d'intercalation au lithium
- une couche de lithium métallique
- une couche protectrice
- un séparateur.
